# EUROPÄISCHE PATENTSCHRIFT

(11) **EP 1 715 232 B1**
(45) Veröffentlichungstag und Bekanntmachung des Hinweises auf die Patenterteilung: **26.03.2008**
(21) Anmeldenummer: 06405014.9
(22) Anmeldetag: 13.01.2006
(51) Int. Cl.: F16K 31/50, F16K 31/60, F16K 1/50

(54) **Ventil mit einem in ein Ventilgehäuse einzusetzenden Oberteil**
Valve with an upper section which can be inserted into a valve housing
Valve avec une partie supérieure à utiliser dans un logement de soupape

(30) Priorität: 20.04.2005 EP 05405303
(43) Veröffentlichungstag der Anmeldung: 25.10.2006
(73) Patentinhaber: JRG Gunzenhauser AG, 4450 Sissach (CH)
(72) Erfinder: Bürli, Kurt, 4463 Buus (SE)
(74) Vertreter: Ullrich, Gerhard

(56) Entgegenhaltungen:
- DE-A1- 10 225 101
- DE-A1- 19 840 128
- DE-C- 739 519
- DE-C1- 19 705 982
- US-A- 3 409 271
- US-A- 4 063 707

## Beschreibung

### Anwendungsgebiet der Erfindung

Die Erfindung betrifft ein Ventil mit einem Oberteil zum Einsetzen in ein Ventilgehäuse, welches zum Einbau in Wasser führende Leitungen bestimmt ist. Das Oberteil besteht im wesentlichen aus einem Kopfstück mit einer darin aufgenommenen, feststehenden Hülse, durch welche sich ein axial beweglicher Stössel erstreckt. An dem Ende des Stössels, welches im eingebauten Zustand in das Ventilgehäuse hineinragt, ist ein Ventilteller angeordnet, der eine Dichtung zur Absperrung des Ventilsitzes trägt. Zur Betätigung des Ventils ist ein mit der Hülse verbundener Handgriff vorgesehen, wobei die Hülse über ein Zwischenglied indirekt mit dem Stössel in Verbindung steht und diesen bei Drehung des Handgriffs axial verstellt. Beim Verstellen verharrt der Handgriff in unveränderlichem Abstand zum Kopfstück. Eine derartige Konstruktion besitzt einen "nicht-steigenden" Handgriff, im Gegensatz zum "steigenden" Typ, bei welchem ein verstellter Handgriff dem axial ein- bzw. ausfahrenden Stössel im veränderten Höhenniveau folgt. Die vorliegende Erfindung befasst sich mit einem Ventil der "nicht-steigenden" Gattung.

### Stand der Technik

In der AT 405 440 B wird eine Konstruktion des steigenden Typs von Ventil-Oberteilen offenbart. Das Kopfstück des Oberteils ist mittels eines Aussengewindes in einen Stutzen am Ventilgehäuse eingeschraubt. Durch das Kopfstück erstreckt sich die limitiert axial bewegliche Vontilspindel, an deren unterem Ende der Ventilteller und die Absperrdichtung befestigt sind, während auf das obere Spindelende ein Handgriff aufgesetzt ist. Zwischen Kopfstück und Ventilspindel liegen mehrere mit der Spindel geschleppte Dichtungselemente. Im oberen Bereich hat der Axialdurchgang des Kopfstücks ein Innengewinde, in dem die partiell mit einem komplementären Aussengewinde versehene Ventilspindel geführt wird. Die Dichtungselemente verhindern das Vordringen von Strömungsmedium in den Axialdurchgang, so dass auch das Spindelgewinde nicht mit dem Medium in Berührung kommt. Der Handgriff ist mit einem sich nach unten erstreckenden hohlzylindrischen Fortsatz ausgebildet, in dessen inneren Freiraum die obere Partie des Kopfstücks sukzessive mit Betätigung in Schliessrichtung einfährt, wobei der Handgriff in Relation zum Ventil "absteigt" und beim Öffnen "aufsteigen" würde. Der steigende Typ hat den grundsätzlichen Nachteil, dass bei bereits beengten Raumverhältnissen durch das beim Verstellen wandernde Handrad, der Zugriff für den Bediener weiter erschwert werden kann. Ferner liegt ― ausser in der maximalen Offenstellung ― nicht nur die untere freie Oberfläche der Ventilspindel im Medium, sondern auch das zuunterst sitzende Dichtungselement mit seiner gesamten Aussenfläche, so dass sich darauf Ablagerungen bilden, die beim Zurückfahren in Richtung Offenstellung in den Axialdurchgang eingebracht werden und die Dichtheit beeinträchtigen können.

Ein anderes Ventil-Oberteil des steigenden Typs ist aus der RU 2 100 678 bekannt. Durch das feststehende Kopfstück wird die axial verschiebbare Ventilspindel mit dem daran fixierten Ventilteller und der Absperrdichtung geführt. Am nach aussen ragenden Spindelende ist ein Handgriff in Form eines nach unten offenen U-Profils befestigt, dessen abgewinkelte Krallen in ein am Kopfstück vorhandenes grobes Gewinde eingreifen. Bei Drehung des im Aussengewinde geführten Handgriffs wird die Ventilspindel durch Mitnahme axial verstellt. Vorteilhaft hat man die Spindeldichtung weit oben im Kopfstück positioniert, wodurch diese nicht von dem Bereich der Spindeloberfläche durchfahren wird, welche dem Strömungsmedium ausgesetzt, somit verunreinigt und durch Korrosion aufgerauht ist. Bei dieser Konstruktion bedarf es keines Spindeigewindes, so dass der Nachteil eines vom Medium umspülten Spindelgewindes nicht auftritt. Abgesehen von dem nachteilig steigenden Handgriff ist bedenklich, dass in den nicht abgedichteten Totraum zwischen Spindel und Kopfstück Medium bis an die Spindeldichtung heran einströmt und dort eine verunreinigende Fäulnis entstehen kann.

Schliesslich offeriert die Firma R. Nussbaum AG, CH-4601-Olten / Schweiz, ein Schrägsitzventil PN 16, Artikel-Nr. 2200, mit einem Oberteil, das einen Handgriff des steigenden Typs aufweist. Durch das Kopfstück erstreckt sich eine zweiteilige, teleskopisch ineinander fahrende Ventilspindel, die sich in eine Spindelstange und eine Spindelhülse gliedert. An der Spindelstange sind oben ein erstes und unten ein zweites Aussengewinde vorhanden. Das Kopfstück hat an seinem oberen Ende ein Innengewinde, in dem das erste Aussengewinde der axial beweglichen Spindelstange läuft. Die Spindelstange durchragt das Innengewinde des Kopfstücks und tritt mit einem Mehrkant aus, auf den ein Handgriff aufgesetzt ist. Das zweite Aussengewinde der Spindelstange greift in ein gröberes Innengewinde in der Spindelhülse ein, wobei letztere axial beweglich, aber rotationsgesichert im Kopfstück geführt wird. Bei Betätigung des Handgriffs dreht sich die Spindelstange mit, verschiebt sich axial um einen bestimmten Weg und bewegt die in Rotationsrichtung feststehende Spindelhülse in axialer Richtung um einen linear proportional grösseren Weg, so dass der Ventilteller mit der davon getragenen Absperrdichtung sich vom Ventilsitz entfernt oder diesem annähert, um die weitere Öffnung oder das weitere Schliessen des Ventils zu bewirken. Am Austritt der Spindelhülse aus dem Kopfstück ist in einer Radialnut eine mit Lippen profilierte Spindelabdichtung angeordnet, welche die Spindelgewinde vor einem Kontakt mit dem Medium schützt. Die Absperrdichtung umfasst den Aussenrand des Ventiltellers zur Ober- und Unterseite, wodurch beim Nullhub die Oberseite der Absperrdichtung dichtend an der unteren Ringschulter des Kopfstücks anliegt. Am oberen Ende des Kopfstücks ist eine Markierung angebracht, die mit fortschreitender Stellung in Richtung des Nullhubs ― d.h. hin zur maximalen Ventilöffnung ― vom ansonsten umfassenden Handgriffkragen zunehmend sichtbar wird. Neben dem unvorteilhaft steigenden Handgriff entsteht beim Nullhub zwischen Absperrdichtung und Kopfstück ein abgeschlossener Totraum als bedenkliche Quelle für Verunreinigungen bei Verwendung in einer Trinkwasserleitung.

Die DE 197 05 982 C1 hat ein Ventil-Oberteil mit einem Handgriff des nicht-steigenden Typs zum Gegenstand. Bei Verstellung derartiger Oberteile bewirkt die sich axial bewegende Ventilspindel keine Axialverschiebung des Handgriffs. Nicht-steigende Oberteile haben den Vorteil, dass sich bei deren Betätigung infolge des nur drehenden Handgriffs, die Raumverhältnisse nicht weiter verengen können und der Zugriff nicht zusätzlich eingeengt wird. Überdies erbringt der nicht-steigende Typ den optischen Vorteil einer konstant bleibenden, stellungsunabhängigen Bauhöhe, was das Ordnungsbild besonders beim Einbau mehrerer benachbarter Ventile mit solchen Oberteilen positiv beeinflusst. Zur Erzielung der nicht-steigenden Wirkungsweise ist im feststehenden hülsenförmigen Kopfstück eine drehbare, axial fixierte Hülse mit einem Innengewinde eingesetzt, innerhalb der ein axial verschiebbarer Stössel mit einer mehrkantigen Mantelfläche sitzt. Oben auf dem Stössel befindet sich ein damit drehfest verbundener Mitnehmerring, dessen Aussengewinde mit dem Innengewinde der Hülse in Eingriff steht, wobei die Hülse fest mit dem Handgriff verbunden ist. Am unteren Ende des Stössels sind der Ventilteller und die Absperrdichtung angeordnet. Im Bereich des unteren Austritts des Stössels aus dem Kopfstück ist ein Führungsring mit zur Mantelfläche des Stössels formschlüssiger Innenkontur fest eingesetzt. Über dem Führungsring sitzt im Kopfstück eine den Stössel radial umfassende Stösseldichtung, oberhalb der ein am unteren Hülsenende anliegender Haltering mit einer zur Mantelfläche des Stössels komplementären Innenkontur eingefügt ist. Zwischen Mitnehmerring und Übergang von der Hülse zum Handgriff gibt es eine Stellungsanzeige. Ungünstig sind der zwischen dem Führungsring und der Stösseldichtung verbleibende Totraum sowie das Durchfahren der Stösseldichtung beim Verstellen von einem Bereich der Mantelfläche des Stössels, welche Mediumsablagerungen und der Korrosion durch die Berührung mit dem Medium ausgesetzt ist.

In der DE 102 25 101 A1 ist ein Ventil-Oberteil mit quasi nicht-steigender Wirkungsweise dargestellt. In dem feststehenden hülsenförmigen Kopfstück ist ein Innengewinde vorgesehen, in dem ein etwa mittig entlang des Stössels liegender, relativ kurzer Aussengewindeabschnitt geführt wird. Am oberen Stösselende befindet sich ein Zahnrad, während am unteren Stösselende der Ventilteller und die Absperrdichtung angeordnet sind. Im Bereich des unteren Austritts des Stössels aus dem Kopfstück ist ein Dichtungspaket mit O-Ringen und diese umgebende Scheiben eingesetzt. Über das Zahnrad ist ein Handgriff mit einem sich axial erstreckenden Aufnahmeraum gesteckt, der eine zum Zahnrad komplementäre Innenprofilierung aufweist. Abhängig von der Drehrichtung des Handgriffs, der über das Zahnrad den Stössel mitnimmt, ergibt sich durch die ineinander greifenden Gewinde an Stössel und Kopfstück eine axiale Verschiebung des Stössels. Adäquat zur Stösselverschiebung wandert das Zahnrad entlang der Innenprofilierung axial im Aufnahmeraum des Handgriffs. Oberhalb des Zahnrads ist ein zum Stössel koaxialer Stift vorhanden, der beim Nullhub - d.h. bei maximaler Ventilöffnung - durch ein im Handgriff vorhandenes Durchgangsloch ragt und somit eine sicht- und ertastbare Stellungsanzeige bildet. Im Prinzip ist dieses Oberteil von steigendem Typ, da jedoch die Axialverschiebung des aus dem Kopfstück nach oben austretenden Stössels vom Handgriff verdeckt wird, der seine axiale Position beibehält, entsteht der Eindruck nicht-steigender Wirkungsweise. Ein wesentlicher Nachteil besteht auch hier darin, dass der untere Bereich der Mantelfläche des Stössels mit dem Medium in Berührung kommt, sich somit Ablagerungen und Korrosion ausbilden und diese verunreinigte sowie aufgerauhte Fläche beim Verstellen die Stösseldichtung verschleissend durchfährt.

### Aufgabe der Erfindung

Im Bestreben nach weiterer Vervollkommnung der bisher bekannten Ventile, die auf einem nicht-steigenden Handgriff beruhen, liegt der Erfindung die Aufgabe zugrunde, eine zuverlässige, langlebige Abdichtung des Ventils zu erreichen sowie eine dauerhafte Leichtgängigkeit der Betätigungselemertte zu schaffen. Insbesondere bei maximal geöffneter Stellung dürfen keine "toten" Hohlräume verbleiben, in denen sich hygienisch bedenklich Medium einlagern kann. Durch Konstruktion und Materialauswahl sind Verkalkung und Oberflächenkorrosion sowie deren negative Folgen erheblich zu verringern. Schliesslich soll die maximal geöffnete Stellung signalisiert werden. Darüber hinaus muss sich das Ventil in verschiedenen Dimensionen zu effizienten Kosten in Serie fertigen lassen.

### Übersicht über die Erfindung

Das für den Einbau in Wasserleitungen konzipierte Ventil hat ein in einen Ventilkörper einzusetzendes Oberteil. Der Ventilkörper oder das Oberteil besitzt ein Kopfstück mit einem Axialdurchgang. Das Oberteil weist eine Aussenhülse auf, die direkt oder indirekt am Kopfstück drehbar gelagert und axial fixiert ist. Weiterhin hat das Oberteil einen zwischen einem Nullhub und einem Maximalhub beweglichen Stössel, der im Kopfstück und der Aussenhülse konzentrisch axial beweglich angeordnet ist und direkt im Axialdurchgang des Kopfstücks geführt ist. Der Stössel ist mit einer ersten Dichtung versehen, welche am auf einen Ventilsitz im Ventilkörper gerichteten Ende des Stössels angeordnet ist und zur Absperrung des Ventils dient. Den Stössel umgibt eine Hauptdichtung, welche im Kopfstück sitzt. Ferner gehört zum Oberteil zur Betätigung des Ventils ein drehbarer Handgriff. Die Aussenhülse ist einerseits direkt mit dem Handgriff und andererseits direkt mit einem Mitnahmeelement verbunden. Das Mitnahmeelement weist äusserlich eine Aussenprofilierung auf und ist axial fest am Stössel angeordnet. Die Aussenhülse besitzt einen in Richtung der ersten Dichtung offenen Schaft, der innerlich eine Innenprofilierung hat, welche mit der Aussenprofilierung des Mitnahmeelements radialen Formschluss hat. Das in der Aussenhülse geführte Mitnahmeelement ist axial verschiebbar. Direkt oder indirekt am Kopfstück befindet sich ein feststehendes Vorschubgewinde. Das Mitnahmeelement hat ein Gewinde, welches mit dem Vorschubgewinde in Eingriff steht. Das Mitnahmeelement am Stössel ist zumindest soweit radial lose angeordnet, dass bei Betätigung des Handgriffs ab einem definierten Mindestreibwiderstand zwischen der ersten Dichtung und dem Ventilsitz der Stössel radial blockiert ist, sodass der Stössel nicht mehr mit dem Mitnahmeelement mitdreht.

Nachfolgend werden spezielle Ausführungsformen der Erfindung definiert: Das Mitnahmeelement ist von hülsenförmiger Gestalt mit einem in Richtung der ersten Dichtung offenen Schaft und besitzt andererseits Befestigungsmittel zur Verbindung mit dem Stössel. Das Gewinde am Mitnahmeelement ist innerlich als Innengewinde gestaltet und das feststehende Vorschubgewinde befindet sich direkt am Kopfstück. Alternativ ist das Gewinde am Mitnahmeelement äusserlich als Aussengewinde gestaltet und das feststehende Vorschubgewinde ist ein Innengewinde, welches sich direkt am Kopfstück oder an einer in das Kopfstück eingesetzten Zwischenhülse befindet. Die Hauptdichtung ist mit einem Innenabstand im Kopfstück mindestens soweit rückversetzt angeordnet, dass bei keiner Stellung des Stössels zwischen Null- und Maximalhub dem Strömungsmedium ausgesetzte Oberfläche des Stössels an die Hauptdichtung gelangt. In der zur ersten Dichtung gerichteten Mündung des Kopfstücks ist eine dritte Dichtung eingesetzt, die einen langgestreckten Mittelabschnitt des herausragenden Stössels umgibt und zwischen dem Kopfstück und dem Stössel eine radiale sowie axiale Abdichtung bewirkt. Die dritte Dichtung besitzt im unbelasteten Zustand einen über die das Kopfstück abschliessende Ebene hervortretenden Überstand, welcher sich beim Nullhub mit der weitestmöglich eingefahrenen Stellung des Stössels durch die angepresste Rückseite eines die erste Dichtung tragenden Ventiltellers in die Ebene verformt, so dass zwischen der Rückseite des Ventiltellers und der abschliessenden Ebene des Kopfstücks umschlossener Totraum vermieden wird.

Das Befestigungsmittel zur Verbindung des Mitnahmeelements mit dem Stössel umfasst einen sich an den Schaft anschliessenden Kragen mit einem darin zentrisch angeordneten Durchgangsloch. Im Durchgangsloch steckt ein vorzugsweise im Durchmesser verjüngter erster axialer Fortsatz des Stössels, an den sich ein zweiter axialer Fortsatz anschliesst, der axial auf dem Kragen fixiert ist, z.B. mittels eines am zweiten Fortsatz vorhandenen Aussengewindes oder einer Ringnut, worauf ein Sicherungselement in Gestalt einer zweiten Mutter oder eines Sicherungsrings fixiert ist. Das Befestigungsmittel zur Verbindung des Mitnahmeelements mit dem Stössel kann eine Rutschkupplung umfassen, z.B. mittels einer Tellerfeder realisiert, welche bei Überschreiten eines definierten Reibwiderstands zwischen der ersten Dichtung und dem Ventilsitz auskuppelt, so dass der Stössel radial blockiert verharrt.

Der Stössel schliesst am zum Handgriff weisenden Ende mit einem oberen Zapfen ab, der beim Nullhub mit der weitestmöglich eingefahrenen Stellung des Stössels in einem Durchgangsloch in der Deckfläche der Aussenhülse oder dem Handgriff zu liegen kommt, vorzugsweise aus dem Durchgangsloch hervorsteht, und somit ein eingestellter Nullhub optisch und durch Abtasten wahrnehmbar ist. Der Handgriff ist mit der Aussenhülse einstückig verbunden oder an der Aussenhülse lösbar und drehfest angeordnet.

In einer Ausführungsform setzt sich der Handgriff aus einem ersten halbschalenartigen Griffteil und einem zweiten halbschalenartigen Griffteil zusammen. Zur Befestigung des zweiteiligen Handgriffs an der Aussenhülse sind zunächst an der Aussenhülse eine Aussenprofilierung, die sich am Ende des Schafts befindet, welcher an die Deckfläche angrenzt, sowie eine unterhalb der Aussenprofilierung vorhandene Radialnut vorgesehen. Das erste und zweite Griffteil hat je einen zentrischen Axialdurchgang, der jeweils von einer Innenprofilierung umrandet ist. Das erste Griffteil hat unten an der Innenprofilierung ein zirkuläres Rastorgan in Gestalt einer Ringwulst oder einzelner Rastnasen. Die Innenprofilierung des ersten Griffteils steht mit der Aussenprofilierung an der Aussenhülse in formschlüssigem Eingriff. Die Innenprofilierung des zweiten Griffteils lässt sich über die Aussenprofilierung der Aussenhülse schieben, um das zweite Griffteil auf das Niveau der Radialnut zu bringen. Zwischen beiden Griffteilen ist in die Radialnut ein zweiter Sicherungsring eingefügt, der an seinem Aussenumfang einen Überhang aufweist, welchen das Rastorgan zur axialen Sicherung des Handgriffs auf der Aussenhülse unterfasst.

Die Innenprofilierung an der Aussenhülse sowie die Aussenprofilierung am Mitnahmeelement sind Längsverzahnungen. Die Längsverzahnung an der Aussenhülse werden z.B. von sternförmig, radial, zentrisch orientierten Rippen gebildet. Die Aussenhülse besitzt zusätzlich eine Aussenprofilierung, sofern der Handgriff und die Aussenhülse separate Teile sind.

Die Hauptdichtung besteht aus einem im Paket aneinander angeordneten Bauteilen, nämlich einer fünften Dichtung, einer zweiten Scheibe und einer sechsten Dichtung. Hierbei sitzt die fünfte Dichtung auf einer Ringschulter eines das Kopfstück konzentrisch durchragenden Innenstutzens auf, durch den sich ein Axialdurchgang erstreckt. Gegen die sechste Dichtung ist ein erster Sicherungsring in eine innere Radialnut im Innenstutzen eingesetzt ist. Zwischen der sechsten Dichtung und dem ersten Sicherungsring kann eine dritte Scheibe angeordnet sein.

Alternativ sitzt die fünfte Dichtung auf einer im Kopfstück liegenden Ringschulter auf. Gegen die sechste Dichtung bildet die in das Kopfstück eingesetzte Zwischenhülse einen direkten oder mit Zwischenfügung eines ersten Sicherungsrings indirekten Niederhalter. Von der Zwischenhülse stützt sich ein Bund auf einer inneren Ringschulter im Kopfstück ab bzw. der erste Sicherungsring ist auf der inneren Ringschulter aufgelegt.

Der Aussenstutzen des Kopfstücks setzt sich aus einem oberen Stutzen, einem daran anschliessenden, im Aussendurchmesser vergrösserten Flansch und einem an letzteren ansetzenden Zwischenstutzen einteilig zusammen. Der obere Stutzen besitzt aussen eine Aussenprofilierung, z.B. einen Sechskant zum Ansetzen eines Schraubenschlüssels. Der Flansch ist im montierten Zustand zum Aufsetzen auf den Ventilkörper bestimmt. Der Zwischenstutzen hat ein Aussengewinde, das dem Einschrauben des Oberteils in den Ventilkörper dient

Der Innenstutzen besitzt als Vorschubgewinde das Aussengewinde und ist vom Aussenstutzen mit einem dazwischen liegenden radialen, sacklochförmigen Freiraum umfasst, der dem anteiligen Schaft des Mitnahmeelements Platz bietet. Zur axialen Fixierung und drehbaren Lagerung der Aussenhülse am Kopfstück stehen folgende drei Alternativen zur Verfügung:
a) Es ist ein Haltering in Gestalt eines Gewinderings mit einer Unterkante vorgesehen, die auf einem im Aussendurchmesser verdickten Bund der Aussenhülse aufsitzt, wobei ein Aussengewinde des Halterings in ein Innengewinde am Kopfstück eingreift.
b) Ein Haltering hat eine Unterkante, die auf einem im Aussendurchmesser verdickten Bund der Aussenhülse aufsitzt, wobei Arretierelemente des Halterings in Konturen am Kopfstück eingreifen.
c) Am unteren Bereich der Aussenhülse befinden sich Arretierelemente, die in das Kopfstück eingreifen.

Vom unteren Bereich der Aussenhülse erstreckt sich ein zylindrischer Kranz von einzelnen elastischen Zungen, an denen zuunterst, nach aussen weisend die Arretierelemente in Gestalt von Keilkonturen angeordnet sind. Zum Eingriff der Arretierelemente am Kopfstück ist eine zum Freiraum hin offene Radialnut vorhanden. Der untere Bereich der Aussenhülse besitzt oberhalb der abgehenden Zungen einen Bund, oberhalb dessen eine nach aussen offene Ringnut zur Aufnahme eines achten Elements liegt, welches zur Hemmung der Aussenhülse gegen unbeabsichtigte Rotation, z.B. infolge von Vibration, dient. Im montierten Zustand ist der Bund zum Aufsetzen auf einer Ringschulter bestimmt, welche sich innerlich des oberen Stutzens befindet.

In einer anderen Ausführungsform befindet sich innerlich des unteren Bereichs der Aussenhülse ein zylindrischer Kranz von einzelnen elastischen Zungen, an denen zuunterst, nach innen weisend die Arretierelemente in Gestalt von Keilkonturen angeordnet sind. Zum Eingriff der Arretierelemente ist an der Zwischenhülse eine äussere Radialnut vorhanden. Die elastischen Zungen erstrecken sich von einem innerlich des Schafts radial verlaufenden Mittelsteg beabstandet zur Innenwandung des Schafts. Die Aussenhülse schliesst zuunterst mit einer Unterkante ab, die im montierten Zustand auf einer Auflageschulter aufsitzt, welche sich am oberen Stutzen des Kopfstücks befindet. Oberhalb der Auflageschulter liegt eine Radialnut zur Aufnahme eines achten Elements, das vom unteren Bereich der Aussenhülse umfasst wird und zur Hemmung der Aussenhülse gegen unbeabsichtigte Rotation, z.B. infolge von Vibration, dient.

Der obere Stutzen des Kopfstücks besitzt intern ein Innengewinde zur Verbindung mit einem an der Zwischenhülse vorhandenen Aussengewinde oder einem am Haltering vorgesehenen Aussengewinde. Alternativ ist zumindest ein radial durch Öffnungen im Bund der Aussenhülse eingebrachtes Arretierelement vorgesehen, das in die Zwischenhülse axial sichernd in eine Radialnut eingreift.

Der Stössel besteht vorzugsweise aus Chromstahl und ist zumindest über seinen langgestreckten Mittelabschnitt von rundem Querschnitt.

Vom Mittelabschnitt über eine erste Radialschulter zum ersten Fortsatz, von hier über eine optionale zweite Radialschulter zum zweiten Fortsatz und von hier über eine dritte Radialschulter zum oberen Zapfen sind die Aussendurchmesser jeweils vermindert. Der Stössel kann am zur ersten Dichtung gerichteten Ende, im Anschluss an den Mittelabschnitt, einen Hinterschnitt haben, dem ein Zwischensegment - von z.B. nicht-rotationssymmetrischem Querschnitt mit Abflachungen - für die Aufnahme des Ventiltellers folgt, an das sich ein unterer Zapfen zur Aufnahme des Ventiltellers anschliesst. Der untere Zapfen am Stössel hat vorzugsweise ein Aussengewinde zum Aufschrauben einer ersten Mutter, wodurch der die erste Dichtung tragende Ventilteller gesichert ist.

Der Ventilteller hat einen zum Querschnitt des Zwischensegments des Stössels komplementären Axialdurchgang, wobei der Stössel und das Zwischensegment z.B. jeweils mit Abflachungen versehen sein können. An der der ersten Dichtung zugewandten Seite könnte der Ventilteller eine Profilierung und eine den Axialdurchgang vergrössernde Erweiterung aufweisen, die von einem erhabenen Rand begrenzt ist. Vorteilhaft besitzt auch die erste Dichtung eine dem Ventilteller zugewandte Profilierung, die mit der Profilierung am Ventilteller zusammenwirkt. Die optionale Erweiterung ist zur Aufnahme einer zweiten Dichtung bestimmt, die den Stössel umgibt.

### Kurzbeschreibung der beigefügten Zeichnungen

Es zeigen:
- Figur 1A: ein erfindungsgemässes Oberteil *erster Variante,* mit "Nullhub" in der Stellung "völlig offen", in Perspektivansicht;
- Figur 1B: das Oberteil gemäss Figur 1A, in gewechselter Perspektivansicht;
- Figur 1C: das Oberteil gemäss Figur 1A, im vertikalen, perspektivischen Teilschnitt;
- Figur 1D: das Oberteil gemäss Figur 1A, im Vertikalschnitt;
- Figur 2: das Oberteil gemäss Figur 1A, mit "Teilhub" in der Stellung "teilweise offen", im Vertikalschnitt;

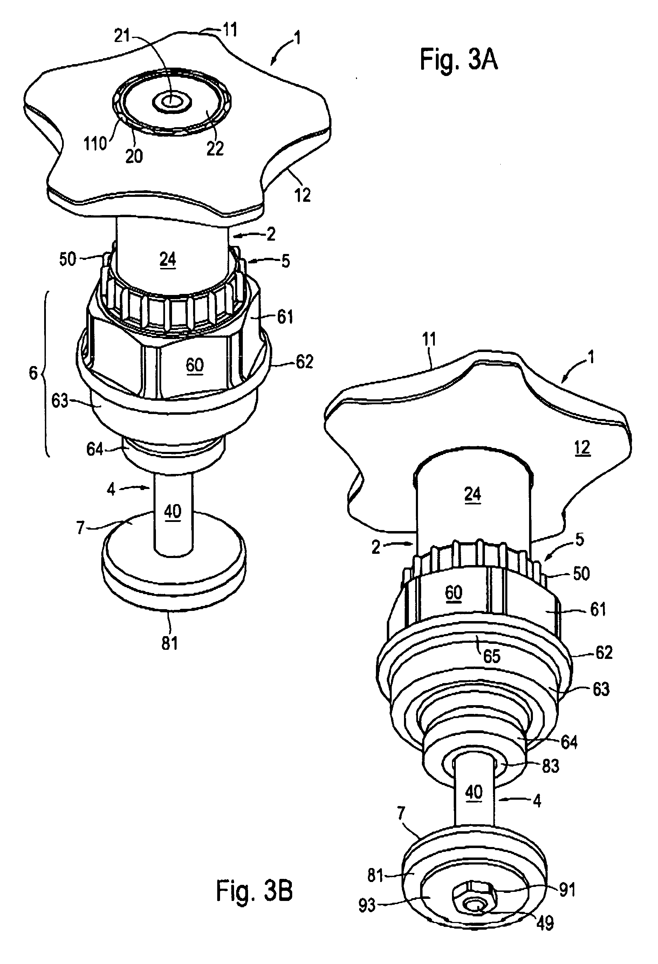

- Figur 3A: das Oberteil gemäss Figur 1A, mit "Maximalhub" in der Stellung "völlig geschlossen", in Perspektivansicht;
- Figur 3B: das Oberteil gemäss Figur 3A, in gewechselter Perspektivansicht;

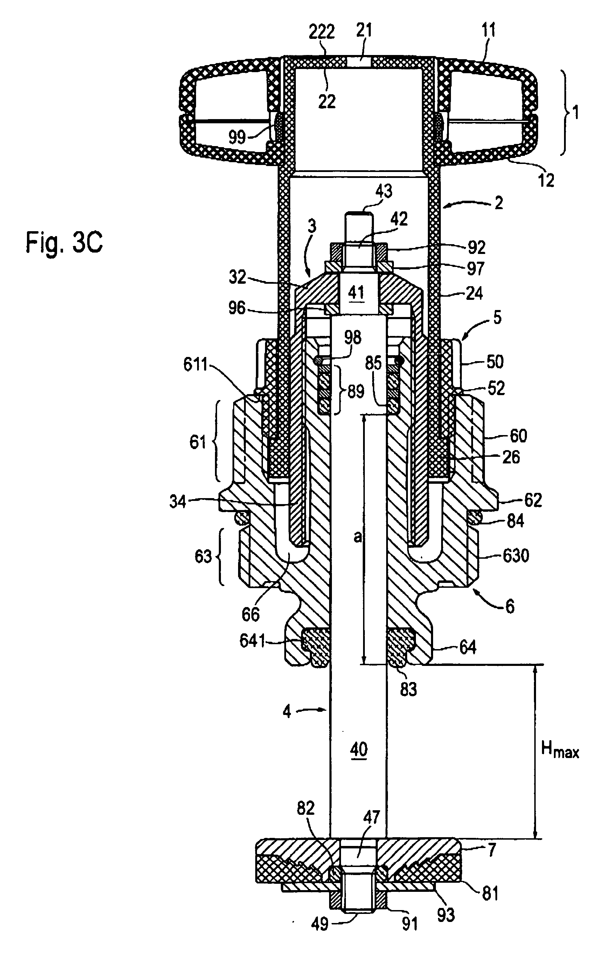

- Figur 3C: das Oberteil gemäss Figur 3A, im Vertikalschnitt;
- Figur 4: das Oberteil gemäss Figur 1A, im Vertikalschnitt als Prinzipdarstellung, mit der linken Seite in der Stellung "völlig offen" und der rechten Seite in der Stellung "völlig geschlossen";
- Figur 5A: das Oberteil gemäss Figur 1A, in perspektivischer Explosivdarstellung;
- Figur 5B: das Oberteil gemäss Figur 1A, im perspektivischen Vertikalschnitt als

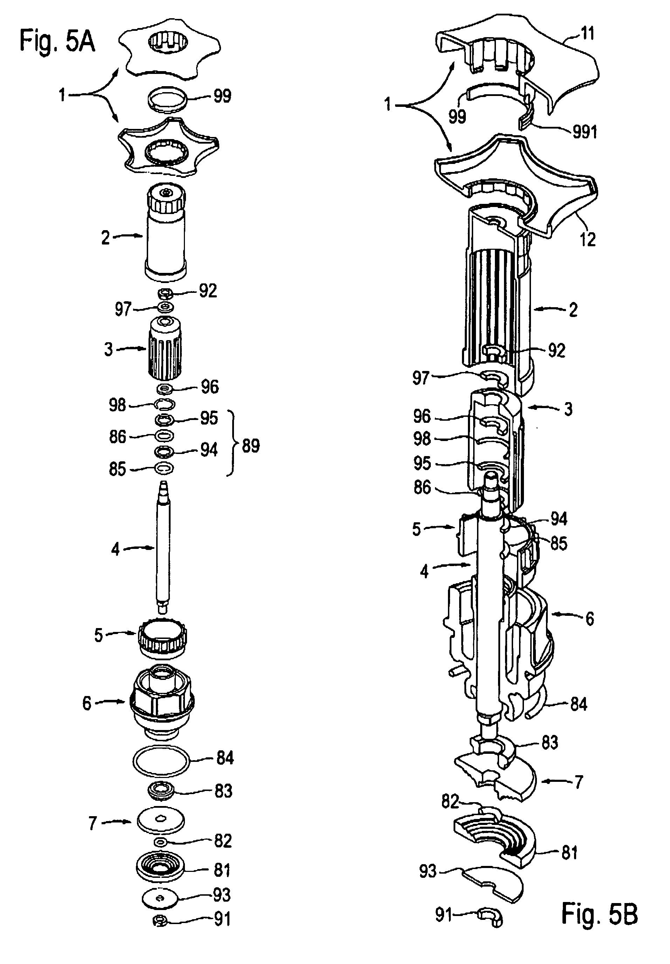

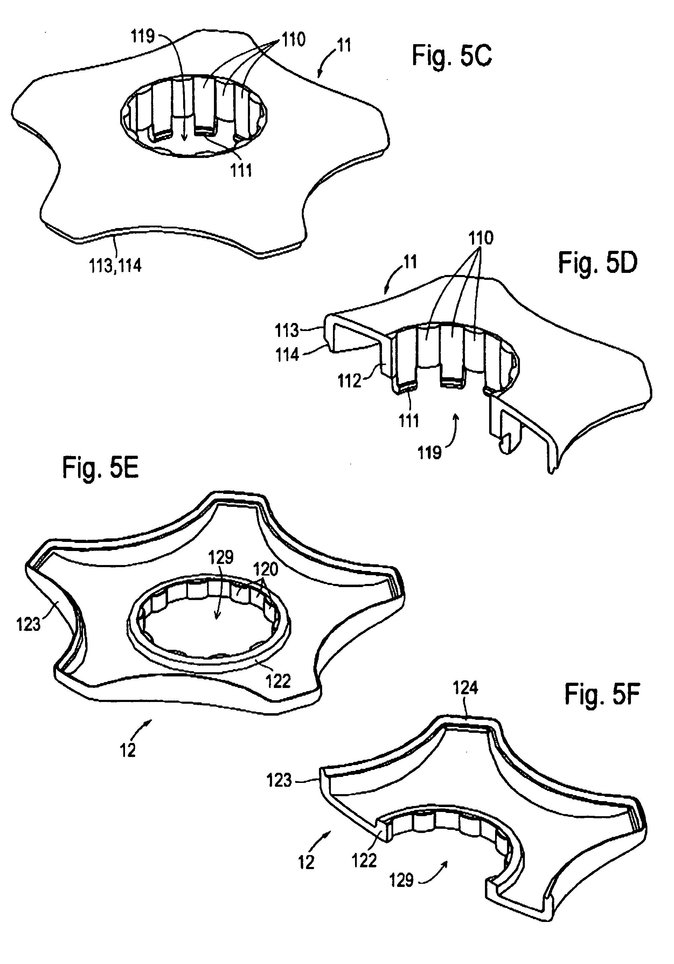

- Explosivdarstellung;: Figur 5C das obere Griffteil aus Figur 5A, in vergrösserter Perspektivdarstellung;
- Figur 5D: das obere Griffteil gemäss Figur 5C, im perspektivischen Teilschnitt;
- Figur 5E: das untere Griffteil aus Figur 5A, in vergrösserter Perspektivdarstellung;
- Figur 5F: das untere Griffteil gemäss Figur 5E, im perspektivischen Teilschnitt;

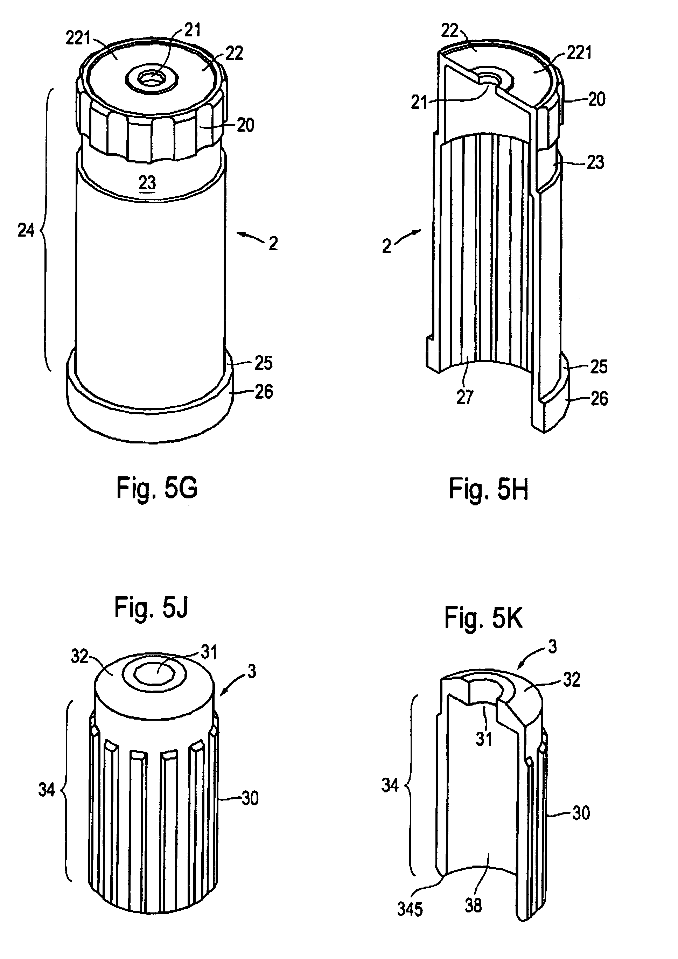

- Figur 5G: die Aussenhülse aus Figur 5A, in vergrösserter Perspektivdarstellung;
- Figur 5H: die Aussenhülse gemäss Figur 5G, im perspektivischen Teilschnitt;
- Figur 5J: die Innenhülse aus Figur 5A, in vergrösserter Perspektivdarstellung;
- Figur 5K: die Innenhülse gemäss Figur 5G, im perspektivischen Teilschnitt;

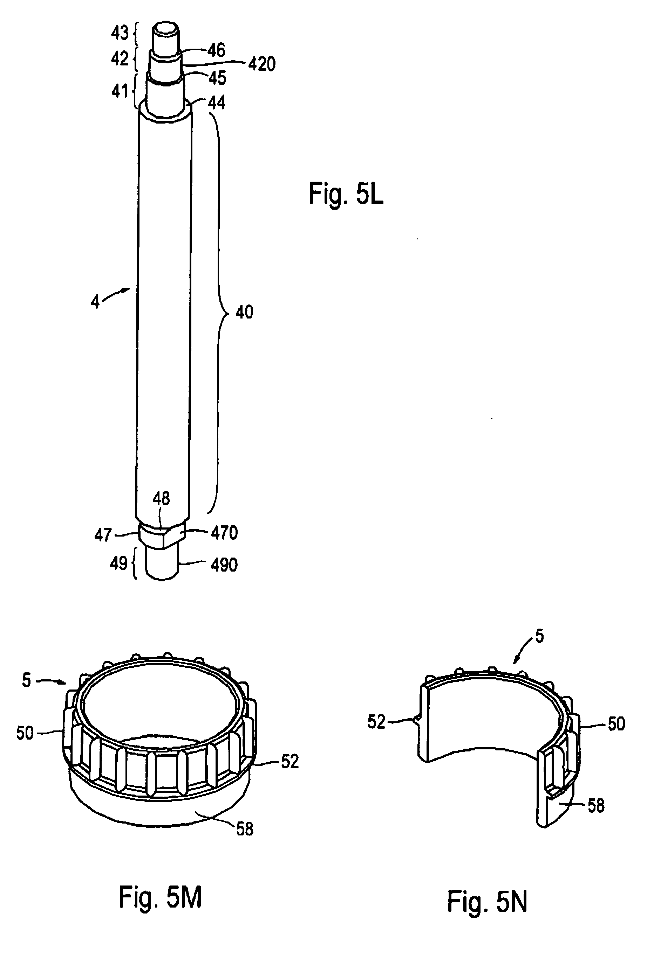

- Figur 5L: den Stössel aus Figur 5A, in vergrösserter Perspektivdarstellung;
- Figur 5M: den Haltering aus Figur 5A, in vergrösserter Perspektivdarstellung;
- Figur 5N: den Haltering gemäss Figur 5M, im perspektivischen Teilschnitt;
- Figur 50: das Kopfstück aus Figur 5A, in vergrösserter Perspektivdarstellung;

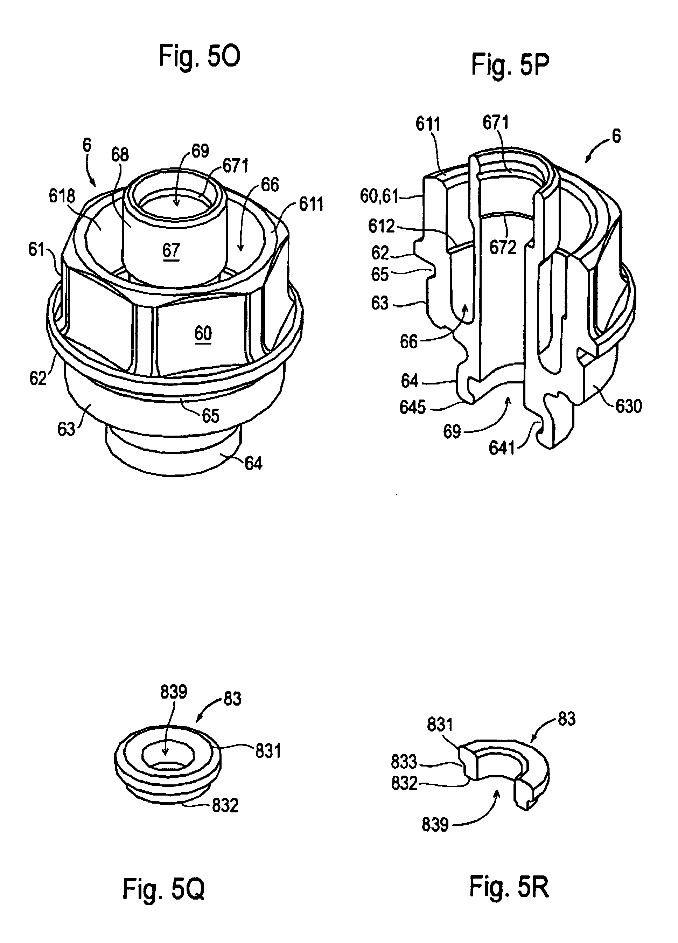

- Figur 5P: das Kopfstück *erster Variante* gemäss Figur 5O, im perspektivischen Teilschnitt;
- Figur 5Q: den dritten Dichtring aus Figur 5A, in vergrösserter Perspektivdarstellung;
- Figur 5R: den dritten Dichtring gemäss Figur 5Q, im perspektivischen Teilschnitt;

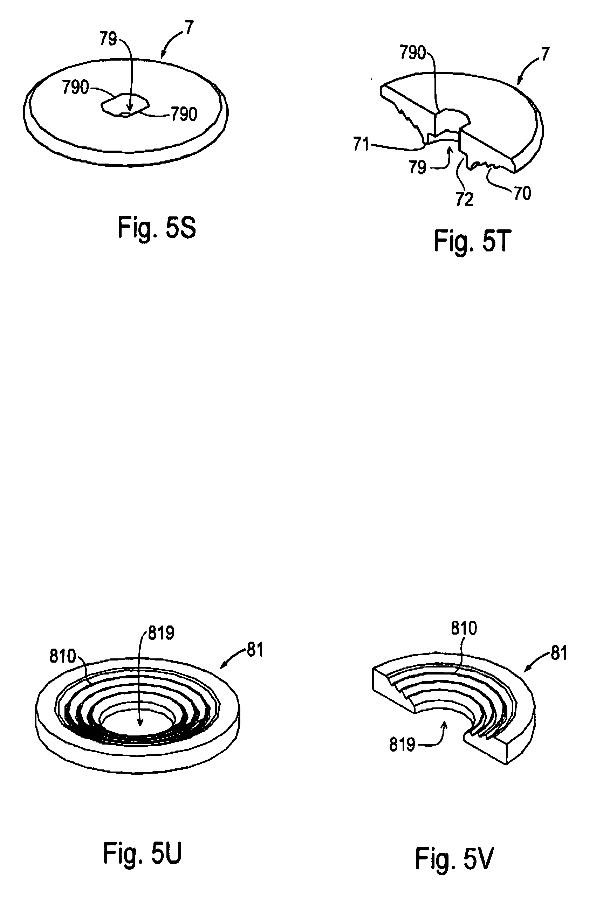

- Figur 5S: den Ventilteller aus Figur 5A, in vergrösserter Perspektivdarstellung;
- Figur 5T: den Ventilteller gemäss Figur 5S. im perspektivischen Teilschnitt;
- Figur 5U: den ersten Dichtring aus Figur 5A, in vergrösserter Perspektivdarstellung;
- Figur 5V: den ersten Dichtring gemäss Figur 5U, im perspektivischen Teilschnitt;

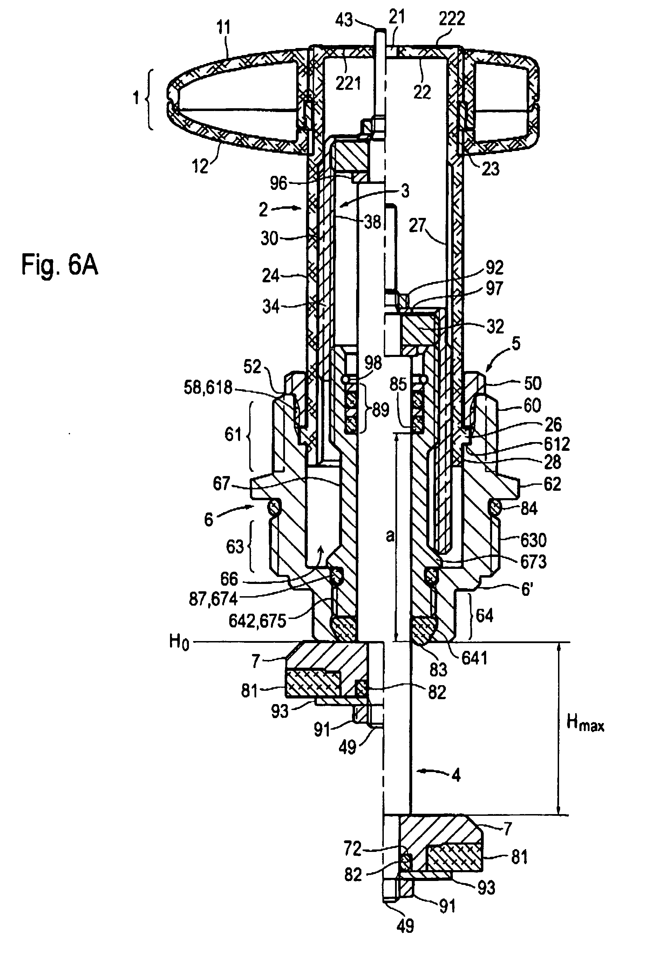

- Figur 6A: ein Oberteil *zweiter Variante;*

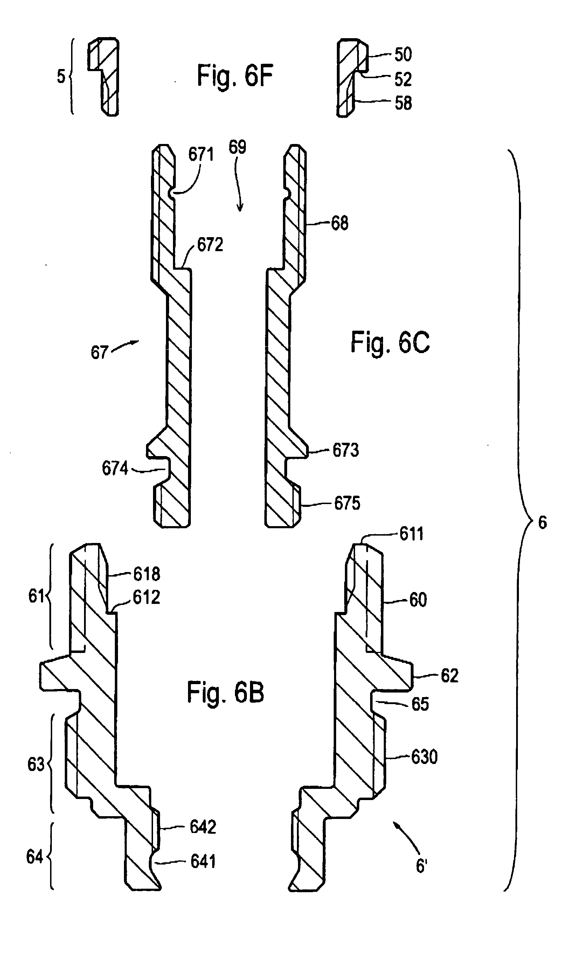

- Figur 6B: das Aussenstück des Kopfstücks aus Figur 6A, im vergrösserten Vertikalschnitt;
- Figur 6C: den Innenstutzen aus Figur 6A, im vergrösserten Vertikalschnitt;

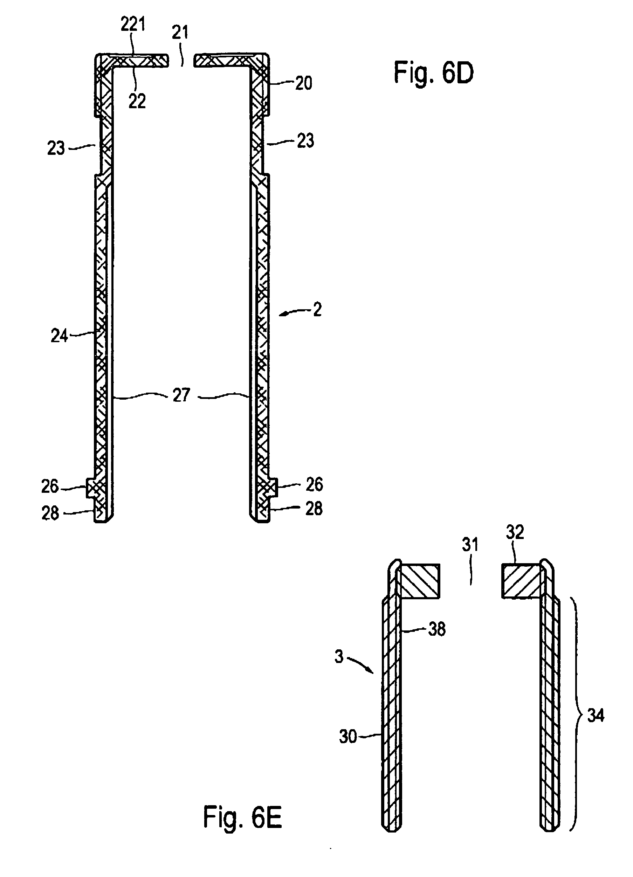

- Figur 6D: die Aussenhülse aus Figur 6A, im vergrösserten Vertikalschnitt;

- Figur 6E: die Innenhülse aus Figur 6A, im vergrösserten Vertikalschnitt;
- Figur 6F: den Haltering aus Figur 6A, im vergrösserten Vertikalschnitt;

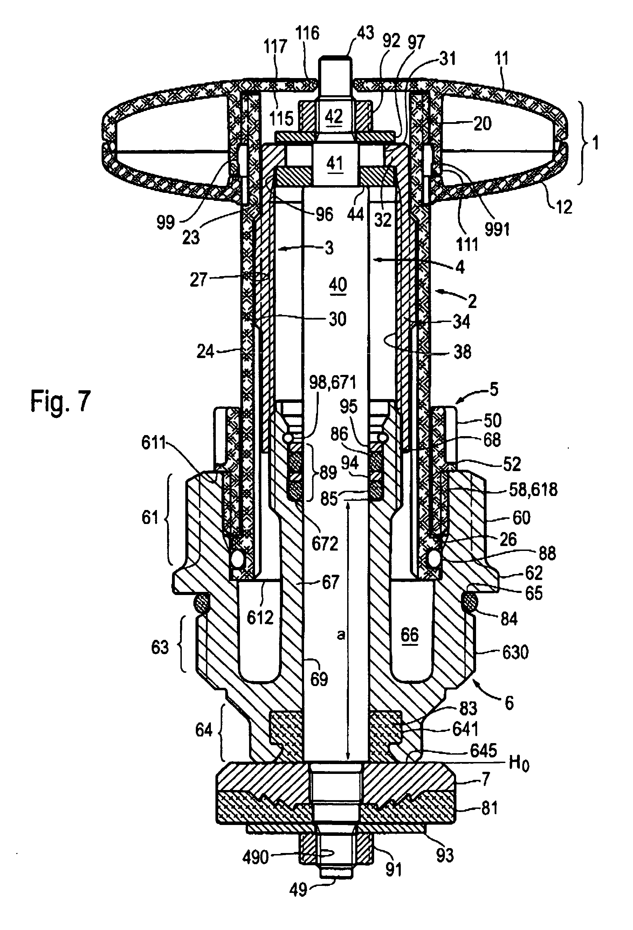

- Figur 7: ein Oberteil *dritter Variante;*

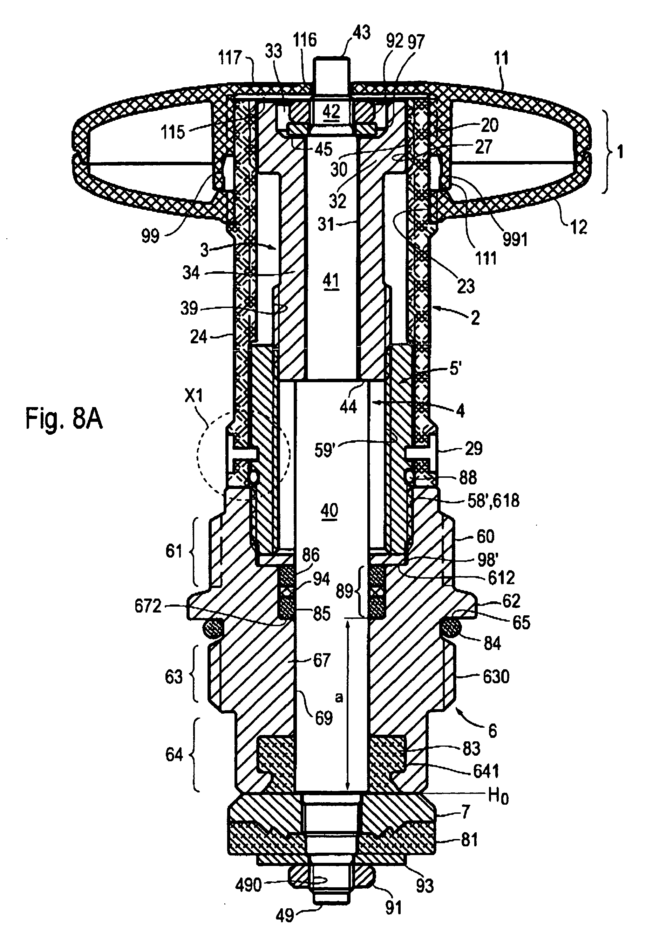

- Figur 8A: ein Oberteil *vierter Variante;*

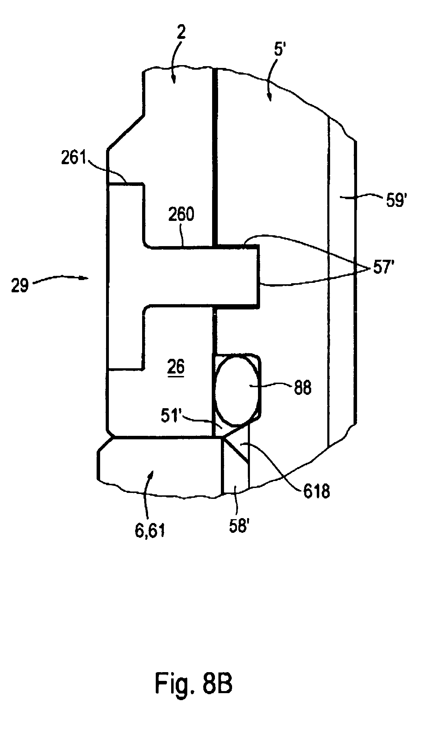

- Figur 8B: die Ausschnittsvergrösserung X1 aus Figur 8A;

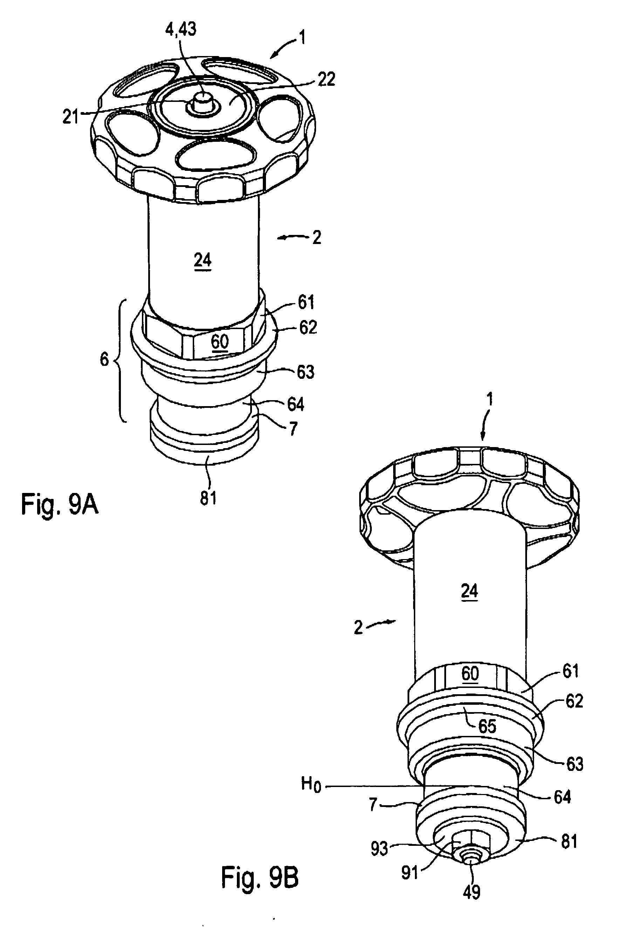

- Figur 9A: ein Oberteil *fünfter* Variante, mit "Nullhub" in der Stellung "völlig offen", in Perspektivansicht;
- Figur 9B: das Oberteil gemäss Figur 9A, in gewechselter Perspektivansicht;

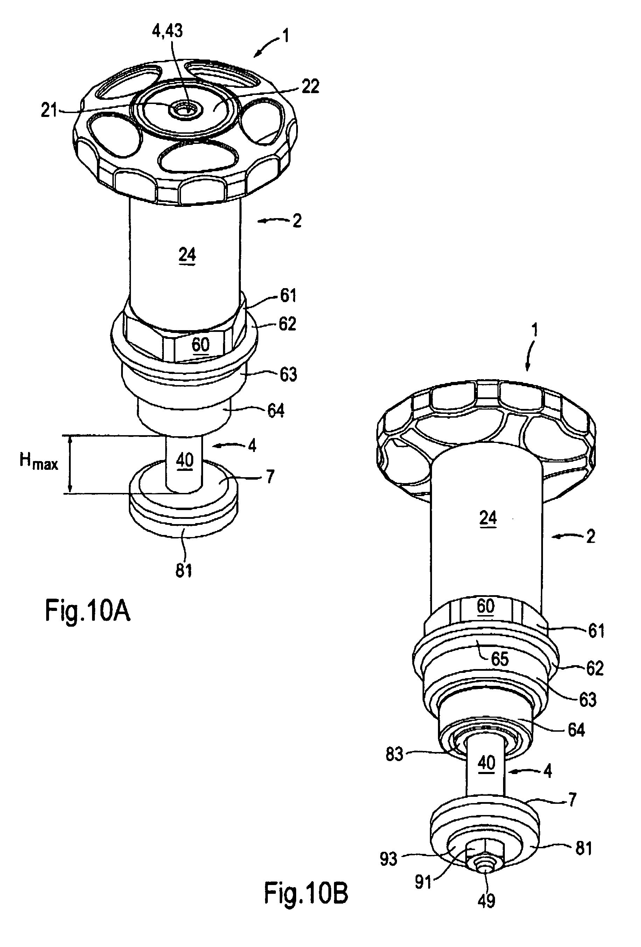

- Figur 10A: das Oberteil gemäss Figur 9A, mit "Maximalhub" in der Stellung "völlig geschlossen", in Perspektivansicht;
- Figur 10B: das Oberteil gemäss Figur 10A, in gewechselter Perspektivansicht;

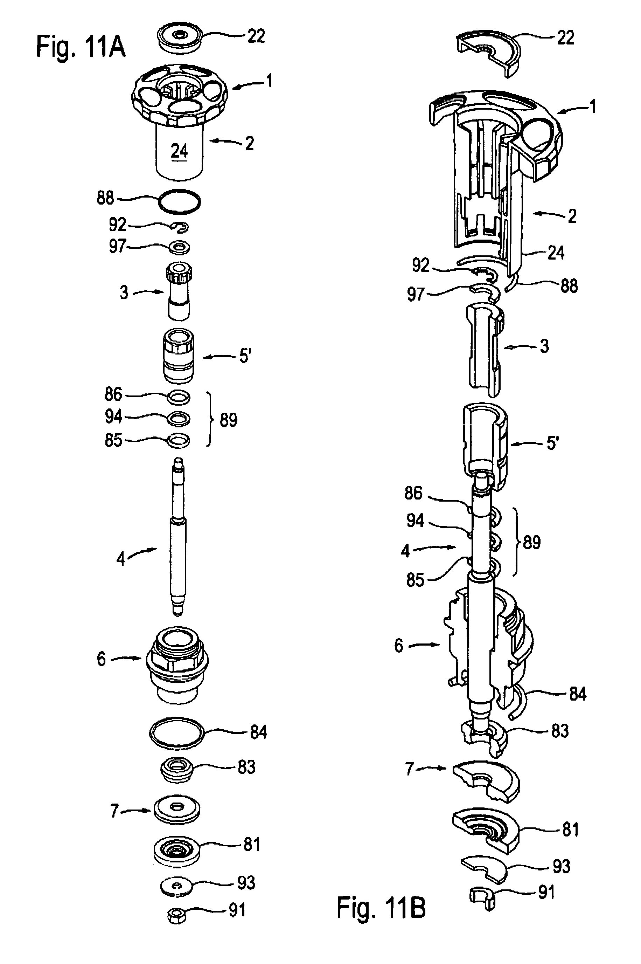

- Figur 11A: das Oberteil gemäss Figur 9A, in perspektivischer Explosivdarstellung;
- Figur 11 B: das Oberteil gemäss Figur 9A, im perspektivischen Vertikalschnitt als Explosivdarstellung;

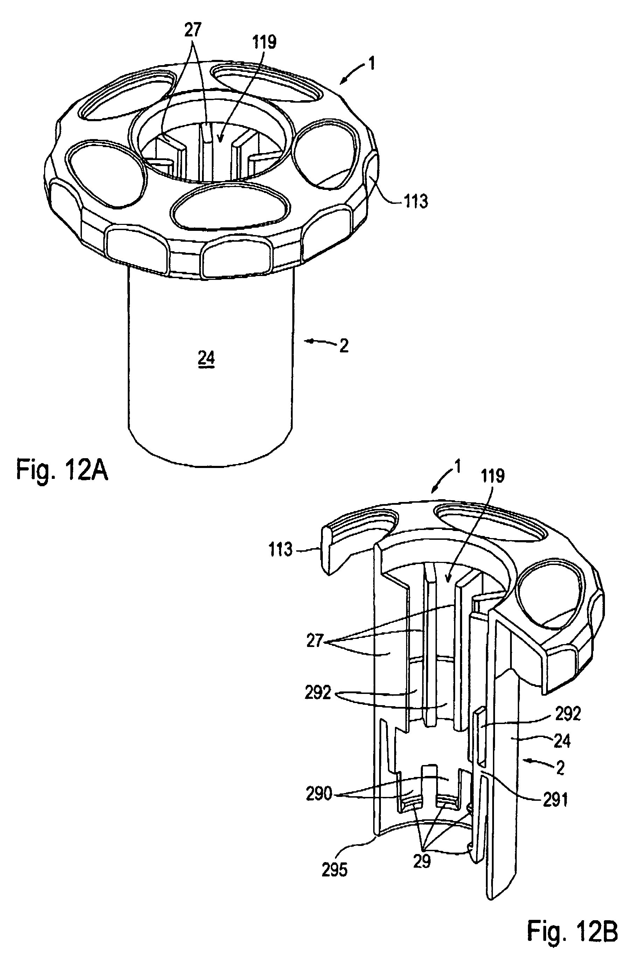

- Figur 12A: der Handgriff mit Aussenhülse aus Figur 11A, in vergrösserter Perspektivdarstellung;
- Figur 12B: der Handgriff mit Aussenhülse gemäss Figur 12A, im perspektivischen Teilschnitt;

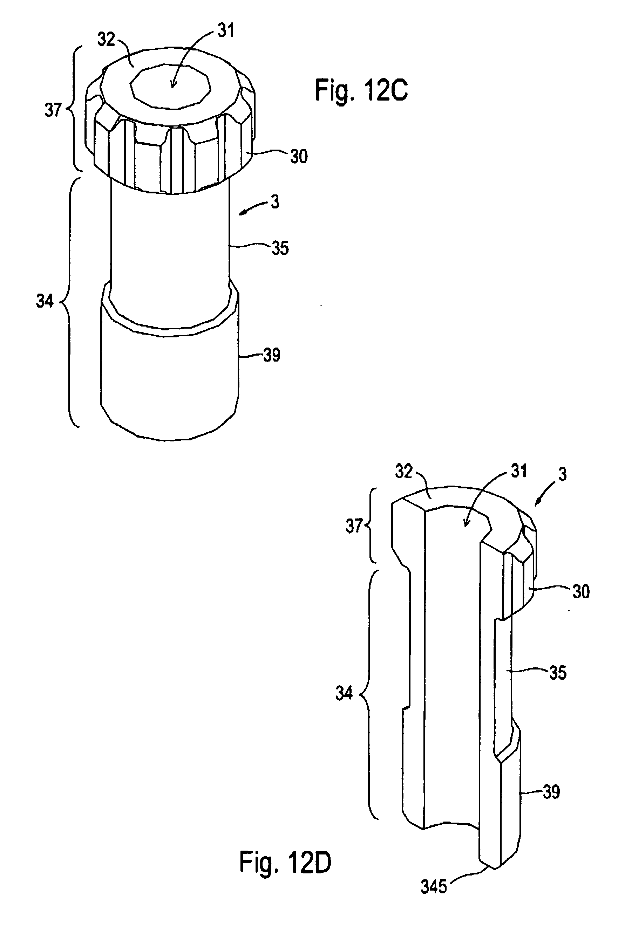

- Figur 12C: das Mitnahmeelement aus Figur 11A, in vergrösserter Perspektivdarstellung;
- Figur 12D: das Mitnahmeelement gemäss Figur 12C, im perspektivischem Teilschnitt;

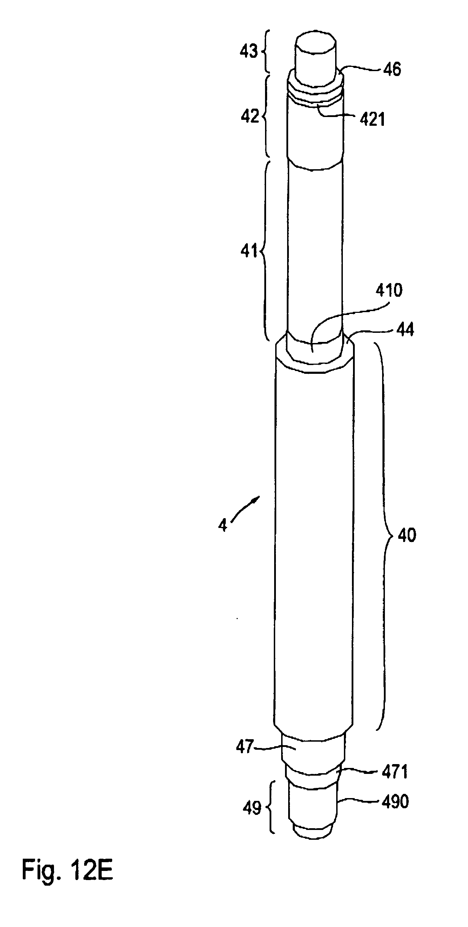

- Figur 12E: den Stössel aus Figur 11A, in vergrösserter Perspektivdarstellung;

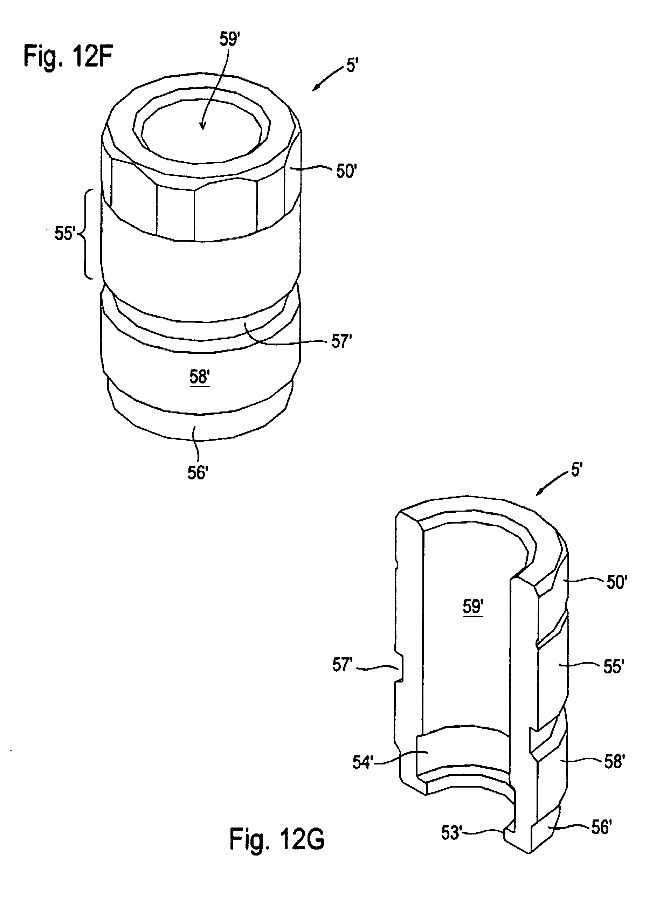

- Figur 12F: die Zwischenhülse aus Figur 11A, in vergrösserter Perspektivdarstellung;
- Figur 12G: die Zwischenhülse gemäss Figur 12F, im perspektivischem Teilschnitt;

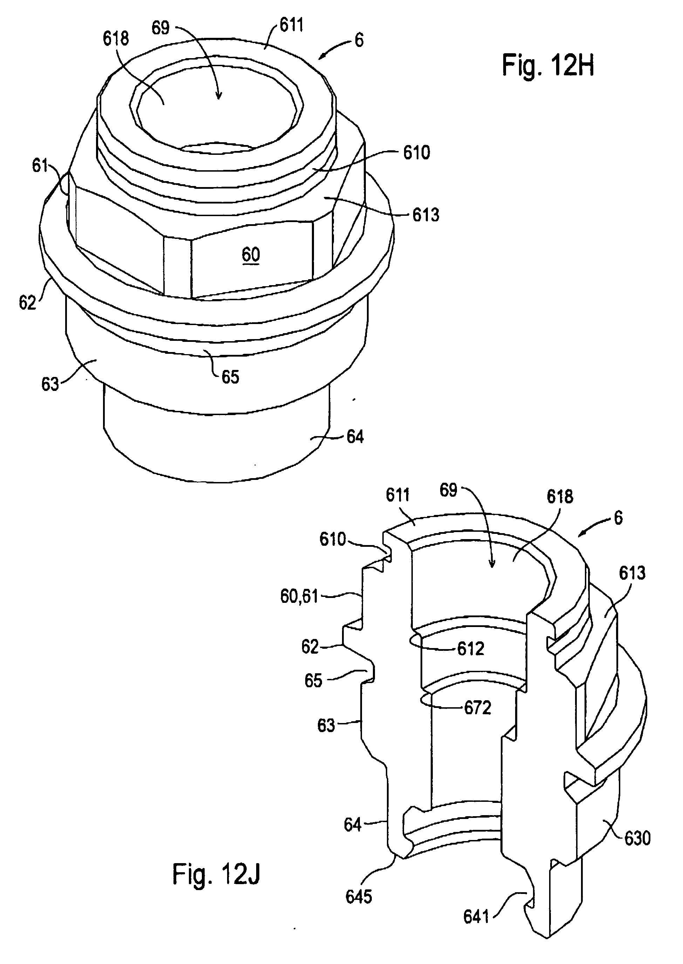

- Figur 12H: das Kopfstück aus Figur 11A, in vergrösserter Perspektivdarstellung;

- Figur 12J: das Kopfstück gemäss Figur 12H, im perspektivischem Teilschnitt;

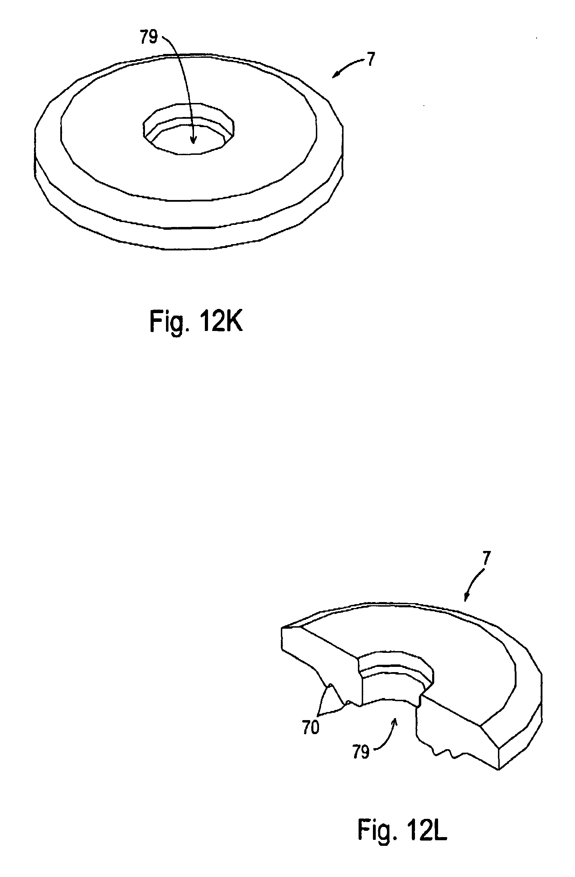

- Figur 12K: den Ventilteller aus Figur 11A, in vergrösserter Perspektivdarstellung;
- Figur 12L: den Ventilteller gemäss Figur 12K, im perspektivischen Teilschnitt;

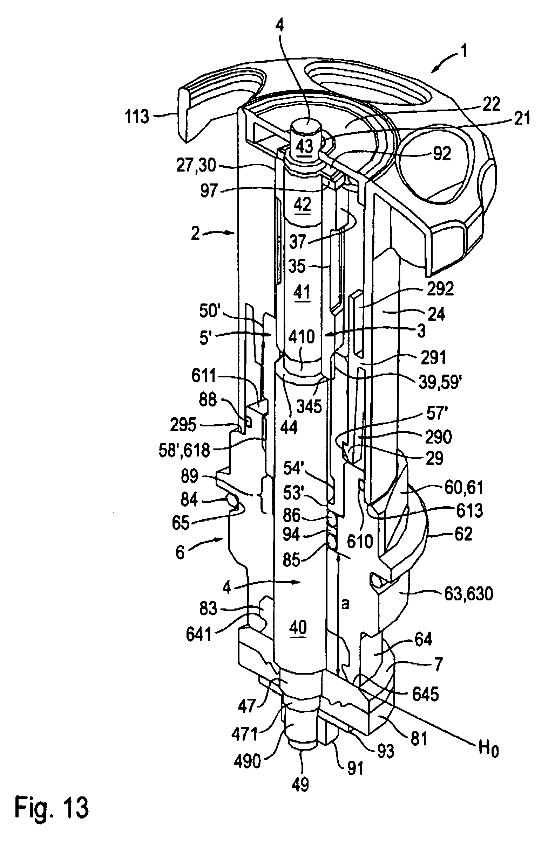

- Figur 13: das Oberteil gemäss Figur 9A, im vertikalen, perspektivischen Teilschnitt;

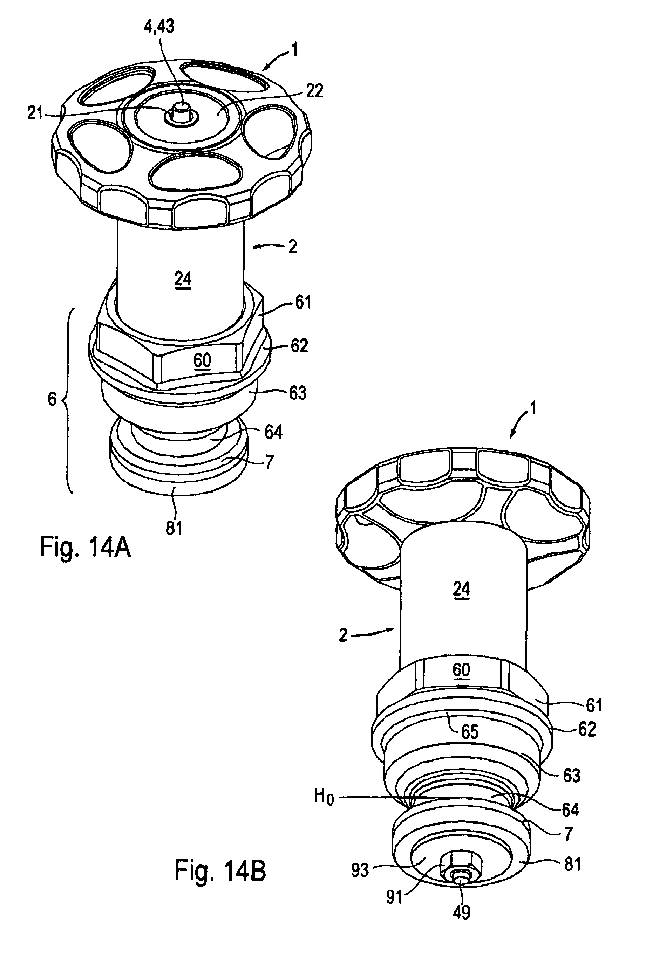

- Figur 14A: ein Oberteil *sechster* Variante, mit "Nullhub" in der Stellung "völlig offen", in Perspektivansicht;
- Figur 14B: das Oberteil gemäss Figur 14A, in gewechselter Perspektivansicht;

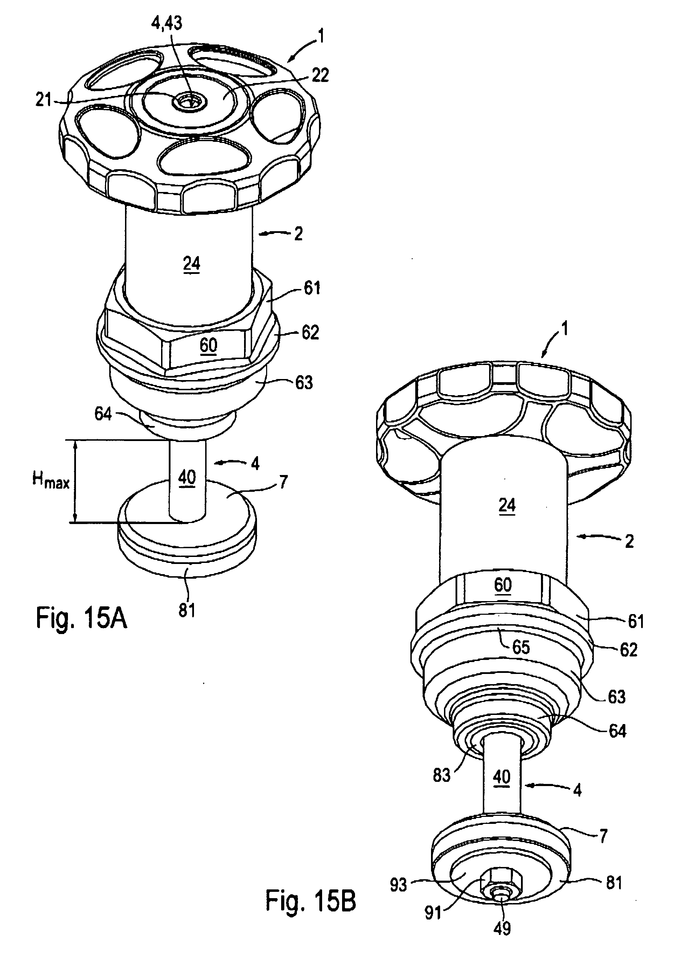

- Figur 15A: das Oberteil gemäss Figur 14A, mit "Maximalhub" in der Stellung "völlig geschlossen", in Perspektivansicht;
- Figur 15B: das Oberteil gemäss Figur 15A, in gewechselter Perspektivansicht;

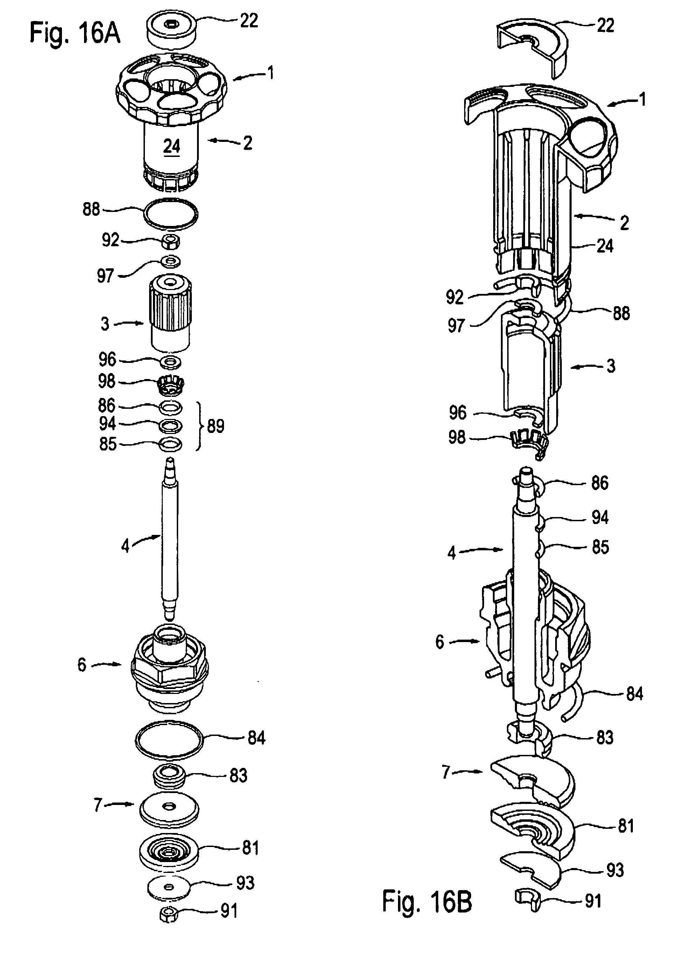

- Figur 16A: das Oberteil gemäss Figur 14A, in perspektivischer Explosivdarstellung;
- Figur 16B: das Oberteil gemäss Figur 14A, im perspektivischem Vertikalschnitt als Explosivdarstellung;

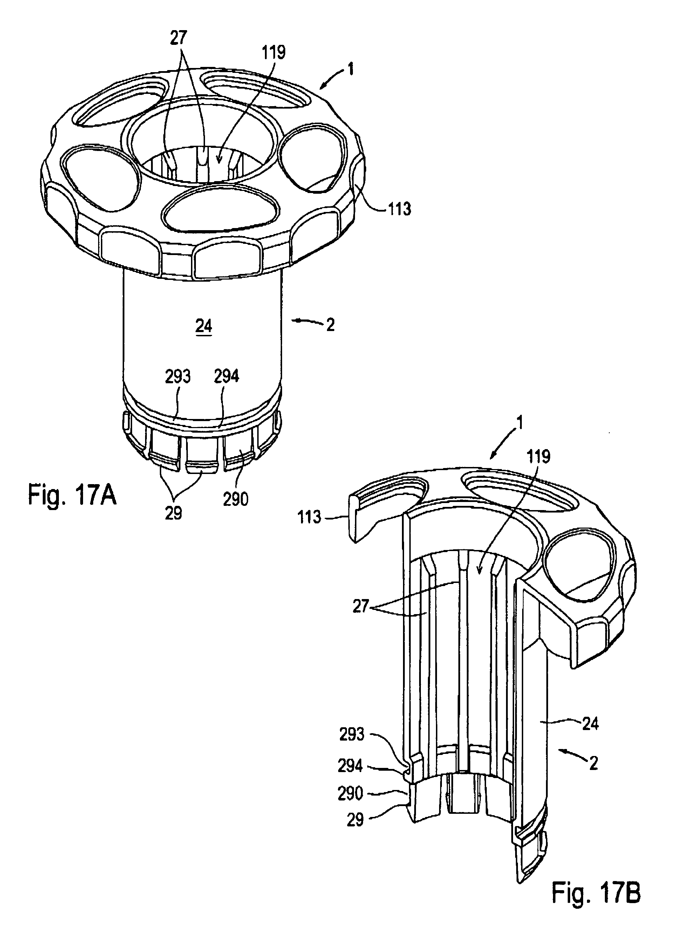

- Figur 17A: der Handgriff mit Aussenhülse aus Figur 16A, in vergrösserter Perspektivdarstellung;
- Figur 17B: der Handgriff mit Aussenhülse gemäss Figur 17A, im perspektivischem Teilschnitt;

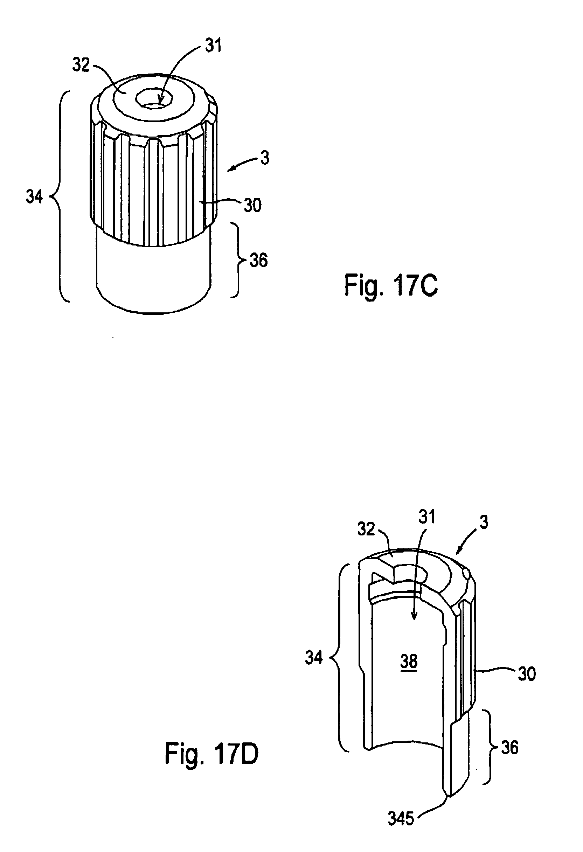

- Figur 17C: das Mitnahmeelement aus Figur 16A, in vergrösserter Perspektivdarstellung;
- Figur 17D: das Mitnahmeelement gemäss Figur 17C, im perspektivischem Teilschnitt;

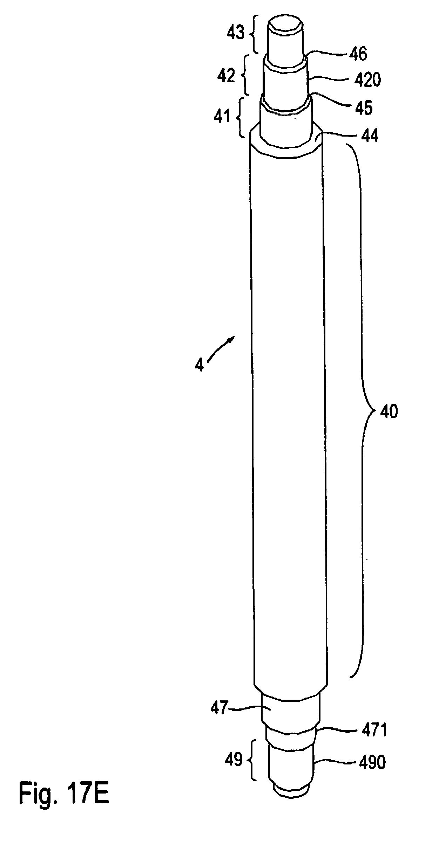

- Figur 17E: den Stössel aus Figur 16A, in vergrösserter Perspektivdarstellung;

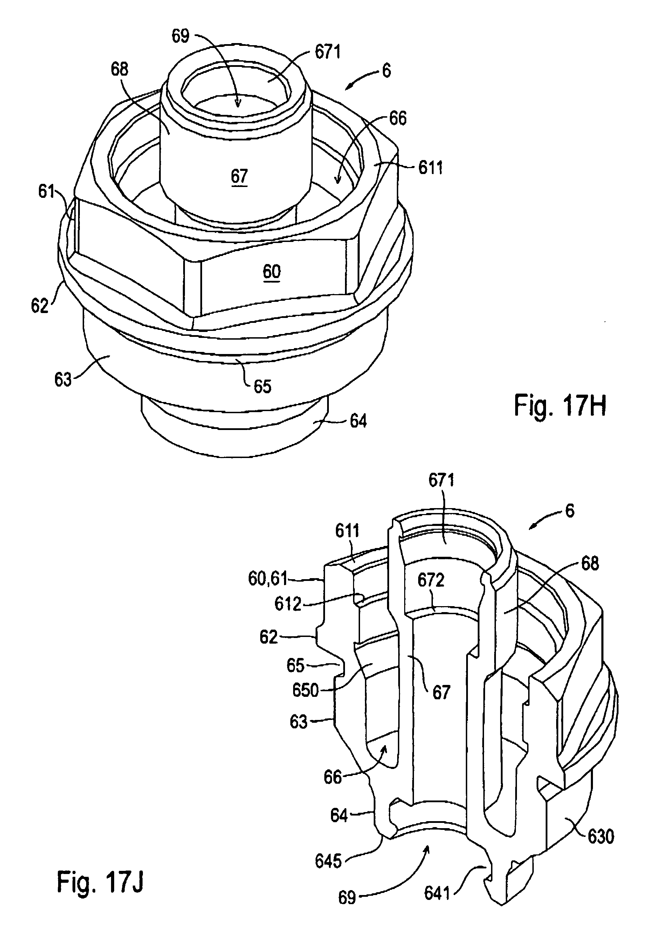

- Figur 17H: das Kopfstück aus Figur 16A, in vergrösserter Perspektivdarstellung;
- Figur 17J: das Kopfstück gemäss Figur 17H, im perspektivischem Teilschnitt; und

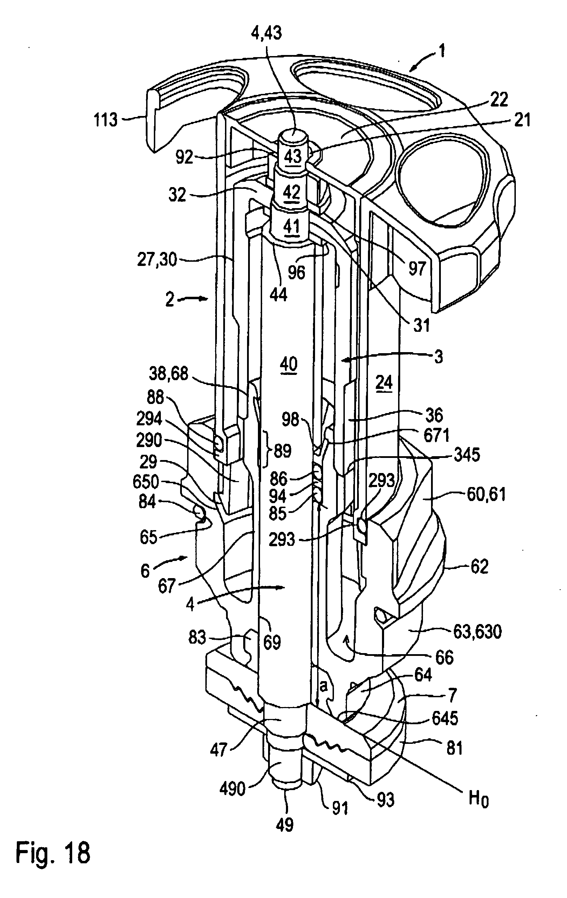

- Figur 18: das Oberteil gemäss Figur 14A, im vertikalen, perspektivischen Teilschnitt.

### Ausführungsbeispiele

Mit Bezug auf die beiliegenden Zeichnungen erfolgt nachstehend die detaillierte Beschreibung von Ausführungsbeispielen des erfindungsgemässen Oberteils.

Für die gesamte weitere Beschreibung gilt folgende Festlegung. Sind in einer Figur zum Zweck zeichnerischer Eindeutigkeit Bezugsziffem enthalten, aber im unmittelbar zugehörigen Beschreibungstext nicht erläutert, so wird auf deren Erwähnung in vorangehenden oder nachfolgenden Figurenbeschreibungen Bezug genommen. Im Interesse der Übersichtlichkeit wird auf die wiederholte Bezeichnung von Bauteilen in weiteren Figuren zumeist verzichtet, sofern zeichnerisch eindeutig erkennbar ist, dass es sich um "wiederkehrende" Bauteile handelt.

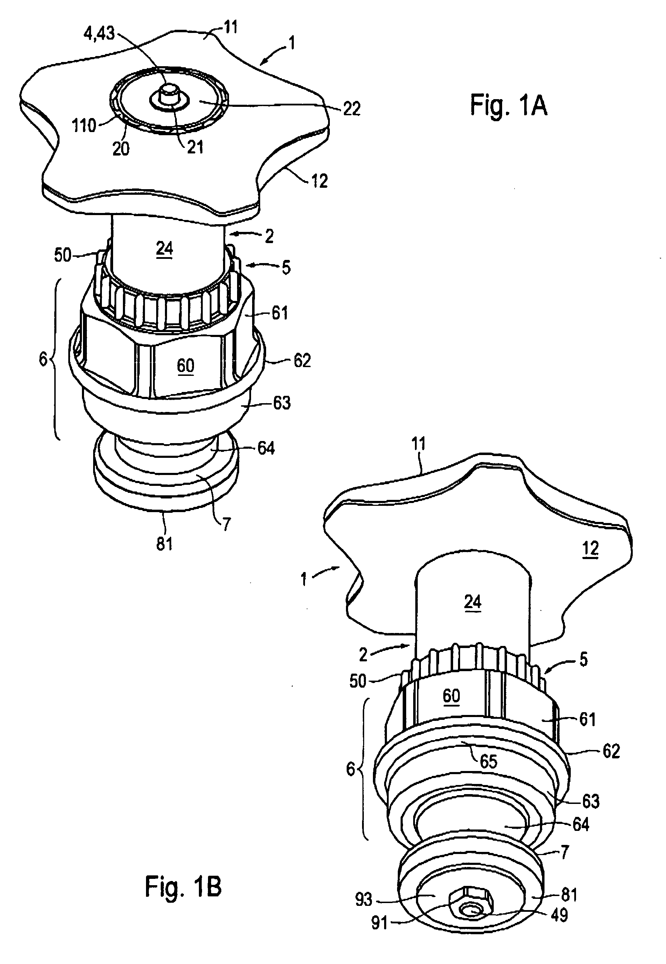

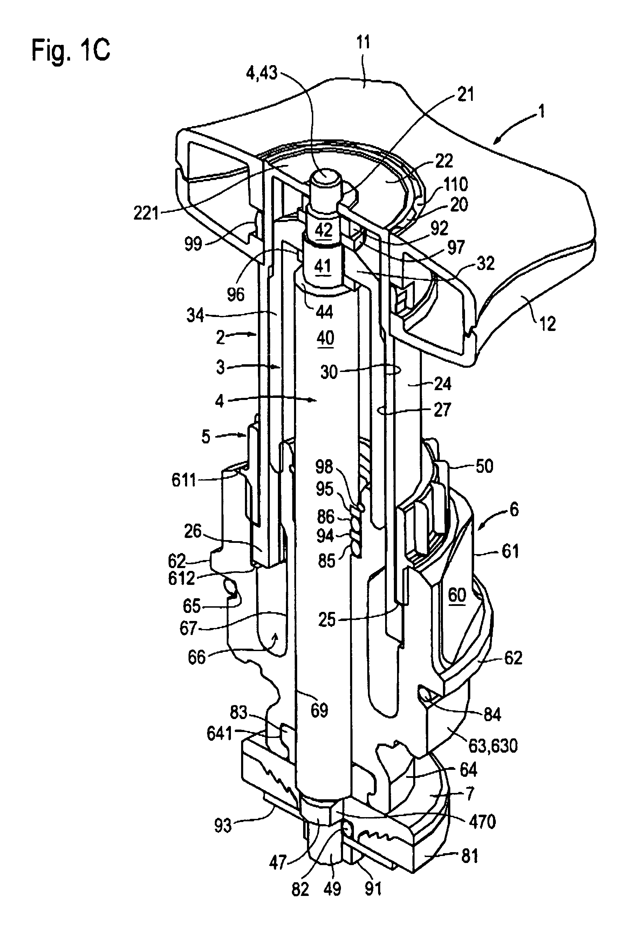

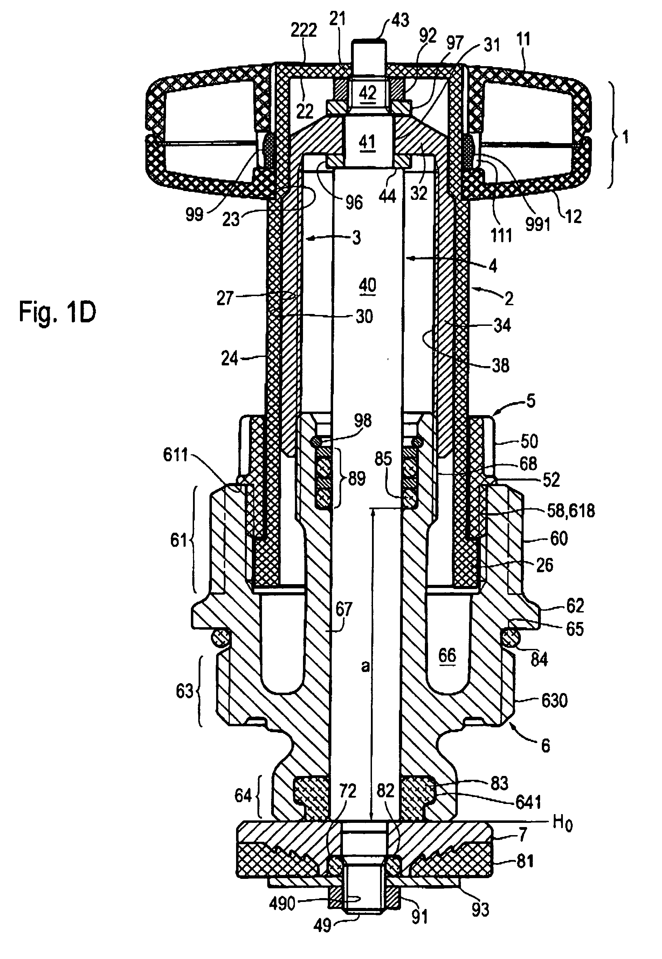

### Figuren 1Abis 1D

Das Oberteil besteht prinzipiell aus einem Handgriff **1,** dessen Drehbewegung auf eine Aussenhülse **2** übertragen wird, einer darin teleskopisch aufgenommenen Innenhülse **3 -** diese wirkt als Mitnahmeelement -, einem Stössel **4,** der die Innenhülse **3** und ein daran anschliessendes Kopfstück **6** axial durchragt. Mittels eines Halterings **5** wird die Aussenhülse **2** im **Kopfstück 6** gehalten. Am unteren Ende des Stössels **4** ist ein Ventilteller **7** fixiert. Das Oberteil befindet sich im Nullhub **H₀** also in völlig offener Stellung mit maximal eingefahrenem Stössel **4.**

Der Handgriff **1** setzt sich aus einem oberen ersten Griffteil **11** und einem zweiten unteren Griffteil **12** zusammen. Beide Griffteile **11,12** haben eine Innenprofilierung **110,120,** wobei die Innenprofilierung **110** des ersten Griffteils **11** mit der Aussenprofilierung **20** der Aussenhülse **2** drehfest in Eingriff steht und die Innenprofilierung **120** am zweiten Griffteil **12** dazu dient, damit sich der zweite Griffteil **12** über die Aussenprofilierung **20** bis auf das Niveau der Radialnut **23** an der Aussenhülse **2** schieben lässt (s. Figuren 5C bis 5H). Die Deckfläche **22** der Aussenhülse **2** ist als Vertiefung **221** für eine Einlage **222** ausgebildet, die das in der Leitung geführte Medium kennzeichnet - z.B. Heiss- oder Kaltwasser. Zwischen beiden Griffteifen **11,12** ist nahe zu den Innenprofilierungen **110,120** ein zweiter Sicherungsring 99 eingefügt, der an seinem Aussenumfang einen Überhang **991** aufweist, welcher von den am ersten Griffteil **11,** unten an der Innenprofilierung **110** vorhandenen Rastnasen **111** unterfasst wird und somit die axiale Sicherung des Handgriffs **1** bewirkt.

Beim Nullhub **H₀** ragt der den Stössel **4** oben abschliessende obere Zapfen **43** durch ein zentrisches Durchgangsloch **21** in der Aussenhülse 2 und zeigt damit die Stellung "völlig offen" an. Vom oberen Zapfen **43** strukturiert sich der Stössel **4** weiter abwärts in einen zweiten Fortsatz **42,** einen ersten Fortsatz **41** und einen Mittelabschnitt **40,** an deren Übergänge jeweils Absätze liegen. Auf dem zweiten Fortsatz **42** fixiert eine zweite Mutter **92** eine darunter liegende fünfte Scheibe **97,** die auf dem Absatz zum ersten Fortsatz **41** aufsitzt. Eine vierte Scheibe **96** sitzt auf der ersten Schulter **44** auf, die im Übergang vom ersten Fortsatz **41** zum Mittelabschnitt **40** liegt. Zwischen den beiden Scheiben **96,97** ist der Kragen **32** der Innenhülse 3 fixiert, wobei das Durchgangsloch **31** im Kragen **32** vom ersten Fortsatz **41** des Stössels **4** durchragt wird. Abwärts an den Mittelabschnitt **40** anschliessend, besitzt der Stössel **4** ein Zwischensegment **47** mit einer Abflachung **470** und endet mit dem unteren Zapfen **49,** der das Aussengewinde **490** zum Aufschrauben der ersten Mutter **91** aufweist. Oberhalb der ersten Mutter **91** liegt eine erste Scheibe **93,** die den Ventilteller **7** hält. Zwischen dem Ventilteller **7** und der ersten Scheibe **93** befindet sich die erste Dichtung **81,** welche die Absperrung des Ventils bewirkt. Am Übergang vom unteren Zapfen **49** zum Zwischensegment **47** umgibt den Stössel **4** eine zweite Dichtung **82,** die in einer Erweiterung **72** des Ventiltellers 7 eingelagert ist und von der ersten Scheibe **93** gehalten wird.

Die Aussenhülse **2** besitzt eine Innenprofilierung **27,** die sich intern von der Unterkante des Bundes **26** über den Schaft **24** bis auf das Niveau zur Radialnut **23** erstreckt. In die Innenprofilierung **27** greift eine Aussenprofilierung **30** ein, welche äusserlich am Schaft **34** der Innenhülse **3** vorhanden ist und sich darauf von deren Unterkante bis in die Nähe des Kragens 32 erstreckt. Die Profilierungen **27,30** bestehen aus zwischen leistenförmigen Erhöhungen liegenden Nuten, die jeweils axial verlaufen.

Das Kopfstück **6** setzt sich zunächst aus einem unteren Stutzen **64** und einem sich daran nach oben anschliessenden Innenstutzen **67** zusammen, welche von einem Axialdurchgang **69** zur Aufnahme des Mittelabschnitts **40** des Stössels **4** durchzogen sind. Vom Übergang zwischen dem unteren Stutzen 64 und dem Innenstutzen **67** zweigt ein Zwischenstutzen **63** ab, an den sich zuerst ein Flansch **62** und dann nach oben ein oberer Stutzen **61** anschliesst, wobei der Innenstutzen **67** und die Stutzen **63,61** mit dem Flansch **62** zwischen sich einen ring- und sackförmigen Freiraum **66** einschliessen. Der Innenstutzen **67** weist am oberen Abschnitt ein Aussengewinde **68** auf, das mit einem Innengewinde **38** der Innenhülse **3** in Eingriff steht. Im oberen Bereich des Innenstutzens **67** ist ein Dichtungspaket angebracht, das die Hauptdichtung **89** darstellt und sich von unten nach oben aus folgenden Elementen zusammensetzt: eine fünfte Dichtung **85,** eine zweite Scheibe **94,** eine sechste Dichtung **86,** eine dritte Scheibe **95,** wobei ein erster Sicherungsring **98** zur Fixierung des Dichtungspakets dient. Die fünfte Dichtung **85** als erstes Element der Hauptdichtung **89** ist im Innenabstand a positioniert. Der Innenabstand a ergibt sich als Versatz vom unteren Ende des Kopfstücks **6** bzw. der dritten Dichtung **83 -** jedenfalls bis zu der Position, in der das Strömungsmedium oberhalb des Ventiltellers **7** am Stössel **4** anstehen kann - in das Innere des Oberteils bis an die fünfte Dichtung **85** heran.

Der obere Stutzen **61** ist an der Innenseite mit einem Innengewinde **618** versehen, das abwärts bis zu einer auf dem Niveau des Flanschs **62** liegenden Ringschulter **612** verläuft, auf welcher der Bund **26** der Aussenhülse **2** aufsteht. In Schliessrichtung des Ventils fährt die Innenhülse **3** in den Freiraum **66** ein. An der Aussenseite weist der obere Stutzen **61** eine Aussenprofilierung **60,** vorzugsweise in Gestalt eines Mehrkants zum Ansetzen eines Schraubenschlüssels, auf. Unterhalb des Flanschs **62** befindet sich eine Radialnut **65,** in die eine vierte Dichtung **84,** vorzugsweise ein O-Ring, eingelegt ist. Unterhalb der Radialnut **65** ist ein über den Zwischenstutzen **63** verlaufendes Aussengewinde **630** vorhanden. Der untere Stutzen **64** hat eine innere Radialnut **641** zur Aufnahme einer dritten Dichtung **83,** wobei die Radialnut **641** nach unten austritt und nach oben von hinterschnittener Kontur ist. In der Ventilstellung "völlig offen" beim Nullhub **H₀** drückt die Oberseite des Ventiltellers 7 gegen die Unterseite der dritten Dichtung **83** und bewirkt damit ein intensiveres Einpressen der dritten Dichtung **83** in die innere Radialnut **641,** mit dem Ergebnis verstärkter Abdichtung. Zugleich ist damit sichergestellt, dass kein Totraum in diesem Bereich verbleibt.

Der Haltering **5** dient der Fixierung der Aussenhülse **2** im Kopfstück **6.** Hierzu besitzt der Haltering **5** im oberen Bereich eine Aussenprofilierung **50 -** z.B. eine Verzahnung zum Ansetzen eines Ratschenschlüssels -, einen unterhalb der Aussenprofilierung **50** nach aussen auskragenden Flansch **52** und ein unter dem Flansch **52** vorhandenes Aussengewinde **58.** Im fixierten Zustand umfasst der Haltering **5** den unteren Bereich des Schafts **24,** der Flansch **52** sitzt auf der zuoberst liegenden Schulter am oberen Stutzen **61,** das Aussengewinde **58** steht mit dem Innengewinde **618** in Eingriff und die Unterkante des Halterings **5** drückt auf die Schulter **25** der Aussenhülse **2.** Damit ist die mit ihrem Bund **26** auf der Ringschulter **612** des Kopfstücks **6** aufstehende Aussenhülse **2** positioniert.

Alternativ kann das Kopfstück **6** fester oder separater Bestandteil des Ventilkörpers sein. Der Haltering **5** könnte an Stelle des Aussengewindes **58** Arretierelemente von vorzugsweise elastischer Art besitzen, die in komplementäre Innenkonturen innerlich des oberen Stutzens **61** am Kopfstück **6** eingreifen. Damit würde sich auch das Innengewinde **618** am Kopfstück **6** erübrigen und dennoch die Aussenhülse **2** axial fixiert im Kopfstück **6** gehalten werden. Die mögliche Abwandlung des Halterings **5** mit Arretierelementen und des Kopfstücks 6 mit Innenkonturen anstelle der zueinander komplementären Gewinde **58,618** gilt auch für die *zweite* und *dritte Variante* des Oberteils gemäss den Figuren 6A und 7.

### Figur 2

In dieser Figur ist das zuvor dargestellte und beschriebene Oberteil in die Stellung "teilweise offen" mit dem Teilhub H₁ ausgefahren. Der Bewegungsablauf des Oberteils gestaltet sich wie folgt. Mit dem Rechtsdrehen am Handgriff **1** wird die Aussenhülse **2** ebenfalls in Rechtsdrehung versetzt, welche ihrerseits die Innenhülse **3** mitdreht. Mit zunehmender Drehung der Innenhülse **3** schraubt sich deren Innengewinde **38** immer weiter auf das Aussengewinde **68** des Innenstutzens **67** auf und hierbei schiebt sich die Innenhülse **3** abwärts tiefer mit dem Schaft **34** in den Freiraum **66** hinein. Beim Abwärtsfahren der Innenhülse **3** gleitet deren am Schaft **34** vorhandene Aussenprofilierung **30** in der Innenprofilierung **27** des Schafts **24** der sich drehenden, aber nicht axial verschiebenden Aussenhülse **2.** Zugleich schleppt der den ersten Fortsatz **41** des Stössels **4** umgreifende Kragen **32** der Innenhülse **3** den gesamten Stössel **4** mit abwärts, so dass der untere Bereich des Mittelabschnitts **40** des Stössels **4** sukzessive aus dem unteren Stutzen **64** des Kopfstücks **6** herausfährt. Im Ergebnis bewegen sich der Ventilteller **7** und die von diesem getragene erste Dichtung **81** in Richtung Ventilsitz und verengen schrittweise die Durchlassöffnung im Ventil. Beim Teühub **H₁** bewegt sich nur ein Anteil des Mittelabschnitts **40** des Stössels **4** unten aus der dritten Dichtung **83** heraus, der erheblich kleiner als der Innenabstand **a** ist. Die vom Strömungsmedium auf der Oberfläche des Stössels **4** verursachte Aufrauhung gelangt beim Zurückfahren in den Nullhub **H₀** keinesfalls an die fünfte Dichtung **85** als erstes Element der Hauptdichtung **89.**

Bei der Stellung "teilweise offen" mit dem Teilhub **H₁** ausgefahren, entfernt sich der obere Zapfen **43** des Stössels **4** aus dem Durchgangsloch **21** der Aussenhülse **2.** Damit wird angezeigt, dass sich das Oberteil nicht mehr in der Stellung "völlig offen" befindet.

### Figuren 3A bis 4

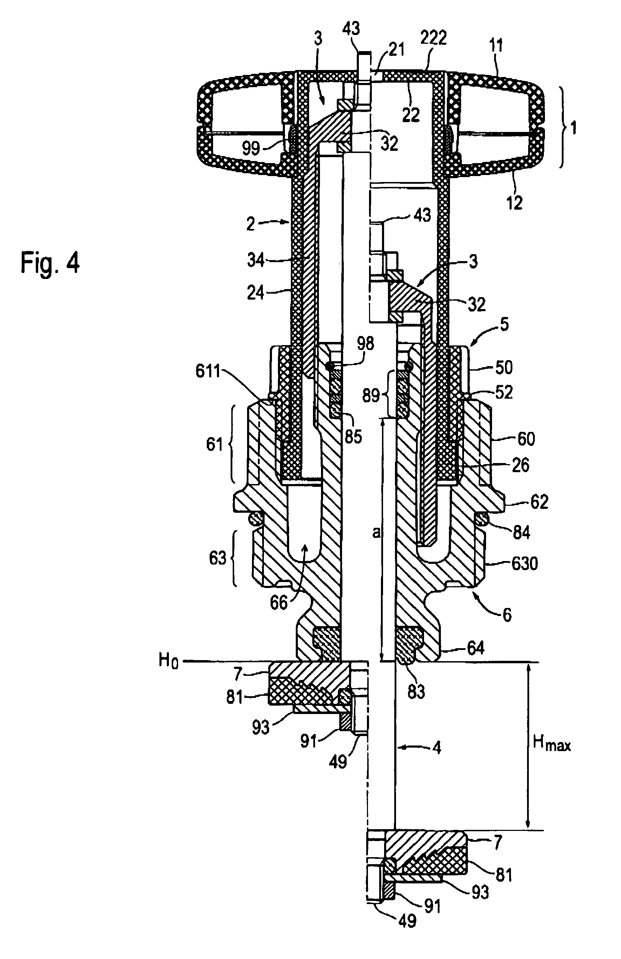

Jetzt ist das Oberteil in die Stellung "völlig geschlossen" mit dem Maximalhub **Hₘₐₓ** ausgefahren, wobei Figur 4 beide Endstellungen **H₀** sowie **Hₘₐₓ** im Vergleich zeigt. Mit weiterem Rechtsdrehen am Handgriff **1** über den Teilhub **H₁** hinaus, werden auch die Aussen- und Innenhülse **2,3** wieder in Drehrichtung mitgenommen, das Innengewinde **38** weiter auf das Aussengewinde **68** geschraubt und somit der Schaft **34** der Innenhülse **3** noch tiefer in den Freiraum **66** hinein bewegt. Von der abwärts fahrenden Innenhülse **3** gleitet die Aussenprofilierung **30** in der Innenprofilierung **27** der axial feststehenden Aussenhülse **2.** Von der sich abwärts bewegenden Innenhülse **3** wird der Stössel **4** mitgenommen, so dass der untere Bereich des Mittelabschnitts **40** des Stössels **4** maximal aus dem unteren Stutzen **64** des Kopfstücks **6** herausfährt. Die vom Ventilteller **7** getragene erste Dichtung **81** ist bis auf den Ventilsitz gefahren und versperrt die Durchlassöffnung im Ventil gänzlich. Bei der Stellung "völlig geschlossen" mit dem Maximalhub **Hₘₐₓ** hat sich der obere Zapfen **43** des Stössels **4** am weitesten aus dem Durchgangsloch **21** der Aussenhülse **2** entfernt. Damit wird angezeigt, dass sich das Oberteil nicht in der Stellung "völlig offen" befindet.

Zur Schonung der sich aus der Paketanordnung **85,86;94,95** ergebenden Hauptdichtung **89** ist die beim Maximalhub **Hₘₐₓ** ausfahrende Länge des Mittelabschnitts **40** des Stössels **4** kleiner bemessen als der Innenabstand **a.** Damit wird vermieden, dass dem Strömungsmedium ausgesetzte, dadurch korrodierte und durch Ablagerungen aufgerauhte Oberfläche des Mittelabschnitts **40** des Stössels **4** beim Zurückfahren des Oberteils in den Nullhub **H₀** die Hauptdichtung **89** beschädigt.

### Figuren 5A und 5B

Das Oberteil ist in zwei verschiedenen Explosivdarstellungen gezeigt und soll eine Gesamtübersicht aller zugehörigen Bauteile vermitteln. In der Abfolge von oben nach unten setzt sich das Oberteil aus folgenden Bauteilen zusammen: dem Handgriff **1,** bestehend aus erstem und zweitem Griffteil **11,12,** dem Sicherungsring **99,** der Aussenhülse **2,** der zweiten Mutter **92,** der fünften Scheibe **97,** der Innenhülse **3,** der vierten Scheibe **96,** dem ersten Sicherungsring **98,** der Hauptdichtung **89 -** bestehend aus der dritten Scheibe **95,** der sechsten Dichtung **86,** der zweiten Scheibe **94** und der fünften Dichtung **85** -, dem Stössel **4,** dem Haltering **5,** dem Kopfstück **6,** der vierten Dichtung **84,** der dritten Dichtung **83,** dem Ventilteller **7,** der zweiten Dichtung **82,** der ersten Dichtung **81,** der ersten Scheibe **93** und der ersten Mutter **91.**

### Figuren 5C bis 5F

Das erste halbschalenförmige Griffteil **11** mit seiner sternartigen Geometrie besitzt einen mittigen Axialdurchgang **119,** der von einer Innenprofilierung **110** umrandet ist. Alternierend endet jeder zweite Profilsteg mit einer tiefer abwärts liegenden, in den Axialdurchgang **119** hineinragenden Rastnase **111.** Die Rastnasen **111** befinden sich unterhalb der Innprofilierung **110** und setzen sich über den unteren Rand eines Innenstegs **112** nach unten fort. Anstelle einzelner Rastnasen **111** kann auch ein radial umlaufendes Rastorgan als Ringwulst vorhanden sein. Ein äusserer Randsteg **113** weist eine auslaufend genutete Unterkante **114** auf, die komplementär zur Oberkante des zweiten Griffteils **12** ausgebildet, mit diesem formschlüssig zusammengefügt ist. Das zweite Griffteil **12** besitzt ebenso mittig einen Axialdurchgang **129,** der von einer Innenprofilierung **120** mit Profilstegen umrandet ist, die ein Innensteg **122** umgibt.

### Figuren 5G und 5H

Die Aussenhülse **2** weist auf der Oberseite einen erhöhten, aussen umlaufenden Rand auf, so dass eine scheibenförmige Vertiefung **221** entsteht, die gleichzeitig die Deckfläche **22** bildet. In der Deckfläche **22** ist ein zentrisch positioniertes, axiales Durchgangsloch **21** vorhanden, das von einem erhabenen ringförmigen Bereich umrandet wird. An der Aussenseite ist am oberen Ende eine Aussenprofilierung **20** vorgesehen, die sich bis zur Radialnut **23** erstreckt und zum formschlüssigen Eingriff mit der Innenprofilierung **110** des ersten Griffteils **11** bestimmt ist. Die Innenprofilierung **120** am zweiten Griffteil **12** erlaubt, dass sich dieses Griffteil **12** über die Aussenprofilierung **20** der Aussenhülse **2** bis in die Radialnut **23** schieben lässt. Aussenprofilierung **20** und Radialnut **23** weisen in etwa die gleiche Höhe auf. Im montierten Zustand liegt das zweite Griffteil **12** an der Unterkante der Radialnut **23** an, auf dem Innensteg **122** des zweiten Griffteils **12** ist ein zweiter Sicherungsring **99** positioniert, dessen Überhang **991** von den Rastnasen **111** des ersten Griffteils **11** unterfasst wird. Unten endet die Aussenhülse **2** nach einem zylindrischen Schaft **24** mit einem im Aussendurchmesser verdickten Bund **26,** wobei im Übergang zwischen Schaft **24** und Bund **26** eine Schulter **25** entsteht. Innerlich besitzt die Aussenhülse **2** eine Innenprofilierung **27,** welche vom unteren Ende bis etwa an die Radialnut **23** heran verläuft und von axial erstreckten, erhabenen Stegen sowie dazu alternierenden Nuten gebildet wird.

### Figuren 5J und 5K

Die Innenhülse **3** weist einen kegelförmig zulaufenden Kragen **32** auf, der oben mit einer Planfläche endet, welche ein axiales Durchgangsloch **31** umrandet. An der Aussenfläche des Schafts **34** verläuft quasi von dessen Unterkante **345** bis nahe an den Kragen **32** eine aus erhabenen Stegen und sich dazwischen ergebenden Nuten bestehende Aussenprofilierung **30,** die zum komplementären Eingriff mit der Innenprofilierung **27** der Aussenhülse **2** bestimmt ist. Innerlich besitzt der Schaft **34** der Innenhülse **3** ein Innengewinde **38,** welches mit dem Aussengewinde **68** des Kopfstücks **6** in Eingriff steht.

### Figur 5L

Der langgestreckte Stössel **4** besteht aus einem Mittelabschnitt **40,** der oben an einer ersten Schulter **44** endet, von der sich ein im Durchmesser verkleinerter erster Fortsatz **41** bis zu einer zweiten Schulter **45** erstreckt. Hier schliesst sich ein zweiter, im Durchmesser kleiner Fortsatz **42** mit einem Aussengewinde **420** an, die an einer dritten Schulter **46** enden, von der sich ein emeut im Durchmesser verkleinerter oberer Zapfen **43** erstreckt. Das untere Ende des Mittelabschnitts **40** besitzt einen Hinterschnitt **48,** der ein Zwischensegment **47** separiert, das mit einer einseitigen Abflachung **470** versehen ist und die gleiche Form, wie der Axialdurchgang **79** des Ventiltellers **7** besitzt. An das Zwischensegment **47** schliesst sich ein unterer Zapfen **49** mit Aussengewinde **490** zur Befestigung der ersten Mutter **91** an. Der untere Zapfen **49** bildet das untere Ende des Stössels **4.**

### Figuren 5M und 5N

Der Haltering **5** weist einen im Prinzip zylindrischen Querschnitt auf und wird äusserlich durch einen auskragenden Flansch **52** in einen oberen Bereich mit einer Aussenprofilierung **50** und einen unteren Bereich mit einem Aussengewinde **58** geteilt.

### Figuren 5O und 5P

Das Kopfstück 6 besteht aus einem Innenstutzen **67** mit einem Axialdurchgang **69,** einem oberen Stutzen **61,** einem Zwischenstutzen **63** und einem unteren Stutzen **64,** wobei der Innenstutzen **67** den oberen Stutzen **61** überragt und oberer Stutzen **61** mit Flansch **62** und Zwischenstutzen **63** den Innenstutzen **67** mit Abstand umfassen. Der Abstand ergibt einen ring- und sackförmigen Freiraum **66.** Der Innenstutzen **67** weist am oberen Abschnitt ein Aussengewinde **68** auf. Im zur Führung des Stössels **4** bestimmten Axialdurchgang **69** ist nahe der oberen Mündung eine innere Radialnut **671** ausgebildet, in der der erste Sicherungsring **98** zur Fixierung der Hauptdichtung **89** aufgenommen wird. Unterhalb der Radialnut **671** ist eine Ringschulter **672** ausgebildet, auf der die fünfte Dichtung **85** als unterstes Element der Hauptdichtung **89** aufliegt. Zur Aufnahme des Halterings **5** hat der obere Stutzen **61** an seiner Innenseite das Innengewinde **618** und darunter zum Aufsetzen des Bundes **26** der Aussenhülse **2** eine Ringschulter **612.** Der Freiraum **66** erstreckt sich weiter unterhalb der Ringschulter **612** bis zur Abzweigung des Zwischenstutzens **63** vom Übergang zwischen dem unteren Stutzen **64** und dem Innenstutzen **67.** Der obere Stutzen **61** ist äusserlich mit einer Aussenprofilierung **60,** hier ein Sechskant versehen. Der Zwischenstutzen **63** besitzt am Übergang zum oberen Stutzen **61** einen Flansch **62** sowie eine darunter liegende Radialnut **65** zur Aufnahme der vierten Dichtung **84.** Im Anschluss an die Radialnut **65** erstreckt sich ein Aussengewinde **630.** Der untere Stutzen **64** hat im Bereich des Axialdurchgangs **69** eine innere Radialnut **641** zur Einbettung der dritten Dichtung **83** und endet an der Unterkante **645,** die den Axialdurchgang **69** zirkulär umrandet.

### Figuren 5Q und 5R

Die dritte Dichtung **83** besitzt einen Axialdurchgang **839** zum gleitenden Durchlass des Mittelabschnitts **40** des Stössels **4** sowie eine obere Partie **831** und eine im Aussendurchmesser kleinere untere Partie **832,** so dass sich an der unteren Partie **832** ein Freischnitt **833** ergibt.

### Figuren 5S bis 5V

Der Ventilteller **7** hat einen zentrischen Axialdurchgang **79** mit Abflachungen **790** zur oberseitigen Mündung hin und eine Profilierung **70** auf der Unterseite. An der unteren Mündung besitzt der Axialdurchgang **79** eine Erweiterung **72,** um darin die zweite Dichtung **82** einzulagern. Die Erweiterung **72** wird von einem nach unten erhabenen Rand **71** begrenzt. An den Abflachungen **790** kommen die Abflachungen **470** des Zwischensegments **47** des Stössels 4 zu liegen.

Die erste Dichtung **81,** welche zur Absperrung im Ventil bestimmt ist, besitzt einen Axialdurchgang **819** und eine oberseitige Profilierung **810,** die komplementär zur Profilierung **70** am Ventilteller 7 beschaffen ist. Der Axialdurchgang **819** in der ersten Dichtung **81,** dient zur Aufnahme des erhabenen Randes **71** des Ventiltellers **7.**

### Figuren 6A bis 6E

In dieser Figurenfolge ist ein Oberteil *zweiter Variante* mit geändertem Kopfstück **6,** aber geringen konstruktiven Modifikationen an der Aussen- und Innenhülse **2,3** dargestellt, wobei die übrigen Bauteile und die Funktionsweise unverändert sind. Die Figur 6A zeigt das Oberteil in beiden Endstellungen **H₀** sowie **Hₘₐₓ** im Vergleich. Anstelle des zuvor einteiligen Kopfstücks **6** setzt sich dieses nun aus einem Aussenstück **6'** und einem separaten Innenstutzen **67** zusammen, der in das Aussenstück **6'** mittels des Aussengewindes **675** und des im Aussenstück **6'** vorhandenen Innengewindes **642** eingeschraubt ist. Durch den Innenstutzen **67** verläuft der Axialdurchgang **69.** Das Innengewinde **642** liegt im unteren Stutzen **64** oberhalb der inneren Radialnut **641.** Über dem unteren Stutzen **64** schliesst sich wiederum der Zwischenstutzen **63** mit dem Aussengewinde **630** an, dem die Radialnut **65** und dann der Flansch **62** folgt. Das Aussenstück **6'** endet oben mit dem oberen Stutzen **61,** der die Aussenprofilierung **60,** z.B. ein Sechskant, aufweist und innen mit dem Innengewinde **618** versehen ist, das an einer Ringschulter **612** ausläuft.

Der Innenstutzen **67** besitzt oberhalb des Aussengewindes **675** eine Radialnut **674** zur Aufnahme einer siebenten Dichtung **87,** die im montierten Zustand zwischen dem Aussenstück **6'** und dem eingeschraubten Innenstutzen **67** liegt. Nach oben wird die Radialnut **674** von einem Flansch **673** begrenzt, über dem der Innenstutzen **67** zunächst im Aussendurchmesser verkleinert ist und sich dann wieder erweitert. Der erweiterte Bereich hat ein Aussengewinde **68,** mit dem das Innengewinde **38** am Schaft **34** der Innenhülse **3** in Eingriff steht. Innerlich des erweiterten Bereichs ist eine innere Radialnut **671** zur Aufnahme des ersten Sicherungsrings **98** vorhanden, unterhalb der im Abstand die Ringschulter **672** liegt. Zwischen Sicherungsring **98** und Ringschulter **672** ist die Hauptdichtung **89,** bestehend aus dem Dichtungspaket **85,86;94,95,** gelagert.

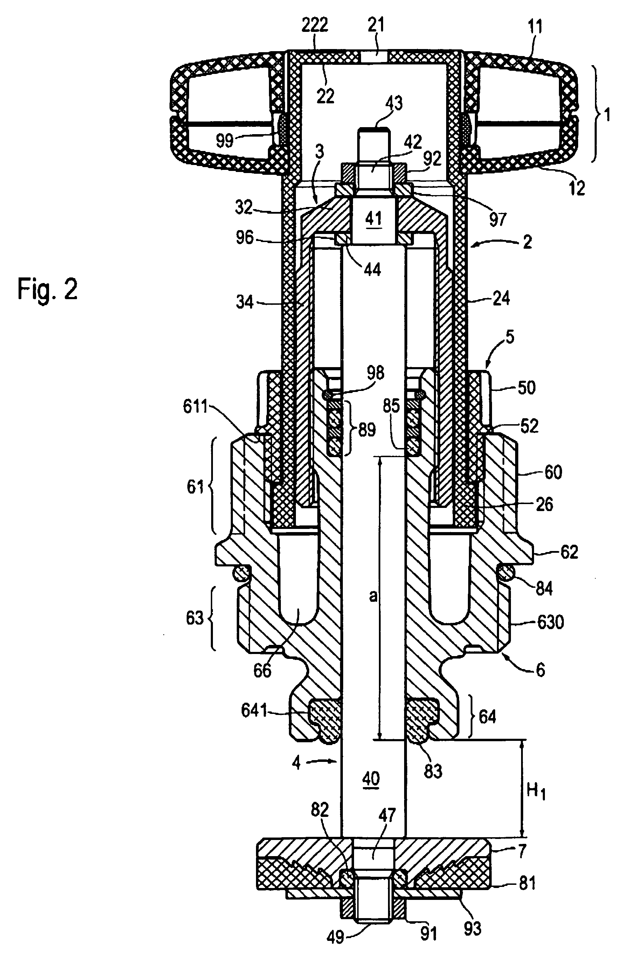

Nahe dem unteren Abschluss **28** der Aussenhülse **2** ist anstelle des zuvor direkt das Ende bildenden Bundes **26** (s. Figur 2), der Bund **26** nun vom unteren Abschluss **28** versetzt positioniert und setzt wiederum auf der Ringschulter **612** des jetzt zweiteiligen Kopfstücks **6,** nämlich im Aussenstück **6'** auf. Die Aussenhülse **2** besitzt unverändert oben an ihrem Schaft **24** die Aussenprofilierung **20,** das Durchgangsloch **21** in der Deckfläche **22** mit der oberseitigen Vertiefung **221,** die Radialnut **23** und die Innenprofilierung **27.** Zur Fixierung der im Aussenstück **6'** stehenden Aussenhülse **2** dient der Haltering **5,** dessen in der unteren Partie vorhandenes Aussengewinde **58** mit dem Innengewinde **618** am Aussenstück **6'** verschraubt ist, wobei der Flansch **52** auf der Oberkante des Aussenstücks **6'** aufsitzt. Unverändert ist auch an der oberen Partie des Halterings **5** die Aussenprofilierung **50.**

### Figur 7

Dieses Oberteil *dritter Variante* weist geringe konstruktive Modifikationen an der Aussen- und Innenhülse **2,3**, am Kopfstück **6** sowie am Ventilteller **7** auf, wobei die Funktionsweise und die übrigen Bauteile unverändert bleiben. Momentan befindet sich das Oberteil in der Endstellung **H₀**. Das Kopfstück **6** hat einen schräg verlaufenden Abschnitt, der sich vom unteren Stutzen **64** bis zum Zwischenstutzen **63** mit dem Aussengewinde **630** erstreckt, dem die Radialnut **65** und dann der Flansch **62** folgen. Das Kopfstück **6** endet mit dem unveränderten oberen Stutzen **61,** der die Aussenprofilierung **60,** z.B. ein Sechskant, aufweist und mit dem Innengewinde **618** versehen ist. Durch den Innenstutzen **67** verläuft der Axialdurchgang **69** der den Mittelabschnitt **40** des Stössels **4** aufnimmt. Der Innenstutzen **67** hat am oberen Ende eine sich nach aussen erstreckende Erweiterung, die das Aussengewinde **68** aufweist, mit dem das Innengewinde 38 am Schaft **34** der Innenhülse **3** in Eingriff steht. Innerhalb des erweiterten Bereichs ist eine innere Radialnut **671** zur Aufnahme des ersten Sicherungsrings **98** vorhanden, darunter liegt im Abstand zur Hauptdichtung **89** die Ringschulter **672.** Zwischen erstem Sicherungsring **98** und Ringschulter **672** ist die Hauptdichtung **89,** bestehend aus dem Dichtungspaket **85,86;94,95,** gelagert.

An der Aussenhülse **2** hat der Bund **26** nun eine äussere Radialnut **262,** in der das achte Element **88** eingelegt ist, welches zur Hemmung der Aussenhülse **2** gegen unbeabsichtigte Rotation, z.B. infolge von Vibration, dient. Das untere Ende des Bundes **26** sitzt auf der Ringschulter **612** des Kopfstücks **6** auf. Die Aussenhülse **2** besitzt unverändert oben an ihrem Schaft **24** die Aussenprofilierung **20.** Das Durchgangsloch **116** und die oberseitige Einlage **117** sind jetzt in der Deckfläche **115** des ersten Griffteils **11** vorgesehen. Die Radialnut **23** und die Innenprofilierung **27** befinden sich weiterhin an der Aussenhülse **2.** Zur Fixierung der im Kopfstück **6** stehenden Aussenhülse **2** dient der Haltering **5,** deren in der unteren Partie vorhandenes Aussengewinde **58** mit dem Innengewinde **618** am Kopfstück **6** verschraubt ist. Dabei sitzt der Flansch **52** des Halterings **5** auf der Oberkante des Kopfstücks **6** auf. Die Aussenprofilierung **50** an der oberen Partie des Halterings **5** bleibt dabei unverändert. An der Innenhülse **3** ist der Kragen **32** abgewandelt - jetzt eben - hat aber gleichfalls am Schaft **34** die Aussenprofilierung **30** und das Innengewinde **38** sowie das Durchgangsloch **31** am Kragen **32.** In der hiesigen Ausführung erstreckt sich die Aussenprofilierung **30** nur über einen mittleren Bereich des Schafts **34.** Zwischen dem Ventilteller **7** und der vorgesetzten ersten Scheibe **93** ist die erste Dichtung **81** vorgesehen, welche die Absperrung des Ventils bewirkt und bis an den unteren Zapfen **49** heranreicht, so dass hier die zweite Dichtung **82** aus Figur **2** entfällt. Erneut ist auf das Aussengewinde **490** am unteren Zapfen **49** eine erste Mutter **91** gegen die erste Scheibe **93** aufgeschraubt.

### Figuren 8A und 8B

Dieses Figurenpaar zeigt ein Oberteil *vierter Variante* in der Endstellung **H₀** mit konstruktiven Unterschieden an der Aussen- und Innenhülse **2,3,** am Kopfstück **6,** sowie einer geringfügigen Änderung am Ventilteller **7.** Durch die Aufnahme einer Zwischenhülse **5'** als weiteres Bauteil modifiziert sich die Funktion und eine kleinere Dimension des Ventil-Oberteils lässt sich bei verlängerter Bauweise für spezielle Anwendungen realisieren. Das Kopfstück **6** setzt sich zunächst aus dem unteren Stutzen **64** und einem sich daran nach oben anschliessenden Innenstutzen **67** zusammen, welche von einem Axialdurchgang **69** zur Aufnahme des Mittelabschnitts **40** des Stössels **4** durchzogen sind. Über dem unteren Stutzen **64** schliesst sich der Zwischenstutzen **63** mit dem Aussengewinde **630** an, dem die Radialnut **65** und dann der Flansch **62** folgen. Mit dem oberen Stutzen **61,** der die Aussenprofilierung **60 ―** hier z.B. ein Sechskantprofil ― aufweist, endet das Kopfstück **6,** wobei die gegenüberliegende Innenseite mit einem Innengewinde **618** versehen ist. Das Innengewinde **618** verläuft abwärts bis oberhalb einer auf dem Niveau des Flansches **62** liegenden Ringschulter **612** und steht mit dem Aussengewinde **58'** der Zwischenhülse **5'** in Eingriff. Die Zwischenhülse 5' besitzt im Anschluss an das Aussengewinde **58'** eine Radialnut **51',** in der ein achtes Element **88** zur Hemmung der Aussenhülse **2** gegen unbeabsichtigte Rotation, z.B. infolge von Vibration, eingelegt ist. Oberhalb davon ist eine Radialnut **57'** vorhanden, welche das bei Drehung des Handgriffs **1** vordere Stiftende des mitdrehenden Arretierelements **29** aufnimmt, das die Zwischenhülse **5'** zusätzlich gegen Axialverschiebung sichert.

Im oberen Bereich des Innenstutzens **67** ist die Hauptdichtung **89** zwischen der ersten Ringschulter **672** und dem ersten Sicherungsring **98',** auf dem die Zwischenhülse **5'** aufsteht und der auf der Ringschulter **612** aufliegt, angeordnet. Die Hauptdichtung **89** setzt sich aus dem Dichtungspaket mit den Einzelkomponenten **85,86;94,95** zusammen. Das erste Element der Hauptdichtung **89** ist die fünfte Dichtung **85,** die mit dem Innenabstand a positioniert ist. Der Innenabstand a ergibt sich als Versatz vom unteren Ende des Kopfstücks **6** bzw. der dritten Dichtung **83 ―** jedenfalls bis zu der Position, in der das Strömungsmedium oberhalb des Ventiltellers **7** am Stössel **4** anstehen kann ― in das Innere des Oberteils bis an die fünfte Dichtung **85** heran.

Die Aussenhülse **2** ist am Bund **26** mit vorzugsweise zwei sich 180° gegenüber liegenden Flachsenkungen **261** versehen, von der sich jeweils ein Durchgangsloch **260** in radialer Richtung erstreckt und als Radialnut **57'** in der Zwischenhülse **5'** fortsetzt. Die Aussenhülse **2** sitzt axial auf der Ringfläche **611** am oberen Stutzen **61** des Kopfstücks **6** auf und besitzt unverändert oben an ihrem Schaft **24** die Aussenprofilierung **20** und die Radialnut **23.** Das Durchgangsloch **21** sowie die oberseitige Einlage **222** befinden sich in der Deckfläche **115** des ersten Griffteils **11.** Die Innenprofilierung **27** erstreckt sich dabei oberhalb des Bundes **26,** vom oberen Ende der Zwischenhülse **5'** über den Schaft **24** bis zum gegenüberliegenden Ende. In die Innenprofilierung **27** der Aussenhülse **2** greift eine Aussenprofilierung **30** ein, welche äusserlich an einem nach aussen erweiterten Kragen **32** in Fortsetzung des Schafts **34** der Innenhülse **3** vorhanden ist und sich koaxial zum Aussengewinde **39** befindet, das mit dem Innengewinde **59'** der Zwischenhülse **5'** in Eingriff steht, wobei zwischen Aussenprofilierung **30** und Aussengewinde **39** ein an sich äusserlich glatter Abschnitt des Schafts **34** liegt. Die Profilierungen **27,30** bestehen aus zwischen leistenförmigen Erhöhungen liegenden Nuten, die jeweils axial verlaufen. Alternativ kann die Zwischenhülse **5'** einteilig mit dem Kopfstück **6** verbunden sein.

Der Kragen **32** an der Innenhülse **3** hat eine nach oben offene, erweitere Mündung **33,** die sich axial vom Durchgangsloch **31** fortsetzt. Auf dem zweiten Fortsatz **42** sind eine zweite Mutter **92** und eine fünfte Scheibe **97** innerhalb der Mündung **33** positioniert, welche die Innenhülse **3** in axialer Richtung fest, jedoch radial drehbar zwischen der ersten Schulter **44** und der zweiten Schulter **45** begrenzen.

Bei Drehen des Handgriffs **1** in Schliessrichtung des Oberteils wird die Aussenhülse **2** mitgenommen und gleitet dabei an der feststehenden Zwischenhülse **5'** sowie auf der zuoberst liegenden Ringfläche **611** des oberen Stutzens **61** des Kopfstücks **6.** Die vorderen Stiftenden der mitdrehenden Arretierelemente **29** gleiten in der Radialnut **57'** an der Zwischenhülse **5'.** Zugleich wird die Innenhülse **3** über den Eingriff zwischen den Konturen **27,30** in Rotation versetzt, dabei fährt die Innenhülse **3** mit ihrem Aussengewinde **39** in das Innengewinde **59'** der Zwischenhülse **5'** ein und treibt den Stössel **4** axial aus dem Kopfstück **6** aus. Beim Betätigen des Oberteils in Richtung Offenstellung wird der Stössel **4** durch die Axialverschiebung der Innenhülse **3** in das Oberteil hineingezogen.

### Figuren 9A und 9B

Die Besonderheit des Oberteils in der *fünften Variante* besteht zunächst darin, dass Handgriff **1** und Aussenhülse **2** ein gemeinsames Teil bilden, wonach sich von der Unterseite des Handgriffs **1** der hülsenförmige Schaft **24** der Aussenhülse **2** erstreckt. Ansonsten besteht dieses Oberteil ebenfalls aus einem Kopfstück **6** mit dem oberen Stutzen **61,** der daran befindlichen Aussenprofilierung **60,** dem sich anschliessenden Flansch **62,** den Zwischenstutzen **63,** dem unteren Stutzen **64,** dem Ventilteller 7, unter dem die erste Dichtung **81** angeordnet ist, sowie den unteren abschliessenden Teilen mit der ersten Scheibe **93** und der auf den unteren Zapfen **49** des Stössels **4** aufgeschraubten ersten Mutter **91.** Erneut befindet sich unter dem Flansch **62** die äussere Radialnut **65,** in der die vierte Dichtung **84** eingebettet ist und für die Abdichtung des in den Ventilkörper eingesetzten Oberteils sorgt. Das Oberteil befindet sich im Nullhub H₀, also in völlig offener Stellung mit maximal eingefahrenem Stössel **4,** angezeigt durch den aus der Deckfläche **22** durch das Durchgangsloch **21** des Handgriffs **1** heraustretenden oberen Zapfen **43** des Stössels **4.**

### Figuren 10A und 10B

Befindet sich das Oberteil im Maximalhub **Hₘₐₓ,** also in völlig geschlossener Stellung mit maximal ausgefahrenem Stössel **4,** ragt der untere Bereich des Mittelabschnitts **40** des Stössels **4** aus dem unteren Stutzen **64,** in welchem die den Mittelabschnitt **40** ummantelnde dritte Dichtung **83** eingesetzt ist. Der Stellbereich auch noch etwas vom Maximalhub **Hₘₐₓ** entfernt, wird durch den in der Deckfläche **22** im Durchgangsloch **21** des Handgriffs **1** versenkten oberen Zapfen **43** des Stössels **4** angezeigt.

### Figuren 11A und 11B

Das Oberteil gemäss *fünfter Variante* ist in zwei verschiedenen Explosivdarstellungen als Gesamtübersicht aller zugehörigen Bauteile gezeigt. In der Abfolge von oben nach unten besteht es zunächst aus dem Handgriff **1,** in den sich von oben die Deckfläche **22** einsetzen lässt und der mit der Aussenhülse **2,** die im wesentlichen vom Schaft **24** gebildet wird, einstückig verbunden ist. Die Deckfläche **22** kann als Einsatz mit Kennung für Heiss- bzw. Kaltwasser vorgesehen sein. Ferner gehören folgende Bauteile zum Oberteil: ein achtes Element **88** als Rotationssicherung, ein Sicherungsring **92,** eine fünfte Scheibe **97,** die Innenhülse **3** als Mitnahmeelement, eine Zwischenhülse **5',** die Hauptdichtung **89 ―** bestehend aus sechster Dichtung **86,** zweiter Scheibe **94** und fünfter Dichtung **85** ―, der Stössel **4,** das Kopfstück **6,** die vierte Dichtung **84,** die dritte Dichtung **83,** der Ventilteller **7,** die erste Dichtung **81,** die erste Scheibe **93** und die erste Mutter **91.**

### Figuren 12A und 12B

An der Oberseite des tellerförmigen Handgriffs **1** mündet zentrisch der kreisförmige Axialdurchgang **119,** in den sich von oben die Deckfläche **22** einsetzen lässt. Vom Axialdurchgang **119** erstrecken sich radial Rippen in den Aussenbereich und gehen in einen abwärts gerichteten Randsteg **113** über. An die Unter seite des Handgriffs **1** setzt der abwärts gerichtete hülsenförmige Schaft **24** an, der einen nach innen gerichteten Mittelsteg **291** hat, von dem parallel beabstandet vom Schaft **24** sich obere Zungen **292** und elastisch biegbare untere Zungen **290** erstrecken, wobei letztere nach innen gerichtete, hakenförmige Arretierelemente **29** besitzen. An der Innenwandung des Schafts **24** befindet sich die Innenprofilierung **27,** welche von sternförmig angeordneten Rippen **27** gebildet wird, die sich vom Mittelsteg **291** bis nahe an die Mündung des Axialdurchgangs **119** im Handgriff **1** erstrecken, so dass die eingesetzte Deckfläche **22** sich auf der Vielzahl der Rippen **27** abstützt. Unten schliesst der Schaft **24** mit der Unterkante **295** ab, wobei sich der Kranz von Artetierelementen **29 ―** vom Schaft **24** ummantelt ― oberhalb der Unterkante **295** befindet.

### Figuren 12C und 12D

In dieser Ausführung hat das als Innenhülse gestaltete Mitnahmeelement 3 einen zuoberst abschliessenden Kragen **32,** der im Prinzip eine horizontale Planfläche darstellt, welche das axiale Durchgangsloch **31** umrandet. Eine als Längsverzahnung konfigurierte Aussenprofilierung **30** befindet sich am Kopf **37,** von dessen Unterseite sich der Schaft **34** axial mit vermindertem Durchmesser fortsetzt, wobei das untere Ende des Schafts **34** im Durchmesser wieder verdickt ist und das Aussengewinde **39** hat. Der zwischen Kopf **37** und Aussengewinde **39** liegende Anteil des Schafts **34** hat einen den Aussendurchmesser vermindemden Freischnitt **35.** Das Durchgangsloch **31** erstreckt sich axial durch das gesamte Mitnahmeelement **3,** so dass es einerseits innerhalb des Kragens **32** und andererseits der Unterkante **345** des Mitnahmeelements **3** austritt.

### Figur 12E

Der Stössel **4** ist im wesentlichen ein zylindrischer Achsstab mit Bereichen verschiedenen Durchmessers und beginnt mit einem relativ kurzen oberen Zapfen **43,** von dem sich an einer dritten Schulter **46** ein im Durchmesser verdickter zweiter Fortsatz **42** anschliesst. Nahe unterhalb der dritten Schulter **46** befindet sich eine Ringnut **421.** An den zweiten Fortsatz **42** setzt der im Durchmesser geringfügig verminderte erste Fortsatz **41** an, der mit einer Verdickung **410** vor der ersten Schulter **44** endet. Unterhalb der Schulter **44** liegt der erneut verdickte und relativ lange Mittelabschnitt **40,** dem zuerst ein Zwischensegment **47,** dann ein Dichtungssegment **471** und abschliessend ein unterer Zapfen **49** folgen. Gegenüber dem Mittelabschnitt **40** sind die folgenden Segmente **47,471,49** jeweils im Durchmesser vermindert, wobei der untere Zapfen **49** das Aussengewinde **490** aufweist.

### Figuren 12F und 12G

Die im wesentlichen zylindrische Zwischenhülse **5'** hat an der Kopfpartie eine Aussenprofilierung **50',** z.B. einen Sechskant, und im unteren Bereich ein Aussengewinde **58'** oberhalb dessen sich die Radialnut **57'** befindet. Zwischen der Aussenprofilierung **50'** und der Radialnut **57'** liegt ein zylindrischer Abschnitt **55'** und unterhalb des Aussengewindes **58'** schliesst die Zwischenhülse **5'** mit einem im Aussendurchmesser verminderten Endsegment **56'** ab. Von oben bis unterhalb der Radialnut **57'** durchzieht die Zwischenhülse **5'** ein als Vorschubgewinde dienendes Innengewinde **59',** das an einem inneren Freistrich **54'** endet, dem ein nach innen gerichteter Bund **53'** folgt.

### Figuren 12H und 12J

Das einteilige Kopfstück **6** mit dem Axialdurchgang **69** gliedert sich in einen oberen Stutzen **61,** einen im Aussendurchmesser vergrösserten Flansch **62,** einen im Aussendruchmesser verminderten Zwischenstutzen **63** und den weiter verminderten unteren Stutzen **64.** Oben endet das Kopfstück **6** mit der horizontalen Ringfläche **611,** unterhalb der sich die äussere Radialnut **610** befindet, wobei unter dieser die teilweise horizontale Auflageschulter **613** liegt. Unten schliesst das Kopfstück **6** mit der Unterkante **645** ab. Unterhalb der Schulter **613** ist der obere Stutzen **61** mit einer Aussenprofilierung **60,** z.B. einem Sechskant, versehen. Am Übergang vom Zwischenstutzen **63** zum Flansch **62** liegt die äussere Radialnut **65,** und der Zwischenstutzen **63** besitzt das Aussengewinde **630.**

Im Axialdurchgang **69** beginnt innerhalb der Ringfläche **611** mündend das Innengewinde **618,** das sich bis zur ersten Ringschulter **612** fortsetzt, die etwa auf dem Höhenniveau des Flanschs **62** liegt. Etwa auf dem Höhenniveau der äusseren Radialnut **65** liegt innerhalb des Axialdurchgangs **69** die zweite Ringschulter **672** und nahe der Unterkante **645** befindet sich die innere Radialnut **641.** Jeweils unter den Ringschultern **612,672** vermindert sich der Innendruchmesser des Axialdurchgangs **69.**

### Figuren 12K und 12L

Der im Prinzip scheibenartige Ventilteller **7** hat einen zentrischen Axialdurchgang **79** und eine im wesentlichen horizontale, planförmige Oberseite. Auf der Unterseite ist eine Profilierung **70** vorgesehen, die z.B. aus mehreren radial umlaufenden Sägezähnen besteht.

### Figur 13

Im zusammengebauten Zustand ― hier gezeigt im Nullhub H₀, also in völlig offener Stellung mit maximal eingefahrenem Stössel **4 ―** ergibt sich am Oberteil der *fünften Variante* folgende Anordnung. Die Zwischenhülse **5'** ist mit ihrem Aussengewinde **58'** mit dem Innengewinde **618** des oberen Stutzens **61** des Kopfstücks **6** im Eingriff. Hierbei setzt das untere Ende der Zwischenhülse **5'** auf der ersten Ringschulter **612** am Kopfstück **6** auf und hält mit dem Bund **53'** die Hauptdichtung **89** in Position, welche zunächst aus der fünften Dichtung **85** besteht, die auf der zweiten Ringschulter **672** aufliegt. Oberhalb der fünften Dichtung **85** ist eine zweite Scheibe **94** eingefügt, auf der die sechste Dichtung **86** aufliegt, welche an das untere Ende der Zwischenhülse **5'** angrenzt. Zugleich sind das Aussengewinde **39** am Schaft **34** des Mitnahmeelements **3** und das Innengewinde **59'** der Zwischenhülse **5'** miteinander in Eingriff. Die Innenprofilierung **27** der Aussenhülse **2** hat mit der Aussenprofilierung **30** des Mitnahmeelements **3** Formschluss. Die durch die unteren federnden Zungen **290** elastisch angeordneten Arretierelemente **29** der Aussenhülse **2** sind in die Radialnut **57'** an der Zwischenhülse **5'** eingerastet und die Unterkante **295** des Schafts **24** sitzt auf der Auflageschulter **613** am oberen Stutzen des Kopfstücks **6** auf. Der Freiraum oberhalb der Ringfläche **611** zwischen den Zungen **290** und der Innenwandung des Schafts **24** erlaubt das Aufbiegen der Zungen **290** nach aussen beim Aufstecken bzw. Abziehen der Aussenhülse **2** auf die Zwischenhülse **5'** und den oberen Stutzen **61.**

In der Kombination aus Kopfstück **6,** Zwischenhülse **5** und Mitnahmeelement **3** steckt der Stössel **4,** welcher mit seinem Mittelabschnitt **40** die Hautdichtung **89** durchragt und an seinem Zwischensegment **47** und unteren Zapfen **49** den Ventilteller **7** mit der ersten Dichtung **81** trägt. Das Zwischensegment **47** steckt im Axialdurchgang **79** des Ventiltellers **7,** gegen dessen Unterseite die erste Dichtung **81** angesetzt ist, wobei das Dichtungssegment **471** des Stössels **4** die Dichtung **81** durchragt. Gegen die Unterseite der Dichtung **81** ist die erste Scheibe **93** gelegt, welche mittels der auf das Aussengewinde **490** des unteren Zapfens **49** aufgeschraubten ersten Mutter **91** gesichert ist. In die innere Radialnut **641** ist die dritte Dichtung **83** eingebettet, die den Mittelabschnitt **40** umfasst, wobei im gegenwärtigen Zustand der ansonsten überstehende untere Bereich der dritten Dichtung **83** von der Oberseite des Ventiltellers **7** maximal in die innere Radialnut **641** eingedrückt wird. Vom Niveau der Unterkante **645** bis zum Beginn der Hauptdichtung **89** ist wiederum der Innenabstand a gegeben.

Das Aussengewinde **630** am Zwischenstutzen **63** dient der Verbindung mit einem komplementären Innengewinde im Ventilkörper, auf dem der Flansch **62** mit Abdichtung durch die in der äusseren Radialnut **65** liegende vierte Dichtung **84** zu liegen kommt. Zum Einschrauben des Kopfstücks **6** ist die Aussenprofilierung **60** am oberen Stutzen **61** vorgesehen. Zur Hemmung unbeabsichtigter Rotation der mit dem Handgriff **1** ein Stück bildenden Aussenhülse **2** wirkt das in der Radialnut **610** eingesetzte ringförmige Element **88,** welches mit der Innenfläche des Schafts **24** in Reibschluss steht. Die Unterkante **345** des Mitnahmeelements **3** sitzt auf der ersten Schulter **44** des Stössels **4.** Auf den Kragen **32** ist die fünfte Scheibe **97** aufgelegt, welche mit einem Sicherungselement **92,** das in die Ringnut **421** eingreift, niedergehalten wird. Der erste Fortsatz **41** kommt im Bereich des Freischnitts **35** zu liegen, während der zweite Fortsatz **42** das Mitnahmeelement **3** im Bereich des Kopfes **37** durchragt. In der gegenwärtigen Stellung ragt der obere Zapfen **43** aus dem Durchgangsloch **21** der von oben in den Axialdurchgang **119** eingesetzten Deckfläche **22** hervor und signalisiert damit optisch und ertastbar eine Stellung des Oberteils zumindest nahe dem Nullhub **H₀.**

Bei Drehung am Handgriff **1,** aus der Stellung im Nullhub **H₀** nur in Richtung Teilhub **H₁** bzw. Maximalhub **Hₘₐₓ** möglich, folgt der Schaft **24** der Aussenhülse **2** und versetzt durch den Eingriff zwischen Innenprofilierung **27** und Aussenprofilierung **30** das Mitnahmeelement **3** in äquivalente Drehung. Hierdurch schraubt sich das Mitnahmeelement **3** durch den Eingriff der Gewinde **39,59'** tiefer in die im Kopfstück **6** feststehende Zwischenhülse **5'** hinein. Zugleich gleiten Innenprofilierung **27** und Aussenprofilierung **30** axial ineinander. Simultan schiebt das Mitnahmeelement **3** mit seiner auf der ersten Schulter **44** des Stössels **4** aufsitzenden Unterkante **345** den Stössel **4** nach aussen, hin zum Maximalhub **Hₘₐₓ.** Während der Drehung gleiten die Arretierelemente **29** in der Radialnut **57'** und die Innenwandung des Schafts **24** am Hemmelement **88.** Der maximal mögliche Hub **Hₘₐₓ** ist vorzugsweise durch das Anschlagen der Unterkante **345** auf dem Bund **53'** und/oder das Aufsetzen des Kopfes **37** auf der Oberseite der Zwischenhülse **5'** begrenzt, jedoch so dimensioniert, dass ein vollständiger Verschluss des Ventils erreicht wird. Mit der Bewegung aus dem Nullhub **H₀** heraus und der sich entfernenden Oberseite des Ventiltellers **7,** kann sich die dritte Dichtung **83** über die Unterkante **645** hinaus auswölben. Der obere Zapfen **43** zieht sich in das Innere des Oberteils zurück, woraus erkennbar ist, dass die Stellung Nullhub **H₀** verlassen wurde. Der Stössel **4** ist so im Oberteil angeordnet, dass sich dieser zumindest in unmittelbarer Nähe des Maximalhubs **Hₘₐₓ,** d.h. beim Aufsetzen der ersten Dichtung **81** auf den Ventilsitz und Überschreiten eines definierten Reibwiderstands nicht mehr mitdreht, sondern nur mehr die restliche Axialbewegung ausführt.

Zur Schonung der im Paket aus den Elementen **85,94,86** zusammengesetzten Hauptdichtung **89** ist die beim Maximalhub **Hₘₐₓ** ausfahrende Länge des Mittelabschnitts **40** des Stössels **4** kürzer dimensioniert als der Innenabstand a. Damit ist ausgeschlossen, dass dem Strömungsmedium ausgesetzte Oberfläche des Mittelabschnitts **40** beim Zurückfahren in den Nullhub **H₀** die Hauptdichtung **89** beschädigt.

Die maximal mögliche Bewegung in den Nullhub **H₀** ist so dimensioniert, dass die Oberseite des Ventiltellers **7** die Auswölbung der dritten Dichtung **83** verdrängt und jeden Hohlraum vermeidet, um keine Zwischenräume als Totraum für das Entstehen von Verunreinigungen zu belassen. Beim Fahren in Richtung Nullhub **H₀** schleppt das sich aufwärts bewegende Mitnahmeelement **3,** dessen Oberseite gegen den Verbund aus fünfter Scheibe **97** und Sicherungselement **52** anschlägt, den Stössel **4** mit aufwärts.

### Figuren 14A und 14B

Die hier gezeigte *sechste Variante* des Oberteils unterscheidet sich äusserlich, abgesehen von der Dimensionierung, kaum von seiner *fünften Variante.* Handgriff **1** und Aussenhülse **2** bilden wiederum ein gemeinsames Teil, wonach von der Unterseite des Handgriffs **1** der hülsenförmige Schaft **24** der Aussenhülse 2 abgeht. Auch dieses Oberteil besteht aus einem Kopfstück **6** mit dem oberen Stutzen **61** mit der Aussenprofilierung **60,** dem folgenden Flansch **62,** dem Zwischenstutzen **63,** dem unteren Stutzen **64,** einem Ventilteller **7,** der daran angeordneten ersten Dichtung **81,** sowie den unteren Teilen mit erster Scheibe **93** und der auf den unteren Zapfen **49** des Stössels **4** aufgeschraubten ersten Mutter **91.** Unter dem Flansch **62** liegt die äussere Radialnut **65** zur Aufnahme der vierten Dichtung **84,** welche die Abdichtung des in den Ventilkörper eingesetzten Oberteils bewirkt. Momentan hat das Oberteil seinen Nullhub **H₀**, also befindet sich in total offener Stellung mit maximal eingefahrenem Stössel **4,** was durch den aus der Deckfläche **22** durch das Durchgangsloch **21** des Handgriffs **1** heraustretenden oberen Zapfen **43** des Stössels **4** signalisiert wird.

### Figuren 15A und 15B

Jetzt befindet sich das Oberteil im Maximalhub **Hₘₐₓ,** in gänzlich geschlossener Stellung mit maximal ausgefahrenem Stössel **4.** Dabei ragt der untere Bereich des Mittelabschnitts **40** des Stössels **4** aus dem unteren Stutzen **64** heraus, in dem die dritte Dichtung **83** eingesetzt ist, welche den Mittelabschnitt **40** ummantelt. Der Stellbereich in Richtung des Maximalhubs **Hₘₐₓ,** ist durch den in der Deckfläche **22** im Durchgangsloch **21** des Handgriffs **1** versenkten oberen Zapfen **43** des Stössels **4** äusserlich sichtbar.

### Figuren 16A und 16B

Das Oberteil der *sechste Variante* besteht in der Abfolge von oben nach unten zunächst aus dem Handgriff **1** mit der von oben einsetzbaren Deckfläche **22** und der sich von der Unterseite des Handgriffs **1** erstreckenden Aussenhülse **2,** die als wesentliches den Schaft **24** hat, wobei Handgriff **1** und Aussenhülse **2** ein Stück bilden. Das Oberteil besitzt ferner ein achtes Element **88** als Rotationssicherung, eine zweite Mutter **92** als Sicherungselement, eine fünfte Scheibe **97,** das Mitnahmeelement **3,** die Hauptdichtung **89 ―** mit sechster Dichtung **86,** zweiter Scheibe **94** und fünfter Dichtung **85 ―**, den Stössel **4,** das Kopfstück **6,** die vierte Dichtung **84,** die dritte Dichtung **83,** den Ventilteller **7,** die erste Dichtung **81,** die erste Scheibe **93** und die erste Mutter **91.** Gegenüber der *fünften Variante* wird nun keine Zwischenhülse **5'** benötigt, jedoch zum Niederhalten der Hauptdichtung **89** ein erster Sicherungsring **98** und eine vierte Scheibe 96 als Unterlage zwischen dem Kragen **32** des Mitnahmeelements **3** und der ersten Schulter **44** am Stössel **4.**

### Figuren 17A und 17B

An der Oberseite des Handgriffs **1** tritt zentrisch der kreisförmige Axialdurchgang **119** aus, in den von oben die Deckfläche **22** einsetzbar ist. Vom Axialdurchgang **119** erstrecken sich speichenförmig radiale Rippen in den Aussenbereich und gehen in den abwärts gerichteten Randsteg **113** über. Zentrisch von der Unterseite des Handgriffs 1 geht die abwärts weisende Aussenhülse **2** mit dem Schaft **24** ab, der im unteren Drittel eine Ringnut **293** hat, die nach unten von einem Bund **294** begrenzt wird. Vom Bund **294** erstreckt sich eine Vielzahl axial gerichteter unterer Zungen **290,** die einen Kranz bilden und durch Zwischenräume elastisch bewegbar sind. An den freien Enden besitzt jede Zunge **290** ein nach aussen orientiertes Arretierelement **29** von hakenartigem Querschnitt. An der Innenwandung des Schafts **24** gibt es die Innenprofilierung **27,** welche aus sternförmig angeordneten Rippen **27** besteht, die sich von nahe der Mündung des Axialdurchgangs **119** im Handgriff **1** bis zum Ansatz der Zungen **290** erstrecken.

### Figuren 17C und 17D

Die Innenhülse **3** hat einen kegelförmig zulaufenden Kragen **32** mit oberer Planfläche, die ein zentrisches Durchgangsloch **31** umrandet. An der Aussenfläche des Schafts **34** der Innenhülse **3** verläuft vom Kragen **32** bis zu einer Freifläche **36** die aus Stegen und dazwischen liegenden Nuten bestehende Aussenprofilierung **30,** wobei die Freifläche **36** im Aussendurchmesser reduziert ist und sich etwa über das untere Drittel des Schafts **34** erstreckt. Der Schaft **34** schliesst am zum Kragen **32** gegenüber liegenden Ende mit der Unterkante **345** ab. An der Innenwandung des Schafts **34** befindet sich das Innengewinde **38.**

### Figur 17E

Der stabförmige Stössel **4** hat einen relativ langen Mittelabschnitt **40,** der oben an einer ersten Schulter **44** endet, von der sich ein im Durchmesser verkleinerter erster Fortsatz **41** bis zu einer zweiten Schulter **45** erstreckt. Hier schliesst sich ein zweiter, im Durchmesser kleinerer Fortsatz **42** mit einem Aussengewinde **420** an, die an einer dritten Schulter **46** enden, von der sich ein erneut im Durchmesser verkleinerter oberer Zapfen **43** erstreckt. Nach unten schliesst sich an den Mittelabschnitt **40** zuerst ein Zwischensegment **47,** dann ein Dichtungssegment **471** und zuletzt ein unterer Zapfen **49** an. Im Verhältnis zum Mittelabschnitt **40** haben die folgenden Segmente **47,471,49** einen jeweils verminderten Durchmesser, wobei der untere Zapfen **49** das Aussengewinde **490** besitzt. Der Stössel **4** ist vorzugsweise aus Chromstahl und hat runden Querschnitt.

### Figuren 17H und 17J

Bei der hier gezeigten *sechsten Variante* wird gegenüber der *fünften Variante* (s. Figuren 5O und 5P) kein Innengewinde **618** am oberen Stutzen **61** benötigt. Anstelle des Innengewindes **618** ist jetzt die erste Ringschulter **612** näher an der Ringfläche **611** positioniert und auf dem Niveau des Flanschs **62,** quasi gegenüber der äusseren Radialnut **65,** ist eine innere Radialnut **650** von keilförmiger Kontur angeordnet. Zugleich hat die innere Radialnut **671** am Innenstutzen **67** ebenfalls eine keilförmige Kontur erhalten. Die Nuten **650,671** laufen abwärts jeweils schräg zu den Innenwandungen des Zwischenstutzens **63** bzw. des Innenstutzens **67** und haben von oben betrachtet jeweils einen kantigen Hinterschnitt.

### Figur 18

Im zusammengebauten Zustand ― hier gezeigt im Nullhub **H₀,** d.h. in völlig offener Stellung mit maximal eingefahrenem Stössel **4 ―** ergibt sich am Oberteil der *sechsten Variante* folgende Anordnung. Das Mitnahmeelement **3** ist mit seinem Innengewinde **38** mit dem Aussengewinde **68** des Innenstutzens **67** des Kopfstücks **6** im Eingriff. Über das Mitnahmeelement **3** ist der Schaft **24** der Aussenhülse **2** mit dem daran oben angeordneten Handgriff **1** gesteckt. Hierbei kommen die Aussenprofilierung **30** des Mitnahmeelements **3** und die Innenprofilierung **27** im Schaft **24** miteinander in drehfesten Eingriff und die Arretierelemente **29** sind in die innere Radialnut **650** am Kopfstück **6** eingehakt, so dass sich Handgriff **1** mit Aussenhülse **2** auf dem Kopfstück **6** drehen lassen, aber axial fixiert sind. Der Freiraum **66** zwischen den unteren Zungen **290** und der Aussenwandung des Innenstutzens **67** erlaubt das elastische Einwärtsbiegen der unteren Zungen **290** während des Aufsteckens und Abziehens der Aussenhülse **2** auf das Kopfstück **6.** Als Antirotationssicherung dient das in der Ringnut **293** liegende Element **88,** welches mit der Innenwandung des oberen Stutzens **61** Reibschluss hat. Die Paketanordnung der Hauptdichtung **89 ―** bestehend aus fünfter Dichtung **85,** zweiter Scheibe **94** und sechster Dichtung **86 ―,** die auf der zweiten Ringschulter **672** aufsitzt, wird von einem im Prinzip korbförmigen Sicherungselement **98** niedergehalten, wobei sich dessen oberes Segment in der inneren, hinterschnittenen Radialnut **671** abstützt.

Kopfstück **6** und Mitnahmeelement **3** werden axial vom Stössel **4** durchragt, der axial feststehend am Mitnahmeelement **3** fixiert ist. Hierzu liegt auf der ersten Schulter **44** die vierte Scheibe **96** auf, auf welcher der Kragen **32** sitzt, und über dem Kragen **32** steckt die fünfte Scheibe **97** auf dem zweiten Fortsatz **42,** auf den die zweite Mutter **92** geschraubt ist. Der erste Fortsatz **41** des Stössels **4** kommt im Durchgangsloch **31** zu liegen und der obere Zapfen **43** ragt beim Nullhub **H₀** aus dem Durchgangsloch **21** der Deckfläche **22** heraus. Die Anordnung der vierten Dichtung **84** in der äusseren Radialnut **65,** der dritten Dichtung **83** im unteren Stutzen **64** und des Ventiltellers **7** mit der ersten Dichtung **81** auf dem Zwischensegment **47** und dem unteren Zapfen **49** des Stössels **4** ist mit der *fünften Variante* (s. Figur 13) identisch.

Bei Drehung am Handgriff **1,** aus der Stellung im Nullhub **H₀** nur in Richtung Teilhub **H₁** bzw. Maximalhub **Hₘₐₓ** möglich, wird der Schaft **24** der Aussenhülse **2** aufgrund der Einstückigkeit von Handgriff **1** und Aussenhülse **2** mitgenommen und versetzt durch den Eingriff zwischen Innenprofilierung **27** und Aussenprofilierung **30** das Mitnahmeelement **3** gleichzeitig in gleichsinnige Drehung. Hierdurch schraubt sich das Mitnahmeelement **3** durch den Eingriff der Gewinde **38,68** tiefer in das Kopfstück **6** hinein, wobei mit weiterer Betätigung schliesslich die Unterkante **345** in den sackförmigen Freiraum **66** einfährt. Zugleich gleiten Innenprofilierung **27** und Aussenprofilierung **30** axial ineinander. Das sich abwärts bewegende Mitnahmeelement **3** zieht dabei den am Kragen **32** axial fixierten Stössel **4** sukzessive aus dem Kopfstück **6** heraus bis der Maximalhub **Hₘₐₓ** erreicht wäre. Während der Drehung gleiten die Arretierelemente **29** in der inneren Radialnut **650.** Der maximal mögliche Hub **Hₘₐₓ** ist vorzugsweise durch das Anschlagen der Oberkante des Innenstutzens **67** von unten gegen den Kragen **32** und/oder das Aufsetzen der Unterkante **345** am Boden des Freiraums **66** begrenzt, jedoch so dimensioniert, dass ein vollständiger Verschluss des Ventils erreicht wird. In gegengesetzter Betätigungsrichtung, also Fahren zum Nullhub **H₀** hin, schraubt sich das Mitnahmeelement **3** aufwärts und zieht dabei den Stössel **4** in gleiche Richtung mit.

Die Signalisation des oberen Zapfens **43,** die Verformung der dritten Dichtung **83** und das Anhalten des eventuellen Mitdrehens des Stössels **4** zur Schonung der ersten Dichtung **81** bei Bewegung aus dem Nullhub **H₀** heraus sind mit den vorangehenden Varianten identisch. Analog garantiert der Innenabstand a wiederum, dass dem Strömungsmedium ausgesetzte Oberfläche des Mittelabschnitts **40** beim Zurückfahren in den Nullhub **H₀** nicht die Hauptdichtung **89** beschädigen kann. Auf gleiche Weise, wie bei den Vorgängervarianten, wird beim Nullhub **H₀** Totraum zwischen der Oberseite des Ventiltellers **7** und der Unterkante **645** des Kopfstücks **6** mit der darin sitzenden dritten Dichtung **83** vermieden.

## Patentansprüche

1. Ventil für Wasser mit einem in einen Ventilkörper einzusetzenden Oberteil mit:
a) einem Kopfstück **(6)** mit einem Axialdurchgang **(69);**
b) einer Aussenhülse **(2),** die direkt oder indirekt am Kopfstück **(6)** drehbar gelagert und axial fixiert ist;
c) einen zwischen einem Nullhub **(H₀)** und einem Maximalhub **(Hₘₐₓ)** beweglichen Stössel **(4),** der:
ca) im Kopfstück **(6)** und der Aussenhülse **(2)** konzentrisch axial beweglich angeordnet ist und direkt im Axialdurchgang **(69)** des Kopfstücks **(6)** geführt ist;
cb) mit einer ersten Dichtung **(81)** versehen ist, welche am auf einen Ventilsitz im Ventilkörper gerichteten Ende **(47,49)** des Stössels **(4)** angeordnet ist und zur Absperrung des Ventils dient; und
cc) von einer Hauptdichtung **(89)** umgeben ist, welche im Kopfstück **(6)** sitzt; und
d) einen drehbaren Handgriff **(1)** zur Betätigung des Oberteils, wobei die Aussenhülse **(2)** einerseits direkt mit dem Handgriff **(1)** und andererseits direkt mit einem Mitnahmeelement **(3)** verbunden ist, und das Mitnahmeelement **(3)** äusserlich eine Aussenprofilierung **(30)** aufweist **(3)** und axial fest am Stössel **(4)** angeordnet ist; wobei
e) die Aussenhülse **(2)** einen in Richtung der ersten Dichtung **(81)** offenen Schaft **(24)** aufweist, der innerlich eine Innenprofilierung **(27)** hat;
f) die Innenprofilierung **(27)** der Aussenhülse **(2)** mit der Aussenprofilierung **(30)** des Mitnahmeelements **(3)** radialen Formschluss hat und das in der Aussenhülse **(2)** geführte Mitnahmeelement **(3)** axial verschiebbar ist;
g) ein feststehendes Vorschubgewinde **(68,59')** vorhanden ist, das sich direkt oder indirekt am Kopfstück **(6)** befindet, **dadurch gekennzeichnet, dass**
h) das Mitnahmeelement **(3)** ein Gewinde **(38,39)** hat;
i) das Gewinde **(38,39)** des Mitnahmeelements **(3)** und das Vorschubgewinde **(68,59')** in Eingriff sind; und
j) bei Betätigung des Handgriffs **(1)** das Mitnahmeelement **(3)** am Stössel **(4)** zumindest soweit radial lose angeordnet ist, dass ab einem definierten Mindestreibwiderstand zwischen der ersten Dichtung **(81)** und dem Ventilsitz der Stössel **(4)** radial blockiert ist, sodass der Stössel **(4)** nicht mehr mit dem Mitnahmeelement **(3)** mitdreht.

2. Ventil nach Anspruch 1, **dadurch gekennzeichnet, dass**
a) das Mitnahmeelement **(3)** von hülsenförmiger Gestalt mit einem in Richtung der ersten Dichtung **(81)** offenen Schaft **(34)** ist und andererseits Befestigungsmittel **(31,32)** zur Verbindung mit dem Stössel **(4)** besitzt; und
b) das Gewinde **(38)** am Mitnahmeelement **(3)** innerlich als Innengewinde **(38)** gestaltet ist und das feststehende Vorschubgewinde **(68)** sich direkt am Kopfstück **(6)** befindet; oder
c) das Gewinde **(39)** am Mitnahmeelement **(3)** äusserlich als Aussengewinde **(39)** gestaltet ist und das feststehende Vorschubgewinde **(59')** als Innengewinde **(59')** beschaffen ist, welches sich direkt am Kopfstück **(6)** oder an einer in das Kopfstück **(6)** eingesetzten Zwischenhülse **(5')** befindet.

3. Ventil nach zumindest einem der Ansprüche 1 und 2, **dadurch gekennzeichnet, dass** die Hauptdichtung **(89)** mit einem Innenabstand **(a)** im Kopfstück **(6)** mindestens soweit rückversetzt angeordnet ist, dass bei keiner Stellung des Stössels **(4)** zwischen Null- und Maximalhub **(H₀,Hₘₐₓ)** dem Strömungsmedium ausgesetzte Oberfläche des Stössels **(4)** an die Hauptdichtung **(89)** gelangt.

4. Ventil nach zumindest einem der Ansprüche 1 bis 3, **dadurch gekennzeichnet, dass**
a) in der zur ersten Dichtung **(81)** gerichteten Mündung des Kopfstücks **(6)** eine dritte Dichtung **(83)** eingesetzt ist, die einen langgestreckten Mittelabschnitt **(40)** des herausragenden Stössels **(4)** umgibt und zwischen dem Kopfstück **(6)** und dem Stössel **(4)** eine radiale sowie axiale Abdichtung bewirkt; und
b) die dritte Dichtung **(83)** im unbelasteten Zustand einen über die das Kopfstück **(6)** abschliessende Ebene hervortretenden Überstand besitzt, welcher sich beim Nullhub **(H₀)** mit der weitestmöglich eingefahrenen Stellung des Stössels **(4)** durch die angepresste Rückseite eines die erste Dichtung **(81)** tragenden Ventiltellers **(7)** in die Ebene verformt, so dass zwischen der Rückseite des Ventiltellers **(7)** und der abschliessenden Ebene des Kopfstücks **(6)** umschlossener Totraum vermieden wird.

5. Ventil nach mindestens einem der Ansprüche 1 bis 4, **dadurch gekennzeichnet, dass**
a) das Befestigungsmittel **(31,32)** zur Verbindung des Mitnahmeelements **(3)** mit dem Stössel **(4)** einen sich an den Schaft **(34)** anschliessenden Kragen **(32)** mit einem darin zentrisch angeordneten Durchgangsloch **(31)** umfasst; und
b) im Durchgangsloch **(31)** ein vorzugsweise im Durchmesser verjüngter erster axialer Fortsatz **(41)** des Stössels **(4)** steckt, an den sich ein zweiter axialer Fortsatz **(42)** anschliesst, der axial auf dem Kragen **(32)** fixiert ist, z.B. mittels eines am zweiten Fortsatz **(42)** vorhandenen Aussengewindes **(420)** oder einer Ringnut **(421),** worauf ein Sicherungselement **(92)** in Gestalt einer zweiten Mutter **(92)** oder eines Sicherungsrings **(92)** fixiert ist.

6. Ventil nach mindestens einem der Ansprüche 1 bis 5, **dadurch gekennzeichnet, dass** das Befestigungsmittel **(31,32)** zur Verbindung des Mitnahmeelements **(3)** mit dem Stössel **(4)** eine Rutschkupplung umfasst, z.B. mittels einer Tellerfeder realisiert, welche bei Überschreiten eines definierten Reibwiderstands zwischen der ersten Dichtung **(81)** und dem Ventilsitz auskuppelt, so dass der Stössel **(4)** radial blockiert verharrt.

7. Ventil nach mindestens einem der Ansprüche 1 bis 6, **dadurch gekennzeichnet, dass** der Stössel **(4)** am zum Handgriff **(1)** weisenden Ende mit einem oberen Zapfen **(43)** abschliesst, der beim Nullhub **(H₀)** mit der weitestmöglich eingefahrenen Stellung des Stössels **(4)** in einem Durchgangsloch **(21,116)** in der Deckfläche **(22)** der Aussenhülse **(2)** oder dem Handgriff **(1)** zu liegen kommt, vorzugsweise aus dem Durchgangsloch **(21,116)** hervorsteht, und somit ein eingestellter Nullhub **(H₀)** optisch und durch Abtasten wahrnehmbar ist.

8. Ventil nach mindestens einem der Ansprüche 1 bis 7, **dadurch gekennzeichnet, dass**
a) der Handgriff **(1)** mit der Aussenhülse **(2)** einstückig verbunden oder an der Aussenhülse **(2)** lösbar und drehfest angeordnet ist;
b) der Handgriff **(1)** sich aus einem ersten halbschalenartigen Griffteil **(11)** und einem zweiten halbschalenartigen Griffteil **(12)** zusammensetzt; und
c) zur Befestigung des zweiteiligen Handgriffs **(1)** an der Aussenhülse **(2)** vorgesehen sind:
ca) an der Aussenhülse **(2)** eine Aussenprofilierung **(20),** die sich am Ende des Schafts **(24)** befindet, welcher an die Deckfläche **(22)** angrenzt, sowie eine unterhalb der Aussenprofilierung **(20)** vorhandene Radialnut **(23);**
cb) am ersten und zweiten Griffteil **(11,12)** je ein zentrischer Axialdurchgang **(119,129),** der jeweils von einer Innenprofilierung **(110,120)** umrandet ist; wobei
cc) das erste Griffteil **(11)** unten an der Innenprofilierung **(110)** ein zirkuläres Rastorgan **(111)** in Gestalt einer Ringwulst oder einzelner Rastnasen hat;
cd) die Innenprofilierung **(110)** des ersten Griffteils **(11)** mit der Aussenprofilierung **(20)** an der Aussenhülse (2) in formschlüssigem Eingriff steht;
ce) die Innenprofilierung **(120)** des zweiten Griffteils **(12)** sich über die Aussenprofilierung **(20)** der Aussenhülse **(2)** schieben lässt, um das zweite Griffteil **(12)** auf das Niveau der Radialnut **(23)** zu bringen; und
cf) zwischen beiden Griffteilen **(11,12)** in die Radialnut **(23)** ein zweiter Sicherungsring **(99)** eingefügt ist, der an seinem Aussenumfang einen Überhang **(991)** aufweist, welchen das Rastorgan **(111)** zur axialen Sicherung des Handgriffs **(1)** auf der Aussenhülse **(2)** unterfasst.

9. Ventil nach mindestens einem der Ansprüche 1 bis 8, **dadurch gekennzeichnet, dass**
a) die Innenprofilierung **(27)** an der Aussenhülse **(2)** sowie die Aussenprofilierung **(30)** am Mitnahmeelement **(3)** Längsverzahnungen sind;
b) die Längsverzahnung an der Aussenhülse **(2)** z.B. von sternförmig, radial, zentrisch orientierten Rippen gebildet wird; und
c) die Aussenhülse **(2)** zusätzlich eine Aussenprofilierung **(20)** besitzt, sofern der Handgriff **(1)** und die Aussenhülse **(2)** separate Teile sind.

10. Ventil nach mindestens einem der Ansprüche 1 bis 9, **dadurch gekennzeichnet, dass** die Hauptdichtung **(89)** aus einem im Paket aneinander angeordneten Bauteilen besteht, nämlich:
a) einer fünften Dichtung **(85),** einer zweiten Scheibe **(94)** und einer sechsten Dichtung **(86);** wobei
aa) die fünfte Dichtung **(85)** auf einer Ringschulter **(672)** eines das Kopfstück **(6)** konzentrisch durchragenden Innenstutzens **(67)** aufsitzt, durch den sich ein Axialdurchgang **(69)** erstreckt;
ab) gegen die sechste Dichtung **(86)** ein erster Sicherungsring **(98)** in eine innere Radialnut **(671)** im Innenstutzen **(67)** eingesetzt ist; und
ac) zwischen der sechsten Dichtung **(86)** und dem ersten Sicherungsring **(98)** eine dritte Scheibe **(95)** angeordnet sein kann; oder
b) einer fünften Dichtung **(85),** einer zweiten Scheibe **(94)** und einer sechsten Dichtung **(86);** wobei
ba) die fünfte Dichtung **(85)** auf einer im Kopfstück **(6)** liegenden Ringschulter **(672)** aufsitzt;
bb) gegen die sechste Dichtung **(86)** die in das Kopfstück **(6)** eingesetzte Zwischenhülse **(5')** einen direkten oder mit Zwischenfügung eines ersten Sicherungsrings **(98')** indirekten Niederhalter bildet, und
bc) von der Zwischenhülse **(5')** ein Bund **(53')** sich auf einer inneren Ringschulter **(612)** im Kopfstück **(6)** abstützt bzw. der erste Sicherungsring **(98')** auf der inneren Ringschulter **(612)** aufgelegt ist.

11. Ventil nach mindestens einem der Ansprüche 1 bis 10, **dadurch gekennzeichnet, dass**
a) der Aussenstutzen **(61,62,63)** des Kopfstücks **(6)** sich aus einem oberen Stutzen **(61),** einem daran anschliessenden, im Aussendurchmesser vergrösserten Flansch **(62)** und einem an letzteren ansetzenden Zwischenstutzen **(63)** einteilig zusammensetzt;
b) der obere Stutzen **(61)** aussen eine Aussenprofilierung **(60)** besitzt, z.B. einen Sechskant zum Ansetzen eines Schraubenschlüssels;
c) der Flansch **(62)** im montierten Zustand zum Aufsetzen auf den Ventilkörper bestimmt ist; und
d) der Zwischenstutzen **(63)** ein Aussengewinde **(630)** hat, das dem Einschrauben des Oberteils in den Ventilkörper dient.

12. Ventil nach zumindest einem der Ansprüche 1 bis 11, **dadurch gekennzeichnet, dass**
a) der Innenstutzen **(67)** als Vorschubgewinde **(68)** das Aussengewinde **(68)** besitzt und vom Aussenstutzen **(61,62,63)** mit einem dazwischen liegenden radialen, sacklochförmigen Freiraum **(66)** umfasst ist, der dem anteiligen Schaft **(34)** des Mitnahmeelements **(3)** Platz bietet; und
b) zur axialen Fixierung und drehbaren Lagerung der Aussenhülse **(2)** am Kopfstück **(6):**
ba) ein Haltering **(5)** in Gestalt eines Gewinderings mit einer Unterkante vorgesehen ist, die auf einem im Aussendurchmesser verdickten Bund **(26)** der Aussenhülse **(2)** aufsitzt, wobei ein Aussengewinde **(58)** des Halterings **(5)** in ein Innengewinde **(618)** am Kopfstück **(6)** eingreift; oder
bb) ein Haltering **(5)** mit einer Unterkante vorgesehen ist, die auf einem im Aussendurchmesser verdickten Bund **(26)** der Aussenhülse **(2)** aufsitzt, wobei Arretierelemente des Halterings **(5)** in Konturen am Kopfstück **(6)** eingreifen; oder
bc) sich am unteren Bereich der Aussenhülse **(2)** Arretierelemente **(29)** befinden, die in das Kopfstück **(6)** eingreifen.

13. Ventil nach Anspruch 12, **dadurch gekennzeichnet, dass**
a) sich vom unteren Bereich der Aussenhülse **(2)** ein zylindrischer Kranz von einzelnen elastischen Zungen **(290)** erstreckt, an denen zuunterst, nach aussen weisend die Arretierelemente **(29)** in Gestalt von Keilkonturen angeordnet sind;
b) zum Eingriff der Arretierelemente **(29)** am Kopfstück **(6)** eine zum Freiraum **(66)** hin offene Radialnut **(650)** vorhanden ist.

14. Ventil nach Anspruch 13, **dadurch gekennzeichnet, dass**
a) der untere Bereich der Aussenhülse **(2),** oberhalb der abgehenden Zungen **(290)** einen Bund **(294)** besitzt, oberhalb dessen eine nach aussen offene Ringnut **(293)** zur Aufnahme eines achten Elements **(88)** liegt, weiches zur Hemmung der Aussenhülse **(2)** gegen unbeabsichtigte Rotation, z.B. infolge von Vibration, dient;
b) im montierten Zustand der Bund **(294)** zum Aufsetzen auf einer Ringschulter **(612)** bestimmt ist, welche sich innerlich des oberen Stutzens **(61)** befindet.

15. Ventil nach zumindest einem der Ansprüche 1 bis 11, **dadurch gekennzeichnet, dass**
a) sich innerlich des unteren Bereichs der Aussenhülse **(2)** ein zylindrischer Kranz von einzelnen elastischen Zungen **(290)** befindet, an denen zuunterst, nach innen weisend die Arretierelemente **(29)** in Gestalt von Keilkonturen angeordnet sind;
b) zum Eingriff der Arretierelemente **(29)** an der Zwischenhülse **(5')** eine äussere Radialnut **(57')** vorhanden ist.

16. Ventil nach Anspruch 15, **dadurch gekennzeichnet, dass**
a) die elastischen Zungen **(290)** sich von einem innerlich des Schafts **(24)** radial verlaufenden Mittelsteg **(291)** beabstandet zur Innenwandung des Schafts **(24)** erstrecken;
b) die Aussenhülse **(2)** zuunterst mit einer Unterkante **(295)** abschliesst, die im montierten Zustand auf einer Auflageschulter **(613)** aufsitzt, welche sich am oberen Stutzen **(61)** des Kopfstücks **(6)** befindet; und
c) oberhalb der Auflageschulter **(613)** eine Radialnut **(610)** zur Aufnahme eines achten Elements **(88)** liegt, das vom unteren Bereich der Aussenhülse **(2)** umfasst wird und zur Hemmung der Aussenhülse **(2)** gegen unbeabsichtigte Rotation, z.B. infolge von Vibration, dient.

17. Ventil nach zumindest einem der Ansprüche 1 bis 12, 15 und 16, **dadurch gekennzeichnet, dass** der obere Stutzen **(61)** des Kopfstücks **(6)** intern ein Innengewinde **(618)** zur Verbindung mit einem an der Zwischenhülse **(5')** vorhandenen Aussengewinde **(58')** oder einem am Haltering **(5)** vorgesehenen Aussengewinde **(58)** besitzt.

18. Ventil nach mindestens einem der Ansprüche 1 bis 11 und 17, **dadurch gekennzeichnet, dass** zumindest ein radial durch Offnungen **(260,261)** im Bund **(26)** der Aussenhülse **(2)** eingebrachtes Arretierelement **(29)** vorgesehen ist, das in die Zwischenhülse **(5')** axial sichernd in eine Radialnut **(57')** eingreift.

19. Ventil nach mindestens einem der Ansprüche 1 bis 18, **dadurch gekennzeichnet, dass**
a) der Stössel **(4)** aus Chromstahl besteht und über seinen langgestreckten Mittelabschnitt **(40)** von rundem Querschnitt ist;
b) vom Mittelabschnitt **(40)** über eine erste Radialschulter **(44)** zum ersten Fortsatz **(41),** von hier über eine optionale zweite Radialschulter **(45)** zum zweiten Fortsatz **(42)** und von hier über eine dritte Radialschulter **(46)** zum oberen Zapfen **(43),** die Aussendurchmesser jeweils vermindert sind;
c) der Stössel **(4)** am zur ersten Dichtung **(81)** gerichteten Ende, im Anschluss an den Mittelabschnitt **(40)** einen Hinterschnitt **(48)** haben kann, dem ein Zwischensegment **(47),** von z.B. nicht-rotationssymmetrischem Querschnitt mit Abflachungen **(470),** für die Aufnahme des Ventiltellers **(7)** folgt, an das sich ein unterer Zapfen **(49)** zur Aufnahme des Ventiltellers **(7)** anschliesst; und
d) der untere Zapfen **(49)** am Stössel **(4)** ein Aussengewinde **(490)** zum Aufschrauben einer ersten Mutter **(91)** haben kann, wodurch der die erste Dichtung **(81)** tragende Ventilteller **(7)** gesichert ist.

20. Ventil nach mindestens einem der Ansprüche 1 bis 19, **dadurch gekennzeichnet, dass** der Ventilteller **(7)**
a) einen zum Querschnitt des Zwischensegments **(47)** des Stössels **(4)** komplementären Axialdurchgang **(79)** hat, wobei der Stössel **(4)** und das Zwischensegment **(47)** z.B. jeweils mit Abflachungen **(470,790)** versehen sein können;
b) an der der ersten Dichtung **(81)** zugewandten Seite eine Profilierung **(70)** und eine den Axialdurchgang **(79)** vergrössemde Erweiterung **(72)** aufweisen kann, die von einem erhabenen Rand **(71)** begrenzt ist;
c) die erste Dichtung **(81)** eine dem Ventilteller **(7)** zugewandte Profilierung **(810)** besitzt, die mit der Profilierung **(70)** am Ventilteller **(7)** zusammenwirkt; und
d) die optionale Erweiterung **(72)** zur Aufnahme einer zweiten Dichtung **(82)** bestimmt ist, die den Stössel **(4)** umgibt.

## Claims

1. Water valve comprising an upper part to be inserted into a valve body comprising:
a) a head piece **(6)** with an axial through passage **(69);**
b) an external sleeve **(2)** which is rotatably mounted and axially fixed directly or indirectly on the head piece **(6);**
c) a plunger **(4)** movable between a zero stroke **(H₀)** and a maximum stroke **(Hₘₐₓ)** which:
ca) is arranged concentrically and axially movably in the head piece **(6)** and the external sleeve **(2)** and is directly guided in the axial through passage **(69)** of the head piece **(6);**
cb) is provided with a first seal **(81)** which is arranged on the end (**47,49**) of the plunger **(4)** oriented towards a valve seat in the valve body and serves to close off the valve; and
cc) is surrounded by a main seal **(89)** which is located in the head piece **(6);** and
d) a rotatable handle **(1)** for actuating the upper part, the external sleeve **(2)** on the one hand being directly connected to the handle **(1)** and on the other hand being directly connected to a drive element **(3),** and the drive element **(3)** having on the outside an external profile **(30)** and being arranged axially fixed to the plunger **(4);** whereas
e) the external sleeve **(2)** comprising a shaft **(24)** which is open in the direction of the first seal **(81)** and which on the inside has an internal profile **(27);**
f) the internal profile **(27)** of the external sleeve **(2)** having a radial positive connection with the external profile **(30)** of the drive element **(3)** and the drive element **(3)** guided in the external sleeve **(2)** being axially display-ceable;
g) a fixed feed thread **(68,59')** being present, which is located directly or indirectly on the head piece **(6), characterised in that**
h) the drive element **(3)** has a thread **(38,39);**
i) the thread (**38,39**) of the drive element **(3)** and the feed thread **(68,59')** are in engagement; and
j) when actuating the handle **(1),** the drive element **(3)** is radially arranged with play on the plunger **(4),** at least insofar as that beyond a defined minimum frictional resistance between the first seal **(81)** and the valve seat the plunger **(4)** is radially blocked, so that the plunger **(4)** no longer rotates with the drive element **(3).**

2. Valve according to Claim 1, **characterised in that**
a) the drive element **(3)** is of sleeve-shaped form with a shaft **(34)** open in the direction of the first seal **(81)** and on the other hand has fastening means (31,32) for connecting to the plunger **(4);** and
b) the thread **(38)** on the drive element **(3)** is formed on the inside as an internal thread **(38)** and the fixed feed thread **(68)** is located directly on the head piece **(6);** or
c) the thread **(39)** on the drive element **(3)** is formed on the outside as an external thread **(39)** and the fixed feed thread (59') is produced as an internal thread (59') which is directly located on the head piece **(6)** or on an intermediate sleeve (5') inserted into the head piece **(6).**

3. Valve according to at least one of Claims 1 and 2, **characterised in that** the main seal **(89)** is arranged with an internal spacing **(a)** in the head piece **(6),** set back at least to such an extent that, where the plunger **(4)** is not positioned between the zero stroke and the maximum stroke **(H₀,Hₘₐₓ),** the surface of the plunger **(4)** subjected to the flow medium extends to the main seal **(89).**

4. Valve according to at least one of Claims 1 to 3, **characterised in that**
a) in the opening of the head piece **(6)** oriented towards the first seal **(81),** a third seal **(83)** is inserted which surrounds an elongate central portion **(40)** of the projecting plunger **(4)** and effects a radial and axial seal between the head piece **(6)** and the plunger **(4);** and
b) the third seal **(83)** in the unloaded state has an overlap projecting over the plane terminating the head piece **(6)** which, with a zero stroke **(H₀)** and at the furthest possible inserted position of the plunger **(4),** is deformed into the plane by the pressed-in rear face of a valve head **(7)** which bears the first seal **(81),** so that dead space enclosed between the rear face of the valve head **(7)** and the terminal plane of the head piece **(6)** is avoided.

5. Valve according to at least one of Claims 1 to 4, **characterised in that**
a) the fastening means **(31,32)** for connecting the drive element **(3)** to the plunger **(4)** comprises a collar **(32)** attached to the shaft **(34)** with a through hole **(31)** arranged centrally therein; and
b) inserted in the through hole **(31)** is a first axial extension **(41)** of the plunger **(4),** which is preferably tapered in diameter, and to which a second axial extension **(42)** is attached which is axially fixed to the collar **(32),** for example by means of an external thread **(420)** or an annular groove **(421)** present on the second extension **(42),** a locking element **(92)** in the form of a second nut **(92)** or a locking ring **(92)** being fixed thereto.

6. Valve according to at least one of Claims 1 to 5, **characterised in that** the fastening means **(31,32)** for connecting the drive element **(3)** to the plunger **(4)** comprises a slip coupling, for example by means of a cup spring which, when exceeding a defined frictional resistance between the first seal **(81)** and the valve seat, is disengaged so that the plunger **(4)** remains radially blocked.

7. Valve according to at least one of Claims 1 to 6, **characterised in that** the plunger **(4)** at the end facing the handle **(1)** is terminated by an upper journal **(43)** which, with a zero stroke **(H₀)** and at the furthest possible inserted position of the plunger **(4),** comes to rest in a through hole **(21,116)** in the top surface **(22)** of the external sleeve **(2)** or the handle **(1),** preferably projects out of the through hole **(21,116)** and thus a zero stroke **(H₀)** which has been set may be perceived visually and by touch.

8. Valve according to at least one of Claims 1 to 7, **characterised in that**
a) the handle **(1)** is integrally connected to the external sleeve **(2)** or is releasably arranged fixedly in terms of rotation on the external sleeve **(2);**
b) the handle **(1)** is made up of a first half-shell-like grip part **(11)** and a second half-shell-like grip part **(12);** and
c) for fastening the two-part handle **(1)** to the external sleeve **(2)** the following are provided:
ca) an external profile **(20)** on the external sleeve **(2)** which is located at the end of the shaft **(24)** which is adjacent to the top surface **(22)** as well as a radial groove **(23)** present below the external profile **(20);**
cb) one respective centred axial through passage **(119,129)** on the first and second grip part **(11,12)** which is respectively bordered by an internal profile **(110,120);** whereas
cc) the first grip part **(11)** below the internal profile **(110)** having a circular latching member **(111)** in the form of an annular bead or individual latching lugs;
cd) the internal profile **(110)** of the first grip part **(11)** being in positive engagement with the external profile **(20)** on the external sleeve **(2);**
ce) the internal profile **(120)** of the second grip part **(12)** being able to be pushed over the external profile **(20)** of the external sleeve **(2)** in order to bring the second grip part **(12)** to the level of the radial groove **(23);** and
cf) between both grip parts **(11,12)** a second locking ring **(99)** being inserted into the radial groove **(23),** which has at its external periphery an overlap **(991)** which grips under the latching member **(111)** for axially securing the handle (1) on the external sleeve **(2).**

9. Valve according to at least one of Claims 1 to 8, **characterised in that**
a) the internal profile **(27)** on the external sleeve **(2)** as well as the external profile **(30)** on the drive element **(3)** are longitudinal teeth;
b) the longitudinal teeth on the external sleeve **(2)** are formed, for example, from star-shaped ribs oriented radially and centrally; and
c) the external sleeve **(2)** additionally has an external profile **(20),** insofar as the handle **(1)** and the external sleeve **(2)** are separate parts.

10. Valve according to at least one of Claims 1 to 9, **characterised in that** the main seal **(89)** consists of components arranged on top of one another in the unit, namely:
a) a fifth seal **(85),** a second disc **(94)** and a sixth seal **(86);** whereas
aa) the fifth seal **(85)** resting on an annular shoulder **(672)** of an inner connector **(67)** projecting concentrically through the head piece **(6),** through which an axial through passage **(69)** extends;
ab) a first locking ring **(98)** being inserted against the sixth seal **(86)** into an internal radial groove **(671)** in the inner connector **(67);** and
ac) a third disc **(95)** being able to be arranged between the sixth seal **(86)** and the first locking ring **(98);** or
b) a fifth seal **(85),** a second disc **(94)** and a sixth seal **(86);** whereas
ba) the fifth seal **(85)** resting on an annular shoulder **(672)** located in the head piece **(6);**
bb) the intermediate sleeve **(5')** inserted into the head piece **(6)** forming a direct retainer or, with the insertion of a first locking ring **(98'),** an indirect retainer against the sixth seal **(86);** and
bc) as a result of the intermediate sleeve **(5'),** a collar **(53')** being supported on an internal annular shoulder **(612)** in the head piece **(6)** respectively the first locking ring **(98')** being positioned on the internal annular shoulder **(612).**

11. Valve according to at least one of Claims 1 to 10, **characterised in that**
a) the external connector **(61,62,63)** of the head piece **(6)** is integrally made up of an upper connector **(61),** a flange **(62)** enlarged in external diameter and attached thereto and an intermediate connector **(63)** placed thereon;
b) the upper connector **(61)** having on the outside an external profile **(60),** for example a hexagon for positioning a spanner;
c) the flange **(62)** in the assembled state being intended for being positioned on the valve body; and
d) the intermediate connector (63) having an external thread (630) which serves for screwing the upper part into the valve body.

12. Valve according to at least one of Claims 1 to 11, **characterised in that**
a) the internal connector (67) has the external thread (68) as a feed thread (68) and is encompassed by the external connector (61,62,63) with a radial blind hole-shaped clearance (66) located therebetween, which provides space for the common shaft (34) of the drive element (3); and
b) for the axial fixing and rotatable mounting of the external sleeve (2) on the head piece (6):
ba) a retaining ring (5) in the form of a threaded ring with a lower edge is provided which is positioned on a collar (26) of the external sleeve (2), thickened in external diameter, an external thread (58) of the retaining ring (5) engaging in an internal thread (618) on the head piece (6); or
bb) a retaining ring (5) with a lower edge is provided which is positioned on a collar (26) of the external sleeve (2), thickened in external diameter, locking elements of the retaining ring (5) engaging in contours on the head piece (6); or
bc) locking elements (29) are located on the lower region of the external sleeve **(2)** which engage in the head piece **(6).**

13. Valve according to Claim 12, **characterised in that**
a) a cylindrical ring of individual elastic tongues (290) extends from the lower region of the external sleeve (2), the locking elements (29) in the form of wedge contours being arranged on the lowermost, outwardly facing tongues;
b) a radial groove (650) which is open towards the clearance (66) is present for engaging the locking elements (29) on the head piece (6).

14. Valve according to Claim 13, **characterised in that**
a) the lower region of the external sleeve (2) above the outwardly facing tongues **(290)** has a collar **(294)** above which an outwardly open annular groove **(293)** is located for receiving an eighth element **(88)** which serves to restrict the external sleeve **(2)** from inadvertent rotation, for example as a result of vibration;
b) in the assembled state the collar **(294)** is intended for positioning on an annular shoulder **(612),** which is located inside the upper connector **(61).**

15. Valve according to at least one of Claims 1 to 11, **characterised in that**
a) a cylindrical ring of individual elastic tongues **(290)** is located inside the lower region of the external sleeve **(2),** the locking elements **(29)** in the form of wedge contours being arranged on the lowermost, inwardly facing tongues;
b) an external radial groove **(57')** is present for engaging the locking elements **(29)** on the intermediate sleeve **(5').**

16. Valve according to Claim 15, **characterised in that**
a) the elastic tongues **(290)** extend from a central web **(291)** extending radially inside the shaft **(24),** at a distance from the internal wall of the shaft **(24);**
b) the external sleeve **(2)** is terminated at its lowest point by a lower edge **(295)** which in the assembled state rests on a bearing shoulder **(613)** which is located on the upper connector **(61)** of the head piece **(6);** and
c) above the bearing shoulder **(613)** a radial groove **(610)** is located for receiving an eighth element **(88)** which is encompassed by the lower region of the external sleeve **(2),** and serves for restricting the external sleeve **(2)** from inadvertent rotation, for example as a result of vibration.

17. Valve according to at least one of Claims 1 to 12, 15 and 16, **characterised in that** the upper connector **(61)** of the head piece **(6)** on the inside has an internal thread **(618)** for connecting to an external thread (58') present on the intermediate sleeve **(5')** or an external thread **(58)** provided on the retaining ring **(5).**

18. Valve according to at least one of Claims 1 to 11 and 17, **characterised in that** at least one locking element **(29)** radially inserted through openings **(260,261)** in the collar **(26)** of the external sleeve **(2)** is provided which engages in the intermediate sleeve **(5')** in an axially locking manner in a radial groove **(57').**

19. Valve according to at least one of Claims 1 to 18, **characterised in that**
a) the plunger **(4)** consists of chrome steel and is of round cross section over its elongate central portion **(40);**
b) the external diameters are respectively reduced from the central portion **(40)** via a first radial shoulder **(44)** towards the first extension **(41),** from here via an optional second radial shoulder **(45)** towards the second extension **(42)** and from here via a third radial shoulder **(46)** towards the upper journal **(43);**
c) the plunger **(4),** at the end oriented towards the first seal **(81)** and at the connection with the central portion **(40),** may have an undercut **(48)** which is followed by an intermediate segment **(47)** of, for example, non-rotationally symmetrical cross section with flattened portions **(470)** for receiving the valve head **(7),** to which a lower journal **(49)** for receiving the valve head **(7)** is attached; and
d) the lower journal **(49)** on the plunger **(4)** may have an external thread **(490)** for screwing on a first nut **(91),** whereby the valve head **(7)** bearing the first seal **(81)** is secured.

20. Valve according to at least one of Claims 1 to 19, **characterised in that** the valve head **(7)**
a) has an axial through passage **(79)** complementary to the cross section of the intermediate segment **(47)** of the plunger **(4),** the plunger **(4)** and the intermediate segment **(47),** for example, being able to be provided respectively with flattened portions **(470,790);**
b) on the side facing the first seal **(81)** may have a profile **(70)** and a widening **(72)** enlarging the axial through passage **(79),** which is defined by a raised edge **(71);**
c) the first seal **(81)** has a profile **(810)** facing the valve head **(7)** which cooperates with the profile **(70)** on the valve head **(7);** and
d) the optional widening **(72)** is intended for receiving a second seal **(82),** which surrounds the plunger **(4).**

## Revendications

1. Valve à eau comprenant une partie supérieure à insérer dans un corps de valve, comprenant:
a) une partie de tête **(6)** avec un passage axial **(69),**
b) une douille extérieure **(2)** qui est montée directement ou indirectement de manière rotative sur la partie de tête **(6)** et qui est fixée axialement;
c) un poussoir **(4)** déplaçable entre une course nulle **(H₀)** et une course maximale **(Hₘₐₓ),** qui:
ca) est disposé de manière déplaçable axialement et concentriquement dans la partie de tête **(6)** et la douille extérieure **(2)** et qui est guidé directement dans le passage axial **(69)** de la partie de tête **(6);**
cb) est muni d'un premier joint d'étanchéité **(81)** qui est disposé sur l'extrémité **(47,49)** du poussoir **(4)** orientée sur un siège de valve dans le corps de valve, et qui sert à bloquer la valve; et
cc) qui est entouré par un joint d'étanchéité principal **(89)** qui repose dans la partie de tête **(6);** et
d) une poignée rotative **(1)** pour l'actionnement de la partie supérieure, la douille extérieure **(2)** étant connectée d'une part directement à la poignée **(1)** et d'autre part directement à un élément d'entraînement **(3),** et l'élément d'entraînement **(3)** présentant à l'extérieur un profilage externe **(30)** et étant disposé fixement axialement sur le poussoir **(4);** tandis que
e) la douille extérieure **(2)** présentant une tige **(24)** ouverte dans la direction du premier joint d'étanchéité **(81),** laquelle a un profilage interne **(27)** à l'intérieur;
f) le profilage interne **(27)** de la douille extérieure **(2)** présentant un engagement par coopération de forme radial avec le profilage externe **(30)** de l'élément d'entraînement **(3)** et l'élément d'entraînement **(3)** guidé dans la douille extérieure **(2)** étant déplaçable axialement;
g) un filetage de poussée fixe **(68,59')** étant prévu, lequel se trouve directement ou indirectement sur la partie de tête **(6), caractérisée en ce que**
h) l'élément d'entraînement **(3)** a un filetage **(38,39);**
i) le filetage **(38,39)** de l'élément d'entraînement **(3)** et le filetage de poussée **(68,59')** sont en prise; et
j) lors de l'actionnement de la poignée **(1),** l'élément d'entraînement **(3)** sur le poussoir **(4)** est disposé au moins lâchement radialement dans une mesure telle qu'à partir d'une résistance de frottement minimale définie entre le premier joint d'étanchéité **(81)** et le siège de valve, le poussoir **(4)** soit bloqué radialement, de sorte que le poussoir **(4)** ne tourne plus avec l'élément d'entraînement **(3).**

2. Valve selon la revendication 1, **caractérisée en ce que**
a) l'élément d'entraînement **(3)** a une configuration en forme de douille avec une tige **(34)** ouverte dans la direction du premier joint d'étanchéité **(81)** et d'autre part possède des moyens de fixation **(31,32)** pour la connexion au poussoir **(4);** et
b) le filetage **(38)** sur l'élément d'entraînement **(3)** est configuré à l'intérieur sous forme de filetage interne **(38)** et le filetage de poussée fixe **(68)** se trouve directement sur la partie de tête **(6);** ou
c) le filetage **(39)** sur l'élément d'entraînement **(3)** est configuré à l'extérieur sous forme de filetage externe **(39)** et le filetage de poussée fixe (**59**') est réalisé sous forme de filetage interne (**59**') qui se trouve directement sur la partie de tête **(6)** ou sur une douille intermédiaire (**5**') insérée dans la partie de tête **(6).**

3. Valve selon au moins l'une quelconque des revendications 1 et 2, **caractérisée en ce que** le joint d'étanchéité principal **(89)** est disposé avec une distance interne **(a)** dans la partie de tête **(6)** en retrait d'au moins une mesure telle que lorsque le poussoir **(4)** ne se situe pas entre la course nulle et la course maximale **(H₀, Hₘₐₓ),** la surface du poussoir **(4)** exposée au fluide d'écoulement parvienne contre le joint d'étanchéité principal **(89).**

4. Valve selon l'une quelconque des revendications 1 à 3, **caractérisée en ce que**
a) dans l'embouchure de la partie de tête **(6)** orientée vers le premier joint d'étanchéité **(81),** est inséré un troisième joint d'étanchéité **(83),** qui entoure une portion centrale allongée **(40)** du poussoir saillant **(4)** et qui assure une étanchéité radiale et axiale entre la partie de tête **(6)** et le poussoir **(4);** et
b) le troisième joint d'étanchéité **(83)** possède, dans l'état non sollicité, une avancée dépassant au-delà du plan fermant la partie de tête **(6),** laquelle avancée, en cas de course nulle **(H₀)** avec la position du poussoir **(4)** la plus rentrée possible se déforme dans le plan sous l'effet du côté arrière pressé d'un plateau de valve **(7)** portant le premier joint d'étanchéité **(81)** de sorte qu'entre le côté arrière du plateau de valve **(7)** et le plan fermant la partie de tête **(6),** on évite d'envelopper un espace mort.

5. Valve selon au moins l'une quelconque des revendications 1 à 4, **caractérisée en ce que**
a) le moyen de fixation **(31,32)** comprend, pour la connexion de l'élément d'entraînement (3) au poussoir **(4),** une collerette **(32)** se raccordant à la tige **(34),** avec un trou de passage **(31)** disposé centralement dans celle-ci; et
b) une première saillie axiale **(41)** du poussoir **(4),** de préférence de diamètre réduit, s'enfonce dans le trou de passage **(31),** à laquelle se raccorde une deuxième saillie axiale **(42),** qui est fixée axialement sur la collerette **(32),** par exemple au moyen d'un filetage externe **(420)** ou d'une rainure annulaire **(421)** prévu(e) sur la deuxième saillie **(42),** sur lequel ou laquelle est fixé un élément de fixation **(92)** en forme de deuxième écrou **(92)** ou de bague de fixation **(92).**

6. Valve selon au moins l'une quelconque des revendications 1 à 5, **caractérisée en ce que** le moyen de fixation **(31,32)** comprend, pour la connexion de l'élément d'entraînement **(3)** au poussoir **(4),** un accouplement glissant par exemple au moyen d'un ressort Belleville, qui, en cas de dépassement d'une résistance de frottement définie entre le premier joint d'étanchéité **(81)** et le siège de valve se désaccouple, de sorte que le poussoir **(4)** soit immobilisé par blocage radialement.

7. Valve selon l'une quelconque des revendications 1 à 6, **caractérisée en ce que** le poussoir **(4)** se termine à l'extrémité tournée vers la poignée **(1)** par un tourillon supérieur **(43),** qui, en cas de course nulle **(H₀)** avec la position du poussoir **(4)** la plus rentrée possible, vient se placer dans un trou de passage (21,116) dans la surface de recouvrement **(22)** de la douille extérieure **(2)** ou dans la poignée **(1),** de préférence fait saillie hors du trou de passage **(21,116),** et de ce fait on peut percevoir une course nulle ajustée **(H₀)** optiquement et par balayage.

8. Valve selon l'une quelconque des revendications 1 à 7, **caractérisée en ce que**
a) la poignée **(1)** est connectée d'une seule pièce à la douille extérieure **(2)** ou est disposée de manière détachable et solidaire en rotation sur la douille extérieure **(2);**
b) la poignée **(1)** se compose d'une première partie de poignée **(11)** de type demi-coque et d'une deuxième partie de poignée **(12)** de type demi-coque; et
c) l'on prévoit, pour fixer la poignée **(1)** en deux parties, sur la douille extérieure **(2):**
ca) un profilage externe **(20)** sur la douille extérieure **(2),** lequel se trouve à l'extrémité de la tige **(24),** qui est adjacente à la surface de recouvrement **(22),** ainsi qu'une rainure radiale **(23)** prévue en dessous du profilage externe **(20);**
cb) sur la première et la deuxième partie de poignée **(11,12),** un passage axial central respectif **(119,129),** qui est entouré à chaque fois par un profilage interne **(110,120);** tandis que
cc) la première partie de poignée **(11)** présentant en bas, sur le profilage interne **(110),** un organe d'encliquetage circulaire **(111)** en forme de bourrelet annulaire ou de nez d'encliquetage individuels;
cd) le profilage interne **(110)** de la première partie de poignée **(11)** est en engagement par coopération de forme avec le profilage externe **(20)** sur la douille extérieure **(2);**
ce) le profilage interne **(120)** de la deuxième partie de poignée **(12)** peut être poussé sur le profilage externe **(20)** de la douille extérieure **(2),** pour amener la deuxième partie de poignée **(12)** au niveau de la rainure radiale **(23);** et
cf) entre les deux parties de poignée **(11,12)** est inséré, dans la rainure radiale **(23),** une deuxième bague de fixation **(99)** qui présente sur sa périphérie externe un porte-à-faux **(991)** qui est saisi par le dessous par l'organe d'encliquetage **(111)** pour la fixation axiale de la poignée **(1)** sur la douille extérieure **(2).**

9. Valve selon au moins l'une quelconque des revendications 1 à 8, **caractérisée en ce que**
a) le profilage interne **(27)** sur la douille extérieure **(2)** ainsi que le profilage externe **(30)** sur l'élément d'entraînement **(3)** sont des dentures longitudinales;
b) la denture longitudinale sur la douille extérieure **(2)** est formée par exemple par des nervures en forme d'étoile, radiales, orientées centralement; et
c) la douille extérieure **(2)** possède en outre un profilage externe **(20)** dans la mesure où la poignée **(1)** et la douille extérieure **(2)** sont des parties séparées.

10. Valve selon au moins l'une quelconque des revendications 1 à 9, **caractérisée en ce que** le joint d'étanchéité principal **(89)** se compose d'un parmi des composants disposés en paquet, à savoir:
a) un cinquième joint d'étanchéité **(85),** une deuxième rondelle **(94)** et un sixième joint d'étanchéité **(86);** tandis que
aa) le cinquième joint d'étanchéité **(85)** reposant sur un épaulement annulaire **(672)** d'un raccord interne **(67)** traversant concentriquement la partie de tête **(6),** à travers lequel s'étend un passage axial **(69);**
ab) une première bague de fixation **(98)** étant insérée contre le sixième joint d'étanchéité **(86),** dans une rainure radiale interne **(671)** dans le raccord interne **(67);** et
ac) une troisième rondelle **(95)** pouvant être disposée entre le sixième joint d'étanchéité **(86)** et la première bague de fixation **(98);** ou
b) un cinquième joint d'étanchéité **(85),** une deuxième rondelle **(94)** et un sixième joint d'étanchéité **(86);** tandis que
ba) le cinquième joint d'étanchéité **(85)** reposant sur un épaulement annulaire **(672)** situé dans la partie de tête **(6);**
bb) la douille intermédiaire **(5')** insérée dans la partie de tête **(6)** contre le sixième joint d'étanchéité **(86)** formant un serre-flan direct ou indirect avec interposition d'une première bague de fixation **(98');** et
bc) un renflement **(53')** s'appuyant depuis la douille intermédiaire **(5')** sur un épaulement annulaire interne **(612)** dans la partie de tête **(6)** ou la première bague de fixation **(98')** étant placée sur l'épaulement annulaire interne **(612).**

11. Valve selon l'une quelconque des revendications 1 à 10, **caractérisée en ce que**
a) le raccord externe **(61,62,63)** de la partie de tête **(6)** se compose, en une seule pièce, d'un raccord supérieur **(61),** d'une bride **(62)** s'y raccordant, de diamètre extérieur agrandi et d'un raccord intermédiaire **(63)** s'appliquant contre cette dernière;
b) le raccord supérieur **(61)** possède à l'extérieur un profilage externe **(60),** par exemple une forme à six pans pour l'application d'une clé à écrous;
c) la bride **(62)** est prévue dans l'état monté pour se placer sur le corps de valve; et
d) le raccord intermédiaire **(63)** présente un filetage externe **(630)** qui sert à visser la partie supérieure dans le corps de valve.

12. Valve selon au moins l'une quelconque des revendications 1 à 11, **caractérisée en ce que**
a) le raccord interne **(67)** possède, en tant que filetage de poussée **(68),** le filetage externe **(68)** et est entouré par le raccord externe **(61,62,63)** avec un espace libre **(66)** en forme de trou borgne radial situé entre eux, lequel fournit de la place pour la tige **(34)** proportionnelle de l'élément d'entraînement **(3);** et
b) pour la fixation axiale et le montage rotatif de la douille extérieure **(2)** sur la partie de tête **(6):**
ba) une bague de fixation **(5)** est prévue en forme de bague filetée avec une arête inférieure, qui repose sur un renflement **(26)** de diamètre extérieur épaissi de la douille extérieure **(2),** un filetage externe **(58)** de la bague de fixation **(5)** venant en prise dans un filetage interne **(618)** sur la partie de tête **(6);** ou
bb) une bague de fixation **(5)** est prévue avec une arête inférieure qui repose sur un renflement **(26)** de diamètre extérieur épaissi de la douille extérieure **(2),** des éléments de blocage de la bague de fixation **(5)** venant en prise dans des contours sur la partie de tête **(6);** ou
bc) des éléments de blocage **(29)** se trouvent sur la région inférieure de la douille extérieure **(2),** et viennent en prise dans la partie de tête **(6).**

13. Valve selon la revendication 12, **caractérisée en ce**
a) **qu'**une couronne cylindrique de langues élastiques individuelles **(290)** s'étend depuis la région inférieure de la douille extérieure **(2),** les éléments de blocage **(29)** tournés vers l'extérieur en forme de contours de clavette étant disposés tout en bas sur ces langues;
b) On prévoit pour l'engagement des éléments de blocage **(29)** sur la partie de tête **(6)** une rainure radiale **(650)** ouverte vers l'espace libre **(66).**

14. Valve selon la revendication 13, **caractérisée en ce que**
a) la région inférieure de la douille extérieure **(2)** possède, au-dessus des langues s'écartant **(290)** un renflement **(294)** au-dessus duquel une rainure annulaire ouverte vers l'extérieur **(293)** est disposée pour recevoir un huitième élément **(88)** qui sert à bloquer la douille extérieure **(2)** contre toute rotation accidentelle, par exemple due à des vibrations;
b) dans l'état monté, le renflement **(294)** sert au positionnement sur un épaulement annulaire **(612),** qui se trouve à l'intérieur du raccord supérieur **(61).**

15. Valve selon au moins l'une quelconque des revendications 1 à 11, **caractérisée en ce que**
a) une couronne cylindrique de langues élastiques individuelles **(290)** se trouve à l'intérieur de la région inférieure de la douille extérieure **(2),** les éléments de blocage **(29)** étant disposés en forme de contours de clavettes le plus en bas possible, et tournés vers l'intérieur, sur ces langues;
b) pour l'engagement des éléments de blocage **(29)** sur la douille intermédiaire **(5'),** on utilise une rainure radiale externe **(57').**

16. Valve selon la revendication 15, **caractérisée en ce que**
a) les langues élastiques **(290)** s'étendent vers la paroi interne de la tige **(24)** à distance d'une nervure centrale **(291)** s'étendant radialement à l'intérieur de la tige **(24);**
b) la douille extérieure **(2)** se termine tout en bas par une arête inférieure **(295)** qui repose, dans l'état monté, sur un épaulement d'appui **(613)** qui se trouve sur le raccord supérieur **(61)** de la partie de tête **(6);** et
c) au-dessus de l'épaulement d'appui **(613)** se trouve une rainure radiale **(610)** pour recevoir un huitième élément **(88)** qui est entouré par la région inférieure de la douille extérieure **(2)** et qui sert à bloquer la douille extérieure **(2)** contre toute rotation accidentelle, par exemple due à des vibrations.

17. Valve selon au moins l'une quelconque des revendications 1 à 12, 15 et 16, **caractérisée en ce que** le raccord supérieur **(61)** de la partie de tête **(6)** possède à l'intérieur un filetage interne **(618)** pour la connexion à un filetage externe **(58')** prévu sur la douille intermédiaire **(5')** ou à un filetage externe **(58)** prévu sur la bague de fixation **(5).**

18. Valve selon au moins l'une quelconque des revendications 1 à 11 et 17, **caractérisée en ce que** l'on prévoit au moins un élément de blocage **(29)** introduit radialement à travers des ouvertures **(260,261)** dans le renflement **(26)** de la douille extérieure **(2),** qui vient en prise dans la douille intermédiaire **(5')** de manière fixe axialement dans une rainure radiale **(57').**

19. Valve selon au moins l'une quelconque des revendications 1 à 18, **caractérisée en ce que**
a) le poussoir **(4)** se compose d'acier chromé et a une section transversale ronde sur sa portion centrale allongée **(40);**
b) depuis la portion centrale **(40)** par le biais d'un premier épaulement radial **(44)** jusqu'à la première saillie (41), de là par le biais d'un deuxième épaulement radial optionnel **(45)** jusqu'à la deuxième saillie **(42)** et de là par le biais d'un troisième épaulement radial **(46)** jusqu'au tourillon supérieur **(43),** les diamètres extérieurs sont à chaque fois réduits;
c) le poussoir **(4)** peut avoir à l'extrémité orientée vers le premier joint d'étanchéité **(81),** à la suite de la portion centrale **(40),** une contre-dépouille **(48)** qui est suivie par un segment intermédiaire **(47),** de section transversale par exemple n'ayant pas une section transversale à symétrie de révolution, avec des méplats **(470),** pour recevoir le plateau de valve **(7),** auquel se raccorde un tourillon inférieur **(49)** pour recevoir le plateau de valve **(7);** et
d) le tourillon inférieur **(49)** sur le poussoir **(4)** peut avoir un filetage externe **(490)** pour visser un premier écrou **(91),** permettant de fixer le plateau de valve **(7)** portant le premier joint d'étanchéité **(81).**

20. Valve selon au moins l'une quelconque des revendications 1 à 19, **caractérisée en ce que** le plateau de valve **(7)**
a) présente un passage axial **(79)** complémentaire de la section transversale du segment intermédiaire **(47)** du poussoir **(4),** le poussoir **(4)** et le segment intermédiaire **(47)** pouvant par exemple être pourvus chacun de méplats **(470,790);**
b) peut présenter, du côté tourné vers le premier joint d'étanchéité **(81),** un profilage **(70)** et un élargissement **(72)** augmentant le passage axial **(79)** qui est limité par un bord rehaussé **(71);**
c) le premier joint d'étanchéité **(81)** possède un profilage **(810)** tourné vers le plateau de valve **(7),** qui coopère avec le profilage **(70)** sur le plateau de valve **(7);** et
d) l'élargissement optionnel **(72)** est prévu pour recevoir un deuxième joint d'étanchéité **(82)** qui entoure le poussoir **(4).**
